# EUROPEAN PATENT APPLICATION

(11) **EP 2 868 704 A1**
(43) Date of publication of application: **06.05.2015**
(21) Application number: 13190658.8
(22) Date of filing: 29.10.2013
(51) Int. Cl.: C09B 35/031, C09B 35/26, C09D 11/00, D21H 21/28

(54) **Metal free acid dyes, process for the production thereof and their use**

(71) Applicant: DyStar Colours Distribution GmbH, 65479 Raunheim (DE)
(72) Inventor: Barbieru, Roxana, Singapore 117468 (SG); Vajiravelu, Sivamurugan, Singapore 120515 (SG); Loh, Wei, Tian, Singapore 768434 (SG)

(57) **Abstract**

Dyes of formula (1) 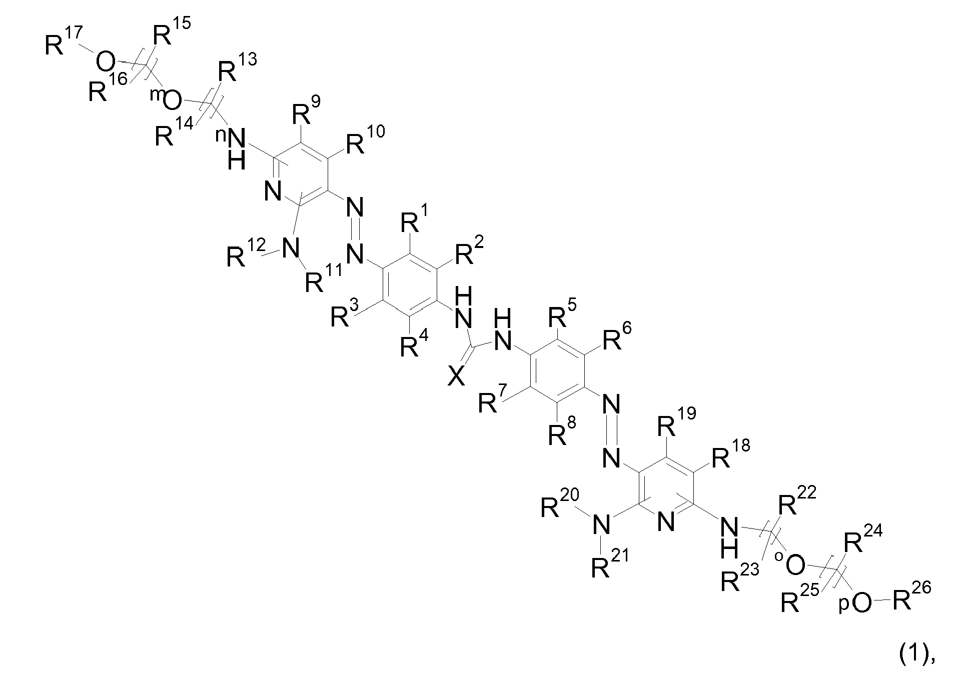 process for the production and use thereof.

## Description

The present invention relates to the technical field of dyestuffs for dyeing and printing of hydroxyl- and/or carboxamido-containing materials.

Acid dyes containing pyridine derivatives as couplers are known from the prior art and can be used as colorants in different applications, see for example US 3,959,250 A1, US 5,468,848 and WO 2007/045825.

However, in the context of the dyeing and printing of hydroxyl- and/or carboxamido-containing material the known dyes have a number of technical disadvantages, which require improvement.

Surprisingly, it has now been found that the dyes of formula (1) as described below show highly advantageous properties over the known dyes. These include high tinctorial strength with high brilliancy as well as high fastness properties such as wash, contact and light fastness on the materials mentioned above, on blends containing them as well as on microfibres. Most importantly, dyes of formula (1) are metal free and provide dyeings that are levelled.

The present invention is directed to dyes of formula (1) and mixtures thereof 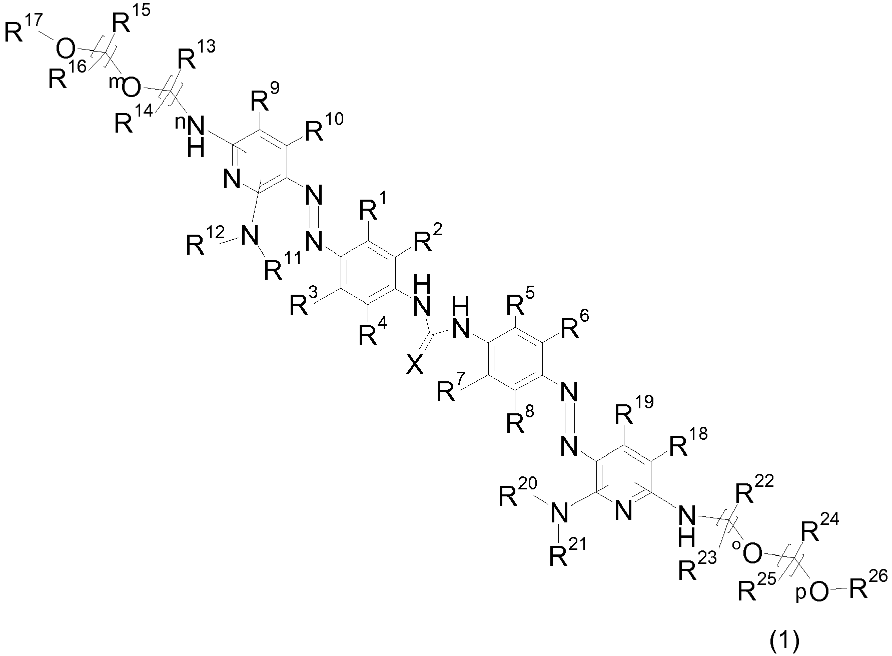 wherein
X is O, S or NH,
R¹, R², R³, R⁴, R⁵, R⁶, R⁷ and R⁸ independent of each other is hydrogen, alkyl, alkoxy, halogen, trifluoromethyl or SO₃M, whereby at least two of them are SO₃M,
R⁹ and R¹⁸ independent of each other is cyano, carbamoyl, substituted carbamoyl, alkoxycarbonyl, trifluoromethyl, carbonyltrifluoromethyl or halogen,
R¹⁰ and R¹⁹ independent of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio or
   is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R¹¹, R¹², R²⁰ and R²¹ independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocyclo-alkylalkyl
   or
   alkyl interrupted by one or more heteroatoms selected from the group consisting of oxygen and sulfur
   or
   alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
   or
   alkyl interrupted by one or more heteroatoms selected from the group consisting of oxygen and sulfur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
R¹³, R¹⁴, R¹⁵, R¹⁶, R²², R²³, R²⁴ and R²⁵ independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, hetero-cycloalkylalkyl
   or
   alkyl interrupted by one or more heteroatoms selected from the group consisting of oxygen and sulfur
   or
   alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
   or
   alkyl interrupted by one or more heteroatoms selected from the group consisting of oxygen and sulfur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
R¹⁷ and R²⁶ independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
   or
   alkyl interrupted by one or more heteroatoms selected from the group consisting of oxygen and sulfur
   or
   alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
   or
   alkyl interrupted by one or more heteroatoms selected from the group consisting of oxygen and sulfur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
M is hydrogen, an alkali metal, ammonium, one equivalent of an alkali earth metal or a monovalent organic cation,
m, n, o and p, independent of each other is an integer 1, 2, 3 or 4,
when n is 2, 3 or 4, R¹³ contained in the 2, 3 or 4 units can be identical or different from unit to unit, and same applies to R¹⁴ independently from R¹³,
   when m is 2, 3 or 4, R¹⁵ contained in the 2, 3 or 4 units can be identical or different from unit to unit, and same applies to R¹⁶ independently from R¹⁵,
   when o is 2, 3 or 4, R²² contained in the 2, 3 or 4 units can be identical or different from unit to unit, and same applies to R²³ independently from R²²,
   and when p is 2, 3 or 4, R²⁴ contained in the 2, 3 or 4 units can be identical or different from unit to unit, and same applies to R²⁵ independently from R²⁴
   and
   the dyes of formula (1) have two to six sulfonic acid groups.

This invention is directed to all tautomeric and geometric isomers of the dyes of formula (1) as well as to mixtures thereof.

Alkyl groups appearing in this invention may be straight-chain or branched and are (C₁-C₁₂)-alkyl groups, preferably (C₁-C₈)-alkyl groups, for example n-butyl, isobutyl, n-pentyl, isopentyl, n-hexyl, 2-ethylhexyl, sec-butyl, tert-butyl and methylbutyl.

The same applies to alkoxy groups which accordingly are preferably (C₁-C₈)-alkoxy, for example methoxy and ethoxy, to thioalkoxy groups, which are preferably (C₁-C₈)-thioalkoxy, for example -SCH₃ or -SC₂H₅.

Cycloalkyl groups are preferably (C₃-C₈)-cycloalkyl and especially preferably cyclopentyl and cyclohexyl. The term cyloalkyl comprises for the purpose of the present invention substituted cycloalkyl groups and unsatured cycloalkyl groups as well. A preferred group of this type is cyclopentenyl. Preferred substituents are alkyl, hydroxyalkyl, halogen, hydroxyl, alkoxy, acyl, cyano, nitro, amino, monoalkylamino, dialkylamino, mono(hydroxyalkyl)amino, bis (hydroxyalkyl)amino, monoalkyl-mono-(hydroxyalkyl)amino, carbamoyl, sulfamoyl, acylamino, ureido, aminosulfonylamino, alkoxycarbonyl and acyloxy.

Alkenyl groups may be straight-chain or branched and are preferably (C₂-C₆)-groups for example vinyl and allyl. The term alkenyl comprises for the purpose of the present invention alkynyl groups as well, for example ethynyl and propargyl.

Aryl groups appearing in this invention are preferably phenyl or naphthyl. The terms phenyl and naphthyl comprise unsubstituted as well as substituted phenyl and naphthyl. Preferred substituents are alkyl, cycloalkyl, heterocycloalkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono-(hydroxyalkyl)amino, carbamoyl, sulfamoyl, acylamino, ureido, aminosulfonylamino, alkoxycarbonyl and acyloxy.

Heteroaryl groups appearing in this invention are preferably pyridine, pyrimidine, pyridazine, pyrazine, pyrrole, imidazole, pyrazole, 1,2,4-thiadiazole, 1,2,4-triazole, tetrazole, thiophene, thiazole, isothiazole, benzothiazole, benzoisothiazole, 1,3,4-thiadiazole, furane, oxazole, benzoxazole or isoxazole. The terms heteroayl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis-(hydroxyalkyl)amino, monoalkyl-mono(hydroxyalkyl)amino, carbamoyl, sulfamoyl, acylamino, ureido, aminosulfonylamino, alkoxycarbonyl and acyloxy.

Heterocycloalkyl groups are preferably pyrrolidine, piperidine, morpholine, tetrahydrofuran or piperazine. The term heterocycloalkyl comprises the above groups in unsubstituted as well as in substituted form. Preferred substituents are alkyl, hydroxylalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, aminocarbonyl-amino, aminosulfonylamino, alkoxycarbonyl and acyloxy.

Halogen is preferably chlorine, bromine or fluorine.

M is preferably hydrogen, lithium, sodium, potassium or mono-, di-, tri- or tetra-(C₁-C₄)-alkylammonium.

Particular preferred embodiments of the present invention are dyes of formula (1 a) or mixtures thereof 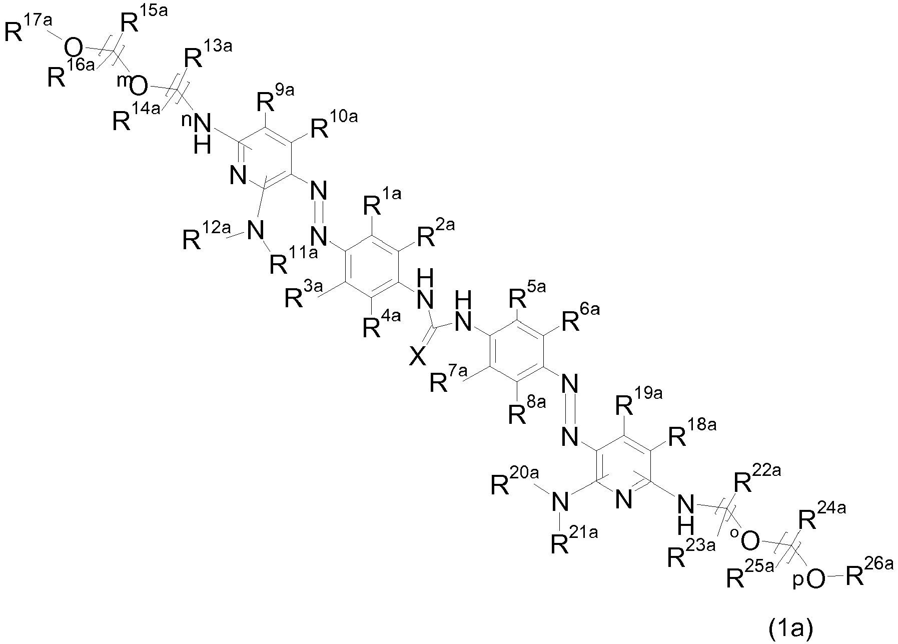 wherein
X is O,S or NH,
R^{1a}, R^{2a}, R^{3a}, R^{4a} , R^{5a}, R^{6a}, R^{7a} and R^{8a} independent of each other is hydrogen, alkyl, alkoxy, halogen, trifluoromethyl or SO₃M, whereby at least two of them are SO₃M,
R^{9a} and R^{18a} independent of each other is cyano, carbamoyl or alkoxycarbonyl,
R^{10a} and R^{19a} independent of each other is unsubstituted, linear or branched (C₁-C₄)-alkyl, unsubstiuted (C₅-C₇)-cycloalkyl or substituted (C₅-C₇)-cycloalkyl with one or more substituents, preferably selected from the group consisting of methyl, ethyl, isobutyl, sec-butyl, tert-butyl and methylbutyl,
R^{11a}, R^{12a}, R^{20a} and R^{21a} independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
   or
   alkyl interrupted by one or more heteroatoms selected from the group consisting of oxygen and sulfur
   or
   alkyl substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M
   or
   alkyl interrupted by one or more heteroatoms selected from the group consisting of oxygen and sulfur and substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M,
R^{13a}, R^{14a}, R^{15a}, R^{16a}, R^{22a}, R^{23a}, R^{24a} and R^{25a} independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
   or
   alkyl interrupted by one or more heteroatoms selected from the group consisting of oxygen and sulfur
   or
   alkyl substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M
   or
   alkyl interrupted by one or more heteroatoms selected from the group consisting of oxygen and sulfur and substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M,
R^{17a} and R^{26a}, independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl or heterocycloalkylalkyl
   or
   alkyl interrupted by one or more heteroatoms selected from the group consisting of oxygen and sulfur
   or
   alkyl substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M
   or
   alkyl interrupted by one or more heteroatoms selected from the group consisting of oxygen and sulfur and substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M,
m, n, o and p independent of each other is an integer of 1, 2, 3 or 4,
when n is 2, 3 or 4, R^{13a} contained in the 2, 3 or 4 units can be identical or different from unit to unit, and same applies to R^{14a} independently from R^{13a},
   when m is 2, 3 or 4, R^{15a} contained in the 2, 3 or 4 units can be identical or different from unit to unit, and same applies to R^{16a} independently from R^{15a},
   when o is 2, 3 or 4, R^{22a} contained in the 2, 3 or 4 units can be identical or different from unit to unit, and same applies to R^{23a} independently from R^{22a},
   and when p is 2, 3 or 4, R^{24a} contained in the 2, 3 or 4 units can be identical or different from unit to unit, and same applies to R^{25a} independently from R^{24a}
   and
   M is hydrogen, an alkali metal, ammonium, one equivalent of an alkali earth metal or a monovalent organic cation.

Particularly preferred embodiments of the present invention are dyes of the formula (1 aa) and mixtures thereof: 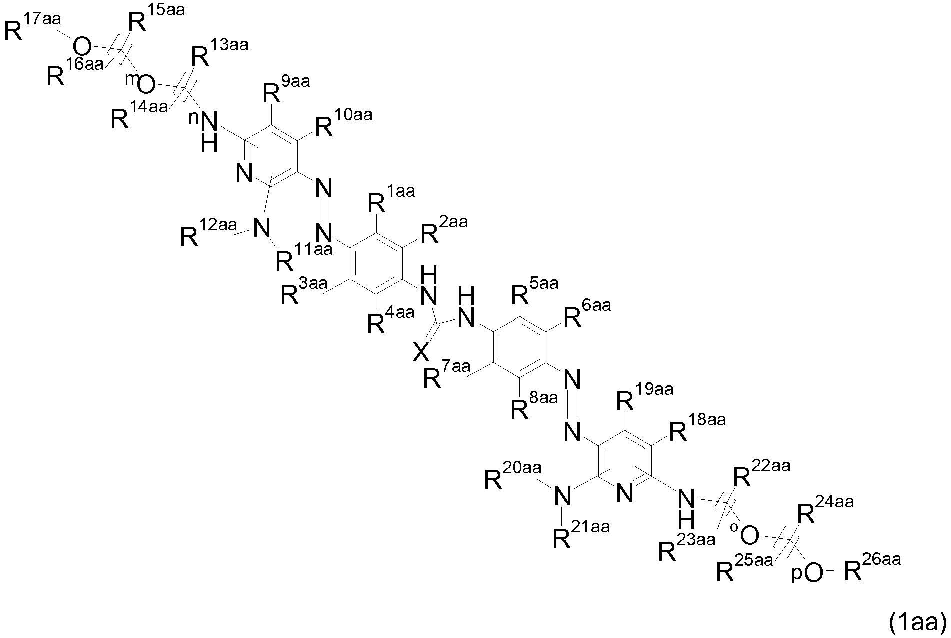 wherein
X is O,
R^{1aa}, R^{2aa}, R^{3aa}, R^{4aa}, R^{5aa}, R^{6aa}, R^{7aa} and R^{8aa} independent of each other is SO₃M, hydrogen, alkyl or alkoxy, whereby at least two of them are SO₃M,
R^{9aa} and R^{18aa} independent of each other is cyano or carbamoyl,
R^{10aa} and R^{19aa} is methyl,
m, n, o and p independent of each other is an integer of 2, 3 or 4,
R^{11aa}, R^{13aa}, R^{14aa}, R^{15aa}, R^{16aa}, R^{17aa}, R^{20aa} R^{22aa}, R^{23aa}, R^{24aa}, R^{25aa} and R^{26aa} is hydrogen,
R^{12aa} and R^{21aa} independent of each other is hydrogen, methyl, ethyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentan-2-yl, 2-ethylhexyl, 2,2-dimethylpropyl, phenyl, benzyl, 2-methoxyethyl, 3-methoxypropyl, 2-hydroxyethyl, 2-(methylthio)ethyl, 2-fluoroethyl, 2-chloroethyl, 3-chloropropyl, tetrahydrofurfuryl, 2-furan-2-yl-ethyl, 6-hydroxy-1-[2-(2-hydroxyethylsulfanyl)-ethyl], 2-(2-tertbutylsulfanylethanesulfonyl)-ethyl, 2-(ethylsulfonyl)ethanol, 2-hydroxyethoxypropyl, 2-hydroxyethoxyethyl, 2-(ethylsulfonyl) ethanol, 3-(2-phenoxy-ethoxy)-propyl, 3-isopropoxy-propyl, 3-ethoxy-propyl or 3-ethoxybutyl
   and
   M is hydrogen, sodium, potassium, lithium or ammonium.

Examples of preferred dyes of the formula (1aa) are the compounds of the formulae (1aa¹ to 1aa⁷⁵⁶):

| Structure | R^{1aa} | R^{3aa} | R^{4aa} | R^{6aa} | R^{7aa} | R^{8aa} | R^{8aa}/ R^{18aa} | R^{12aa}/ R^{21aa} | m | n | o | p |
|---|---|---|---|---|---|---|---|---|---|---|---|---|
| 1aa¹ | H | SO₃H | H | H | H | SO₃H | CN | H | 2 | 2 | 2 | 2 |
| 1aa² | H | H | SO₃H | H | SO₃H | H | | | | | | |
| 1aa³ | H | SO₃H | H | H | SO₃H | H | | | | | | |
| 1aa⁴ | H | SO₃H | H | H | H | SO₃H | CN | Methyl | 2 | 2 | 2 | 2 |
| 1aa⁵ | H | H | SO₃H | H | SO₃H | H | | | | | | |
| 1aa⁶ | H | SO₃H | H | H | SO₃H | H | | | | | | |
| 1aa⁷ | H | SO₃H | H | H | H | SO₃H | CN | Ethyl | 2 | 2 | 2 | 2 |
| 1aa⁸ | H | H | SO₃H | H | SO₃H | H | | | | | | |
| 1aa⁹ | H | SO₃H | H | H | SO₃H | H | | | | | | |
| 1aa¹⁰ | H | SO₃H | H | H | H | SO₃H | CN | Propyl | 2 | 2 | 2 | 2 |
| 1aa¹¹ | H | H | SO₃H | H | SO₃H | H | | | | | | |
| 1aa¹² | H | SO₃H | H | H | SO₃H | H | | | | | | |
| 1aa¹³ | H | SO₃H | H | H | H | SO₃H | CN | Butyl | 2 | 2 | 2 | 2 |
| 1aa¹⁴ | H | H | SO₃H | H | SO₃H | H | | | | | | |
| 1aa¹⁵ | H | SO₃H | H | H | SO₃H | H | | | | | | |
| 1aa¹⁶ | H | SO₃H | H | H | H | SO₃H | CN | Pentyl | 2 | 2 | 2 | 2 |
| 1aa¹⁷ | H | H | SO₃H | H | SO₃H | H | | | | | | |
| 1aa¹⁸ | H | SO₃H | H | H | SO₃H | H | | | | | | |
| 1aa¹⁹ | H | SO₃H | H | H | H | SO₃H | CN | Hexyl | 2 | 2 | 2 | 2 |
| 1aa²⁰ | H | H | SO₃H | H | SO₃H | H | | | | | | |
| 1aa²¹ | H | SO₃H | H | H | SO₃H | H | | | | | | |
| 1aa²² | H | SO₃H | H | H | H | SO₃H | CN | Cyclobutyl | 2 | 2 | 2 | 2 |
| 1aa²³ | H | H | SO₃H | H | SO₃H | H | | | | | | |
| 1aa²⁴ | H | SO₃H | H | H | SO₃H | H | | | | | | |
| 1aa²⁵ | H | SO₃H | H | H | H | SO₃H | CN | Cyclopentyl | 2 | 2 | 2 | 2 |
| 1aa²⁶ | H | H | SO₃H | H | SO₃H | H | | | | | | |
| 1aa²⁷ | H | SO₃H | H | H | SO₃H | H | | | | | | |
| 1aa²⁸ | H | SO₃H | H | H | H | SO₃H | CN | Cyclohexyl | 2 | 2 | 2 | 2 |
| 1aa²⁹ | H | H | SO₃H | H | SO₃H | H | | | | | | |
| 1aa³⁰ | H | SO₃H | H | H | SO₃H | H | | | | | | |
| 1aa³¹ | H | SO₃H | H | H | H | SO₃H | CN | 2-Methyl cyclohexyl | 2 | 2 | 2 | 2 |
| 1aa³² | H | H | SO₃H | H | SO₃H | H | | | | | | |
| 1aa³³ | H | SO₃H | H | H | SO₃H | H | | | | | | |
| 1aa³⁴ | H | SO₃H | H | H | H | SO₃H | CN | 3-Methyl cyclohexyl | 2 | 2 | 2 | 2 |
| 1aa³⁵ | H | H | SO₃H | H | SO₃H | H | | | | | | |
| 1aa³⁶ | H | SO₃H | H | H | SO₃H | H | | | | | | |
| 1aa³⁷ | H | SO₃H | H | H | H | SO₃H | CN | Isopropyl | 2 | 2 | 2 | 2 |
| 1aa³⁸ | H | H | SO₃H | H | SO₃H | H | | | | | | |
| 1aa³⁹ | H | SO₃H | H | H | SO₃H | H | | | | | | |
| 1aa⁴⁰ | H | SO₃H | H | H | H | SO₃H | CN | Sec-butyl | 2 | 2 | 2 | 2 |
| 1aa⁴¹ | H | H | SO₃H | H | SO₃H | H | | | | | | |
| 1aa⁴² | H | SO₃H | H | H | SO₃H | H | | | | | | |
| 1aa⁴³ | H | SO₃H | H | H | H | SO₃H | CN | 2-Methyl butyl | 2 | 2 | 2 | 2 |
| 1aa⁴⁴ | H | H | SO₃H | H | SO₃H | H | | | | | | |
| 1aa⁴⁵ | H | SO₃H | H | H | SO₃H | H | | | | | | |
| 1aa⁴⁶ | H | SO₃H | H | H | H | SO₃H | CN | 1-Ethyl propyl | 2 | 2 | 2 | 2 |
| 1aa⁴⁷ | H | H | SO₃H | H | SO₃H | H | | | | | | |
| 1aa⁴⁸ | H | SO₃H | H | H | SO₃H | H | | | | | | |
| 1aa⁴⁹ | H | SO₃H | H | H | H | SO₃H | CN | 1,2-Dimethyl propyl | 2 | 2 | 2 | 2 |
| 1aa⁵⁰ | H | H | SO₃H | H | SO₃H | H | | | | | | |
| 1aa⁵¹ | H | SO₃H | H | H | SO₃H | H | | | | | | |
| 1aa⁵² | H | SO₃H | H | H | H | SO₃H | CN | Tert-butyl | 2 | 2 | 2 | 2 |
| 1aa⁵³ | H | H | SO₃H | H | SO₃H | H | | | | | | |
| 1aa⁵⁴ | H | SO₃H | H | H | SO₃H | H | | | | | | |
| 1aa⁵⁵ | H | SO₃H | H | H | H | SO₃H | CN | 3-Methyl butyl | 2 | 2 | 2 | 2 |
| 1aa⁵⁶ | H | H | SO₃H | H | SO₃H | H | | | | | | |
| 1aa⁵⁷ | H | SO₃H | H | H | SO₃H | H | | | | | | |
| 1aa⁵⁸ | H | SO₃H | H | H | H | SO₃H | CN | Pentan-2-yl | 2 | 2 | 2 | 2 |
| 1aa⁵⁹ | H | H | SO₃H | H | SO₃H | H | | | | | | |
| 1aa⁶⁰ | H | SO₃H | H | H | SO₃H | H | | | | | | |
| 1aa⁶¹ | H | SO₃H | H | H | H | SO₃H | CN | 2-Ethylhexyl | 2 | 2 | 2 | 2 |
| 1aa⁶² | H | H | SO₃H | H | SO₃H | H | | | | | | |
| 1aa⁶³ | H | SO₃H | H | H | SO₃H | H | | | | | | |
| 1aa⁶⁴ | H | SO₃H | H | H | H | SO₃H | CN | 2,2-Dimethyl propyl | 2 | 2 | 2 | 2 |
| 1aa⁶⁵ | H | H | SO₃H | H | SO₃H | H | | | | | | |
| 1aa⁶⁶ | H | SO₃H | H | H | SO₃H | H | | | | | | |
| 1aa⁶⁷ | H | SO₃H | H | H | H | SO₃H | CN | Phenyl | 2 | 2 | 2 | 2 |
| 1aa⁶⁸ | H | H | SO₃H | H | SO₃H | H | | | | | | |
| 1aa⁶⁹ | H | SO₃H | H | H | SO₃H | H | | | | | | |
| 1aa⁷⁰ | H | SO₃H | H | H | H | SO₃H | CN | Benzyl | 2 | 2 | 2 | 2 |
| 1aa⁷¹ | H | H | SO₃H | H | SO₃H | H | | | | | | |
| 1aa⁷² | H | SO₃H | H | H | SO₃H | H | | | | | | |
| 1aa⁷³ | H | SO₃H | H | H | H | SO₃H | CONH₂ | H | 2 | 2 | 2 | 2 |
| 1aa⁷⁴ | H | H | SO₃H | H | SO₃H | H | | | | | | |
| 1aa⁷⁵ | H | SO₃H | H | H | SO₃H | H | | | | | | |
| 1aa⁷⁶ | H | SO₃H | H | H | H | SO₃H | CONH₂ | Methyl | 2 | 2 | 2 | 2 |
| 1aa⁷⁷ | H | H | SO₃H | H | SO₃H | H | | | | | | |
| 1aa⁷⁸ | H | SO₃H | H | H | SO₃H | H | | | | | | |
| 1aa⁷⁹ | H | SO₃H | H | H | H | SO₃H | CONH₂ | Ethyl | 2 | 2 | 2 | 2 |
| 1aa⁸⁰ | H | H | SO₃H | H | SO₃H | H | | | | | | |
| 1aa⁴⁸ | H | SO₃H | H | H | SO₃H | H | | | | | | |
| 1aa⁸² | H | SO₃H | H | H | H | SO₃H | CONH₂ | Propyl | 2 | 2 | 2 | 2 |
| 1aa⁸³ | H | H | SO₃H | H | SO₃H | H | | | | | | |
| 1aa⁸⁴ | H | SO₃H | H | H | SO₃H | H | | | | | | |
| 1aa⁸⁵ | H | SO₃H | H | H | H | SO₃H | CONH₂ | Butyl | 2 | 2 | 2 | 2 |
| 1aa⁸⁶ | H | H | SO₃H | H | SO₃H | H | | | | | | |
| 1aa⁸⁷ | H | SO₃H | H | H | SO₃H | H | | | | | | |
| 1aa⁸⁸ | H | SO₃H | H | H | H | SO₃H | CONH₂ | Pentyl | 2 | 2 | 2 | 2 |
| 1aa⁸⁹ | H | H | SO₃H | H | SO₃H | H | | | | | | |
| 1aa⁹⁰ | H | SO₃H | H | H | SO₃H | H | | | | | | |
| 1aa⁹¹ | H | SO₃H | H | H | H | SO₃H | CONH₂ | Hexyl | 2 | 2 | 2 | 2 |
| 1aa⁹² | H | H | SO₃H | H | SO₃H | H | | | | | | |
| 1aa⁹³ | H | SO₃H | H | H | SO₃H | H | | | | | | |
| 1aa⁹⁴ | H | SO₃H | H | H | H | SO₃H | CONH₂ | Cyclobutyl | 2 | 2 | 2 | 2 |
| 1aa⁹⁵ | H | H | SO₃H | H | SO₃H | H | | | | | | |
| 1aa⁹⁶ | H | SO₃H | H | H | SO₃H | H | | | | | | |
| 1aa⁹⁷ | H | SO₃H | H | H | H | SO₃H | CONH₂ | Cyclopentyl | 2 | 2 | 2 | 2 |
| 1aa⁹⁸ | H | H | SO₃H | H | SO₃H | H | | | | | | |
| 1aa⁹⁹ | H | SO₃H | H | H | SO₃H | H | | | | | | |
| 1aa¹⁰⁰ | H | SO₃H | H | H | H | SO₃H | CONH₂ | Cyclohexyl | 2 | 2 | 2 | 2 |
| 1aa¹⁰¹ | H | H | SO₃H | H | SO₃H | H | | | | | | |
| 1aa¹⁰² | H | SO₃H | H | H | SO₃H | H | | | | | | |
| 1aa¹⁰³ | H | SO₃H | H | H | H | SO₃H | CONH₂ | 2-Methyl cyclohexyl | 2 | 2 | 2 | 2 |
| 1aa¹⁰⁴ | H | H | SO₃H | H | SO₃H | H | | | | | | |
| 1aa¹⁰⁵ | H | SO₃H | H | H | SO₃H | H | | | | | | |
| 1aa¹⁰⁶ | H | SO₃H | H | H | H | SO₃H | CONH₂ | 3-Methyl cyclohexyl | 2 | 2 | 2 | 2 |
| 1aa¹⁰⁷ | H | H | SO₃H | H | SO₃H | H | | | | | | |
| 1aa¹⁰⁸ | H | SO₃H | H | H | SO₃H | H | | | | | | |
| 1aa¹⁰⁸ | H | SO₃H | H | H | H | SO₃H | CONH₂ | Isopropyl | 2 | 2 | 2 | 2 |
| 1aa¹¹⁰ | H | H | SO₃H | H | SO₃H | H | | | | | | |
| 1aa¹¹¹ | H | SO₃H | H | H | SO₃H | H | | | | | | |
| 1aa¹¹² | H | SO₃H | H | H | H | SO₃H | CONH₂ | Sec-butyl | 2 | 2 | 2 | 2 |
| 1aa¹¹³ | H | H | SO₃H | H | SO₃H | H | | | | | | |
| 1aa¹¹⁴ | H | SO₃H | H | H | SO₃H | H | | | | | | |
| 1aa¹¹⁵ | H | SO₃H | H | H | H | SO₃H | CONH₂ | 2-Methyl butyl | 2 | 2 | 2 | 2 |
| 1aa¹¹⁶ | H | H | SO₃H | H | SO₃H | H | | | | | | |
| 1aa¹¹⁷ | H | SO₃H | H | H | SO₃H | H | | | | | | |
| 1aa¹¹⁸ | H | SO₃H | H | H | H | SO₃H | CONH₂ | 1-Ethyl propyl | 2 | 2 | 2 | 2 |
| 1aa¹¹⁹ | H | H | SO₃H | H | SO₃H | H | | | | | | |
| 1aa¹²⁰ | H | SO₃H | H | H | SO₃H | H | | | | | | |
| 1aa¹²¹ | H | SO₃H | H | H | H | SO₃H | CONH₂ | 1,2-Dimethyl propyl | 2 | 2 | 2 | 2 |
| 1aa¹²² | H | H | SO₃H | H | SO₃H | H | | | | | | |
| 1aa¹²³ | H | SO₃H | H | H | SO₃H | H | | | | | | |
| 1aa¹²⁴ | H | SO₃H | H | H | H | SO₃H | CONH₂ | Tert-butyl | 2 | 2 | 2 | 2 |
| 1aa¹²⁵ | H | H | SO₃H | H | SO₃H | H | | | | | | |
| 1aa¹²⁶ | H | SO₃H | H | H | SO₃H | H | | | | | | |
| 1aa¹²⁷ | H | SO₃H | H | H | H | SO₃H | CONH₂ | 3-Methyl butyl | 2 | 2 | 2 | 2 |
| 1aa¹²⁸ | H | H | SO₃H | H | SO₃H | H | | | | | | |
| 1aa¹²⁹ | H | SO₃H | H | H | SO₃H | H | | | | | | |
| 1aa¹³⁰ | H | SO₃H | H | H | H | SO₃H | CONH₂ | Pentan-2-yl | 2 | 2 | 2 | 2 |
| 1aa¹³¹ | H | H | SO₃H | H | SO₃H | H | | | | | | |
| 1aa¹³² | H | SO₃H | H | H | SO₃H | H | | | | | | |
| 1aa¹³³ | H | SO₃H | H | H | H | SO₃H | CONH₂ | 2-Ethylhexyl | 2 | 2 | 2 | 2 |
| 1aa¹³⁴ | H | H | SO₃H | H | SO₃H | H | | | | | | |
| 1aa¹³⁵ | H | SO₃H | H | H | SO₃H | H | | | | | | |
| 1aa¹³⁶ | H | SO₃H | H | H | H | SO₃H | CONH₂ | 2,2-Dimethyl propyl | 2 | 2 | 2 | 2 |
| 1aa¹³⁷ | H | H | SO₃H | H | SO₃H | H | | | | | | |
| 1aa¹³⁸ | H | SO₃H | H | H | SO₃H | H | | | | | | |
| 1aa¹³⁹ | H | SO₃H | H | H | H | SO₃H | CONH₂ | Phenyl | 2 | 2 | 2 | 2 |
| 1aa¹⁴⁰ | H | H | SO₃H | H | SO₃H | H | | | | | | |
| 1aa¹⁴¹ | H | SO₃H | H | H | SO₃H | H | | | | | | |
| 1aa¹⁴² | H | SO₃H | H | H | H | SO₃H | CONH₂ | Benzyl | 2 | 2 | 2 | 2 |
| 1aa¹⁴³ | H | H | SO₃H | H | SO₃H | H | | | | | | |
| 1aa¹⁴⁴ | H | SO₃H | H | H | SO₃H | H | | | | | | |
| 1aa¹⁴⁵ | H | SO₃H | H | H | H | SO₃H | CN | H | 3 | 4 | 4 | 3 |
| 1aa¹⁴⁶ | H | H | SO₃H | H | SO₃H | H | | | | | | |
| 1aa¹⁴⁷ | H | SO₃H | H | H | SO₃H | H | | | | | | |
| 1aa¹⁴⁸ | H | SO₃H | H | H | H | SO₃H | CN | Methyl | 3 | 4 | 4 | 3 |
| 1aa¹⁴⁹ | H | H | SO₃H | H | SO₃H | H | | | | | | |
| 1aa¹⁵⁰ | H | SO₃H | H | H | SO₃H | H | | | | | | |
| 1aa¹⁵¹ | H | SO₃H | H | H | H | SO₃H | CN | Ethyl | 3 | 4 | 4 | 3 |
| 1aa¹⁵² | H | H | SO₃H | H | SO₃H | H | | | | | | |
| 1aa¹⁵³ | H | SO₃H | H | H | SO₃H | H | | | | | | |
| 1aa¹⁵⁴ | H | SO₃H | H | H | H | SO₃H | CN | Propyl | 3 | 4 | 4 | 3 |
| 1aa¹⁵⁵ | H | H | SO₃H | H | SO₃H | H | | | | | | |
| 1aa¹⁵⁶ | H | SO₃H | H | H | SO₃H | H | | | | | | |
| 1aa¹⁵⁷ | H | SO₃H | H | H | H | SO₃H | CN | Butyl | 3 | 4 | 4 | 3 |
| 1aa¹⁵⁸ | H | H | SO₃H | H | SO₃H | H | | | | | | |
| 1aa¹⁵⁸ | H | SO₃H | H | H | SO₃H | H | | | | | | |
| 1aa¹⁶⁰ | H | SO₃H | H | H | H | SO₃H | CN | Pentyl | 3 | 4 | 4 | 3 |
| 1aa¹⁶¹ | H | H | SO₃H | H | SO₃H | H | | | | | | |
| 1aa¹⁶² | H | SO₃H | H | H | SO₃H | H | | | | | | |
| 1aa¹⁶³ | H | SO₃H | H | H | H | SO₃H | CN | Hexyl | 3 | 4 | 4 | 3 |
| 1aa¹⁶⁴ | H | H | SO₃H | H | SO₃H | H | | | | | | |
| 1aa¹⁶⁵ | H | SO₃H | H | H | SO₃H | H | | | | | | |
| 1aa¹⁶⁶ | H | SO₃H | H | H | H | SO₃H | CN | Cyclobutyl | 3 | 4 | 4 | 3 |
| 1aa¹⁶⁷ | H | H | SO₃H | H | SO₃H | H | | | | | | |
| 1aa¹⁶⁸ | H | SO₃H | H | H | SO₃H | H | | | | | | |
| 1aa¹⁶⁹ | H | SO₃H | H | H | H | SO₃H | CN | Cyclopentyl | 3 | 4 | 4 | 3 |
| 1aa¹⁷⁰ | H | H | SO₃H | H | SO₃H | H | | | | | | |
| 1aa¹⁷¹ | H | SO₃H | H | H | SO₃H | H | | | | | | |
| 1aa¹⁷² | H | SO₃H | H | H | H | SO₃H | CN | Cyclohexyl | 3 | 4 | 4 | 3 |
| 1aa¹⁷³ | H | H | SO₃H | H | SO₃H | H | | | | | | |
| 1aa¹⁷⁴ | H | SO₃H | H | H | SO₃H | H | | | | | | |
| 1aa¹⁷⁵ | H | SO₃H | H | H | H | SO₃H | CN | 2-Methyl cyclohexyl | 3 | 4 | 4 | 3 |
| 1aa¹⁷⁶ | H | H | SO₃H | H | SO₃H | H | | | | | | |
| 1aa¹⁷⁷ | H | SO₃H | H | H | SO₃H | H | | | | | | |
| 1aa¹⁷⁸ | H | SO₃H | H | H | H | SO₃H | CN | 3-Methyl cyclohexyl | 3 | 4 | 4 | 3 |
| 1aa¹⁷⁹ | H | H | SO₃H | H | SO₃H | H | | | | | | |
| 1aa¹⁸⁰ | H | SO₃H | H | H | SO₃H | H | | | | | | |
| 1aa¹⁸¹ | H | SO₃H | H | H | H | SO₃H | CN | Isopropyl | 3 | 4 | 4 | 3 |
| 1aa¹⁸² | H | H | SO₃H | H | SO₃H | H | | | | | | |
| 1aa¹⁸³ | H | SO₃H | H | H | SO₃H | H | | | | | | |
| 1aa⁴⁸ | H | SO₃H | H | H | H | SO₃H | CN | Sec-butyl | 3 | 4 | 4 | 3 |
| 1aa¹⁸⁵ | H | H | SO₃H | H | SO₃H | H | | | | | | |
| 1aa¹⁸⁶ | H | SO₃H | H | H | SO₃H | H | | | | | | |
| 1aa¹⁸⁷ | H | SO₃H | H | H | H | SO₃H | CN | 2-Methyl butyl | 3 | 4 | 4 | 3 |
| 1aa¹⁸⁸ | H | H | SO₃H | H | SO₃H | H | | | | | | |
| 1aa¹⁸⁹ | H | SO₃H | H | H | SO₃H | H | | | | | | |
| 1aa¹⁹⁰ | H | SO₃H | H | H | H | SO₃H | CN | 1-Ethyl propyl | 3 | 4 | 4 | 3 |
| 1aa¹⁹¹ | H | H | SO₃H | H | SO₃H | H | | | | | | |
| 1aa¹⁹² | H | SO₃H | H | H | SO₃H | H | | | | | | |
| 1aa¹⁹³ | H | SO₃H | H | H | H | SO₃H | CN | 1,2-Dimethyl propyl | 3 | 4 | 4 | 3 |
| 1aa¹⁹⁴ | H | H | SO₃H | H | SO₃H | H | | | | | | |
| 1aa¹⁹⁵ | H | SO₃H | H | H | SO₃H | H | | | | | | |
| 1aa¹⁹⁶ | H | SO₃H | H | H | H | SO₃H | CN | Tert-butyl | 3 | 4 | 4 | 3 |
| 1aa¹⁹⁷ | H | H | SO₃H | H | SO₃H | H | | | | | | |
| 1aa¹⁹⁸ | H | SO₃H | H | H | SO₃H | H | | | | | | |
| 1aa¹⁹⁹ | H | SO₃H | H | H | H | SO₃H | CN | 3-Methyl butyl | 3 | 4 | 4 | 3 |
| 1aa²⁰⁰ | H | H | SO₃H | H | SO₃H | H | | | | | | |
| 1aa²⁰¹ | H | SO₃H | H | H | SO₃H | H | | | | | | |
| 1aa²⁰² | H | SO₃H | H | H | H | SO₃H | CN | Pentan-2-yl | 3 | 4 | 4 | 3 |
| 1aa²⁰³ | H | H | SO₃H | H | SO₃H | H | | | | | | |
| 1aa²⁰⁴ | H | SO₃H | H | H | SO₃H | H | | | | | | |
| 1aa²⁰⁵ | H | SO₃H | H | H | H | SO₃H | CN | 2-Ethylhexyl | 3 | 4 | 4 | 3 |
| 1aa²⁰⁶ | H | H | SO₃H | H | SO₃H | H | | | | | | |
| 1aa²⁰⁷ | H | SO₃H | H | H | SO₃H | H | | | | | | |
| 1aa²⁰⁸ | H | SO₃H | H | H | H | SO₃H | CN | 2,2-Dimethyl propyl | 3 | 4 | 4 | 3 |
| 1aa²⁰⁹ | H | H | SO₃H | H | SO₃H | H | | | | | | |
| 1aa²¹⁰ | H | SO₃H | H | H | SO₃H | H | | | | | | |
| 1aa²¹¹ | H | SO₃H | H | H | H | SO₃H | CN | Phenyl | 3 | 4 | 4 | 3 |
| 1aa²¹² | H | H | SO₃H | H | SO₃H | H | | | | | | |
| 1aa²¹³ | H | SO₃H | H | H | SO₃H | H | | | | | | |
| 1aa²¹⁴ | H | SO₃H | H | H | H | SO₃H | CN | Benzyl | 3 | 4 | 4 | 3 |
| 1aa²¹⁵ | H | H | SO₃H | H | SO₃H | H | | | | | | |
| 1aa²¹⁶ | H | SO₃H | H | H | SO₃H | H | | | | | | |
| 1aa²¹⁷ | H | SO₃H | H | H | H | SO₃H | CONH₂ | H | 3 | 4 | 4 | 3 |
| 1aa²¹⁸ | H | H | SO₃H | H | SO₃H | H | | | | | | |
| 1aa²¹⁹ | H | SO₃H | H | H | SO₃H | H | | | | | | |
| 1aa²²⁰ | H | SO₃H | H | H | H | SO₃H | CONH₂ | Methyl | 3 | 4 | 4 | 3 |
| 1aa²²¹ | H | H | SO₃H | H | SO₃H | H | | | | | | |
| 1aa²²² | H | SO₃H | H | H | SO₃H | H | | | | | | |
| 1aa²²³ | H | SO₃H | H | H | H | SO₃H | CONH₂ | Ethyl | 3 | 4 | 4 | 3 |
| 1aa²²⁴ | H | H | SO₃H | H | SO₃H | H | | | | | | |
| 1aa²²⁵ | H | SO₃H | H | H | SO₃H | H | | | | | | |
| 1aa²²⁶ | H | SO₃H | H | H | H | SO₃H | CONH₂ | Propyl | 3 | 4 | 4 | 3 |
| 1aa²²⁷ | H | H | SO₃H | H | SO₃H | H | | | | | | |
| 1aa²²⁸ | H | SO₃H | H | H | SO₃H | H | | | | | | |
| 1aa²²⁹ | H | SO₃H | H | H | H | SO₃H | CONH₂ | Butyl | 3 | 4 | 4 | 3 |
| 1aa²³⁰ | H | H | SO₃H | H | SO₃H | H | | | | | | |
| 1aa²³¹ | H | SO₃H | H | H | SO₃H | H | | | | | | |
| 1aa²³² | H | SO₃H | H | H | H | SO₃H | CONH₂ | Pentyl | 3 | 4 | 4 | 3 |
| 1aa²³³ | H | H | SO₃H | H | SO₃H | H | | | | | | |
| 1aa²³⁴ | H | SO₃H | H | H | SO₃H | H | | | | | | |
| 1aa²³⁵ | H | SO₃H | H | H | H | SO₃H | CONH₂ | Hexyl | 3 | 4 | 4 | 3 |
| 1aa²³⁶ | H | H | SO₃H | H | SO₃H | H | | | | | | |
| 1aa²³⁷ | H | SO₃H | H | H | SO₃H | H | | | | | | |
| 1aa²³⁸ | H | SO₃H | H | H | H | SO₃H | CONH₂ | Cyclobutyl | 3 | 4 | 4 | 3 |
| 1aa²³⁹ | H | H | SO₃H | H | SO₃H | H | | | | | | |
| 1aa²⁴⁰ | H | SO₃H | H | H | SO₃H | H | | | | | | |
| 1aa²⁴¹ | H | SO₃H | H | H | H | SO₃H | CONH₂ | Cyclopentyl | 3 | 4 | 4 | 3 |
| 1aa²⁴² | H | H | SO₃H | H | SO₃H | H | | | | | | |
| 1aa²⁴³ | H | SO₃H | H | H | SO₃H | H | | | | | | |
| 1aa²⁴⁴ | H | SO₃H | H | H | H | SO₃H | CONH₂ | Cyclohexyl | 3 | 4 | 4 | 3 |
| 1aa²⁴⁵ | H | H | SO₃H | H | SO₃H | H | | | | | | |
| 1aa²⁴⁶ | H | SO₃H | H | H | SO₃H | H | | | | | | |
| 1aa²⁴⁷ | H | SO₃H | H | H | H | SO₃H | CONH₂ | 2-Methyl cyclohexyl | 3 | 4 | 4 | 3 |
| 1aa²⁴⁸ | H | H | SO₃H | H | SO₃H | H | | | | | | |
| 1aa²⁴⁹ | H | SO₃H | H | H | SO₃H | H | | | | | | |
| 1aa²⁵⁰ | H | SO₃H | H | H | H | SO₃H | CONH₂ | 3-Methyl | 3 | 4 | 4 | 3 |
| 1aa²⁵¹ | H | H | SO₃H | H | SO₃H | H | | cyclohexyl | | | | |
| 1aa²⁵² | H | SO₃H | H | H | SO₃H | H | | | | | | |
| 1aa²⁵³ | H | SO₃H | H | H | H | SO₃H | CONH₂ | Isopropyl | 3 | 4 | 4 | 3 |
| 1aa²⁵⁴ | H | H | SO₃H | H | SO₃H | H | | | | | | |
| 1aa²⁵⁵ | H | SO₃H | H | H | SO₃H | H | | | | | | |
| 1aa²⁵⁶ | H | SO₃H | H | H | H | SO₃H | CONH₂ | Sec-butyl | 3 | 4 | 4 | 3 |
| 1aa²⁵⁷ | H | H | SO₃H | H | SO₃H | H | | | | | | |
| 1aa²⁵⁸ | H | SO₃H | H | H | SO₃H | H | | | | | | |
| 1aa²⁵⁹ | H | SO₃H | H | H | H | SO₃H | CONH₂ | 2-Methylbutyl | 3 | 4 | 4 | 3 |
| 1aa²⁶⁰ | H | H | SO₃H | H | SO₃H | H | | | | | | |
| 1aa²⁶¹ | H | SO₃H | H | H | SO₃H | H | | | | | | |
| 1aa²⁶² | H | SO₃H | H | H | H | SO₃H | CONH₂ | 1-Ethyl propyl | 3 | 4 | 4 | 3 |
| 1aa²⁶³ | H | H | SO₃H | H | SO₃H | H | | | | | | |
| 1aa²⁶⁴ | H | SO₃H | H | H | SO₃H | H | | | | | | |
| 1aa²⁶⁵ | H | SO₃H | H | H | H | SO₃H | CONH₂ | 1,2-Dimethyl propyl | 3 | 4 | 4 | 3 |
| 1aa²⁶⁶ | H | H | SO₃H | H | SO₃H | H | | | | | | |
| 1aa²⁶⁷ | H | SO₃H | H | H | SO₃H | H | | | | | | |
| 1aa²⁶⁸ | H | SO₃H | H | H | H | SO₃H | CONH₂ | Tert-butyl | 3 | 4 | 4 | 3 |
| 1aa²⁶⁹ | H | H | SO₃H | H | SO₃H | H | | | | | | |
| 1aa²⁷⁰ | H | SO₃H | H | H | SO₃H | H | | | | | | |
| 1aa²⁷¹ | H | SO₃H | H | H | H | SO₃H | CONH₂ | 3-Methyl butyl | 3 | 4 | 4 | 3 |
| 1aa²⁷² | H | H | SO₃H | H | SO₃H | H | | | | | | |
| 1aa²⁷³ | H | SO₃H | H | H | SO₃H | H | | | | | | |
| 1aa²⁷⁴ | H | SO₃H | H | H | H | SO₃H | CONH₂ | Pentan-2-yl | 3 | 4 | 4 | 3 |
| 1aa²⁷⁵ | H | H | SO₃H | H | SO₃H | H | | | | | | |
| 1aa²⁷⁶ | H | SO₃H | H | H | SO₃H | H | | | | | | |
| 1aa²⁷⁷ | H | SO₃H | H | H | H | SO₃H | CONH₂ | 2-Ethylhexyl | 3 | 4 | 4 | 3 |
| 1aa²⁷⁸ | H | H | SO₃H | H | SO₃H | H | | | | | | |
| 1aa²⁷⁹ | H | SO₃H | H | H | SO₃H | H | | | | | | |
| 1aa²⁸⁰ | H | SO₃H | H | H | H | SO₃H | CONH₂ | 2,2-Dimethyl propyl | 3 | 4 | 4 | 3 |
| 1aa²⁸¹ | H | H | SO₃H | H | SO₃H | H | | | | | | |
| 1aa²⁸² | H | SO₃H | H | H | SO₃H | H | | | | | | |
| 1aa²⁸³ | H | SO₃H | H | H | H | SO₃H | CONH₂ | Phenyl | 3 | 4 | 4 | 3 |
| 1aa²⁸⁴ | H | H | SO₃H | H | SO₃H | H | | | | | | |
| 1aa²⁸⁵ | H | SO₃H | H | H | SO₃H | H | | | | | | |
| 1aa²⁸⁶ | H | SO₃H | H | H | H | SO₃H | CONH₂ | Benzyl | 3 | 4 | 4 | 3 |
| 1aa²⁸⁷ | H | H | SO₃H | H | SO₃H | H | | | | | | |
| 1aa²⁸⁸ | H | SO₃H | H | H | SO₃H | H | | | | | | |
| 1aa²⁸⁹ | H | SO₃H | H | H | H | SO₃H | CN | H | 3 | 3 | 3 | 3 |
| 1aa²⁹⁰ | H | H | SO₃H | H | SO₃H | H | | | | | | |
| 1aa²⁹¹ | H | SO₃H | H | H | SO₃H | H | | | | | | |
| 1aa²⁹² | H | SO₃H | H | H | H | SO₃H | CN | Methyl | 3 | 3 | 3 | 3 |
| 1aa²⁹³ | H | H | SO₃H | H | SO₃H | H | | | | | | |
| 1aa²⁹⁴ | H | SO₃H | H | H | SO₃H | H | | | | | | |
| 1aa²⁹⁵ | H | SO₃H | H | H | H | SO₃H | CN | Ethyl | 3 | 3 | 3 | 3 |
| 1aa²⁹⁶ | H | H | SO₃H | H | SO₃H | H | | | | | | |
| 1aa²⁹⁷ | H | SO₃H | H | H | SO₃H | H | | | | | | |
| 1aa²⁹⁸ | H | SO₃H | H | H | H | SO₃H | CN | Propyl | 3 | 3 | 3 | 3 |
| 1aa²⁹⁹ | H | H | SO₃H | H | SO₃H | H | | | | | | |
| 1aa³⁰⁰ | H | SO₃H | H | H | SO₃H | H | | | | | | |
| 1aa³⁰¹ | H | SO₃H | H | H | H | SO₃H | CN | Butyl | 3 | 3 | 3 | 3 |
| 1aa³⁰² | H | H | SO₃H | H | SO₃H | H | | | | | | |
| 1aa³⁰³ | H | SO₃H | H | H | SO₃H | H | | | | | | |
| 1aa³⁰⁴ | H | SO₃H | H | H | H | SO₃H | CN | Pentyl | 3 | 3 | 3 | 3 |
| 1aa³⁰⁵ | H | H | SO₃H | H | SO₃H | H | | | | | | |
| 1aa³⁰⁶ | H | SO₃H | H | H | SO₃H | H | | | | | | |
| 1aa³⁰⁷ | H | SO₃H | H | H | H | SO₃H | CN | Hexyl | 3 | 3 | 3 | 3 |
| 1aa³⁰⁸ | H | H | SO₃H | H | SO₃H | H | | | | | | |
| 1aa³⁰⁹ | H | SO₃H | H | H | SO₃H | H | | | | | | |
| 1aa³¹⁰ | H | SO₃H | H | H | H | SO₃H | CN | Cyclobutyl | 3 | 3 | 3 | 3 |
| 1aa³¹¹ | H | H | SO₃H | H | SO₃H | H | | | | | | |
| 1aa³¹² | H | SO₃H | H | H | SO₃H | H | | | | | | |
| 1aa³¹³ | H | SO₃H | H | H | H | SO₃H | CN | Cyclopentyl | 3 | 3 | 3 | 3 |
| 1aa³¹⁴ | H | H | SO₃H | H | SO₃H | H | | | | | | |
| 1aa³¹⁵ | H | SO₃H | H | H | SO₃H | H | | | | | | |
| 1aa³¹⁶ | H | SO₃H | H | H | H | SO₃H | CN | Cyclohexyl | 3 | 3 | 3 | 3 |
| 1aa³¹⁷ | H | H | SO₃H | H | SO₃H | H | | | | | | |
| 1aa³¹⁸ | H | SO₃H | H | H | SO₃H | H | | | | | | |
| 1aa³¹⁹ | H | SO₃H | H | H | H | SO₃H | CN | 2-Methyl cyclohexyl | 3 | 3 | 3 | 3 |
| 1aa³²⁰ | H | H | SO₃H | H | SO₃H | H | | | | | | |
| 1aa³²¹ | H | SO₃H | H | H | SO₃H | H | | | | | | |
| 1aa³²² | H | SO₃H | H | H | H | SO₃H | CN | 3-Methyl cyclohexyl | 3 | 3 | 3 | 3 |
| 1aa³²³ | H | H | SO₃H | H | SO₃H | H | | | | | | |
| 1aa³²⁴ | H | SO₃H | H | H | SO₃H | H | | | | | | |
| 1aa³²⁵ | H | SO₃H | H | H | H | SO₃H | CN | Isopropyl | 3 | 3 | 3 | 3 |
| 1aa³²⁶ | H | H | SO₃H | H | SO₃H | H | | | | | | |
| 1aa³²⁷ | H | SO₃H | H | H | SO₃H | H | | | | | | |
| 1aa³²⁸ | H | SO₃H | H | H | H | SO₃H | CN | Sec-butyl | 3 | 3 | 3 | 3 |
| 1aa³²⁹ | H | H | SO₃H | H | SO₃H | H | | | | | | |
| 1aa³³⁰ | H | SO₃H | H | H | SO₃H | H | | | | | | |
| 1aa³³¹ | H | SO₃H | H | H | H | SO₃H | CN | 2-Methyl butyl | 3 | 3 | 3 | 3 |
| 1aa³³² | H | H | SO₃H | H | SO₃H | H | | | | | | |
| 1aa³³³ | H | SO₃H | H | H | SO₃H | H | | | | | | |
| 1aa³³⁴ | H | SO₃H | H | H | H | SO₃H | CN | 1-Ethyl propyl | 3 | 3 | 3 | 3 |
| 1aa³³⁵ | H | H | SO₃H | H | SO₃H | H | | | | | | |
| 1aa³³⁶ | H | SO₃H | H | H | SO₃H | H | | | | | | |
| 1aa³³⁷ | H | SO₃H | H | H | H | SO₃H | CN | 1,2-Dimethyl propyl | 3 | 3 | 3 | 3 |
| 1aa³³⁸ | H | H | SO₃H | H | SO₃H | H | | | | | | |
| 1aa³³⁹ | H | SO₃H | H | H | SO₃H | H | | | | | | |
| 1aa³⁴⁰ | H | SO₃H | H | H | H | SO₃H | CN | Tert-butyl | 3 | 3 | 3 | 3 |
| 1aa³⁴¹ | H | H | SO₃H | H | SO₃H | H | | | | | | |
| 1aa³⁴² | H | SO₃H | H | H | SO₃H | H | | | | | | |
| 1aa³⁴³ | H | SO₃H | H | H | H | SO₃H | CN | 3-Methyl butyl | 3 | 3 | 3 | 3 |
| 1aa³⁴⁴ | H | H | SO₃H | H | SO₃H | H | | | | | | |
| 1aa³⁴⁵ | H | SO₃H | H | H | SO₃H | H | | | | | | |
| 1aa³⁴⁶ | H | SO₃H | H | H | H | SO₃H | CN | Pentan-2-yl | 3 | 3 | 3 | 3 |
| 1aa³⁴⁷ | H | H | SO₃H | H | SO₃H | H | | | | | | |
| 1aa³⁴⁸ | H | SO₃H | H | H | SO₃H | H | | | | | | |
| 1aa³⁴⁹ | H | SO₃H | H | H | H | SO₃H | CN | 2-Ethylhexyl | 3 | 3 | 3 | 3 |
| 1aa³⁵⁰ | H | H | SO₃H | H | SO₃H | H | | | | | | |
| 1aa³⁵¹ | H | SO₃H | H | H | SO₃H | H | | | | | | |
| 1aa³⁵² | H | SO₃H | H | H | H | SO₃H | CN | 2,2-Dimethyl propyl | 3 | 3 | 3 | 3 |
| 1aa³⁵³ | H | H | SO₃H | H | SO₃H | H | | | | | | |
| 1aa³⁵⁴ | H | SO₃H | H | H | SO₃H | H | | | | | | |
| 1aa³⁵⁵ | H | SO₃H | H | H | H | SO₃H | CN | Phenyl | 3 | 3 | 3 | 3 |
| 1aa³⁵⁶ | H | H | SO₃H | H | SO₃H | H | | | | | | |
| 1aa³⁵⁷ | H | SO₃H | H | H | SO₃H | H | | | | | | |
| 1aa³⁵⁸ | H | SO₃H | H | H | H | SO₃H | CN | Benzyl | 3 | 3 | 3 | 3 |
| 1aa³⁵⁹ | H | H | SO₃H | H | SO₃H | H | | | | | | |
| 1aa³⁶⁰ | H | SO₃H | H | H | SO₃H | H | | | | | | |
| 1aa³⁶¹ | H | SO₃H | H | H | H | SO₃H | CONH₂ | H | 3 | 3 | 3 | 3 |
| 1aa³⁶² | H | H | SO₃H | H | SO₃H | H | | | | | | |
| 1aa³⁶³ | H | SO₃H | H | H | SO₃H | H | | | | | | |
| 1aa³⁶⁴ | H | SO₃H | H | H | H | SO₃H | CONH₂ | Methyl | 3 | 3 | 3 | 3 |
| 1aa³⁶⁵ | H | H | SO₃H | H | SO₃H | H | | | | | | |
| 1aa³⁶⁶ | H | SO₃H | H | H | SO₃H | H | | | | | | |
| 1aa³⁶⁷ | H | SO₃H | H | H | H | SO₃H | CONH₂ | Ethyl | 3 | 3 | 3 | 3 |
| 1aa³⁶⁸ | H | H | SO₃H | H | SO₃H | H | | | | | | |
| 1aa³⁶⁹ | H | SO₃H | H | H | SO₃H | H | | | | | | |
| 1aa³⁷⁰ | H | SO₃H | H | H | H | SO₃H | CONH₂ | Propyl | 3 | 3 | 3 | 3 |
| 1aa³⁷¹ | H | H | SO₃H | H | SO₃H | H | | | | | | |
| 1aa³⁷² | H | SO₃H | H | H | SO₃H | H | | | | | | |
| 1aa³⁷³ | H | SO₃H | H | H | H | SO₃H | CONH₂ | Butyl | 3 | 3 | 3 | 3 |
| 1aa³⁷⁴ | H | H | SO₃H | H | SO₃H | H | | | | | | |
| 1aa³⁷⁵ | H | SO₃H | H | H | SO₃H | H | | | | | | |
| 1aa³⁷⁶ | H | SO₃H | H | H | H | SO₃H | CONH₂ | Pentyl | 3 | 3 | 3 | 3 |
| 1aa³⁷⁷ | H | H | SO₃H | H | SO₃H | H | | | | | | |
| 1aa³⁷⁸ | H | SO₃H | H | H | SO₃H | H | | | | | | |
| 1aa³⁷⁹ | H | SO₃H | H | H | H | SO₃H | CONH₂ | Hexyl | 3 | 3 | 3 | 3 |
| 1aa³⁸⁰ | H | H | SO₃H | H | SO₃H | H | | | | | | |
| 1aa³⁸¹ | H | SO₃H | H | H | SO₃H | H | | | | | | |
| 1aa³⁸² | H | SO₃H | H | H | H | SO₃H | CONH₂ | Cyclobutyl | 3 | 3 | 3 | 3 |
| 1aa³⁸³ | H | H | SO₃H | H | SO₃H | H | | | | | | |
| 1aa³⁸⁴ | H | SO₃H | H | H | SO₃H | H | | | | | | |
| 1aa³⁸⁵ | H | SO₃H | H | H | H | SO₃H | CONH₂ | Cyclopentyl | 3 | 3 | 3 | 3 |
| 1aa³⁸⁶ | H | H | SO₃H | H | SO₃H | H | | | | | | |
| 1aa³⁸⁷ | H | SO₃H | H | H | SO₃H | H | | | | | | |
| 1aa³⁸⁸ | H | SO₃H | H | H | H | SO₃H | CONH₂ | Cyclohexyl | 3 | 3 | 3 | 3 |
| 1aa³⁸⁹ | H | H | SO₃H | H | SO₃H | H | | | | | | |
| 1aa³⁹⁰ | H | SO₃H | H | H | SO₃H | H | | | | | | |
| 1aa³⁹¹ | H | SO₃H | H | H | H | SO₃H | CONH₂ | 2-Methyl cyclohexyl | 3 | 3 | 3 | 3 |
| 1aa³⁹² | H | H | SO₃H | H | SO₃H | H | | | | | | |
| 1aa³⁹³ | H | SO₃H | H | H | SO₃H | H | | | | | | |
| 1aa³⁹⁴ | H | SO₃H | H | H | H | SO₃H | CONH₂ | 3-Methyl cyclohexyl | 3 | 3 | 3 | 3 |
| 1aa³⁹⁵ | H | H | SO₃H | H | SO₃H | H | | | | | | |
| 1aa³⁹⁶ | H | SO₃H | H | H | SO₃H | H | | | | | | |
| 1aa³⁹⁷ | H | SO₃H | H | H | H | SO₃H | CONH₂ | Isopropyl | 3 | 3 | 3 | 3 |
| 1aa³⁹⁸ | H | H | SO₃H | H | SO₃H | H | | | | | | |
| 1aa³⁹⁹ | H | SO₃H | H | H | SO₃H | H | | | | | | |
| 1aa⁴⁰⁰ | H | SO₃H | H | H | H | SO₃H | CONH₂ | Sec-butyl | 3 | 3 | 3 | 3 |
| 1aa⁴⁰¹ | H | H | SO₃H | H | SO₃H | H | | | | | | |
| 1aa⁴⁰² | H | SO₃H | H | H | SO₃H | H | | | | | | |
| 1aa⁴⁰³ | H | SO₃H | H | H | H | SO₃H | CONH₂ | 2-Methylbutyl | 3 | 3 | 3 | 3 |
| 1aa⁴⁰⁴ | H | H | SO₃H | H | SO₃H | H | | | | | | |
| 1aa⁴⁰⁵ | H | SO₃H | H | H | SO₃H | H | | | | | | |
| 1aa⁴⁰⁶ | H | SO₃H | H | H | H | SO₃H | CONH₂ | 1-Ethyl propyl | 3 | 3 | 3 | 3 |
| 1aa⁴⁰⁷ | H | H | SO₃H | H | SO₃H | H | | | | | | |
| 1aa⁴⁰⁸ | H | SO₃H | H | H | SO₃H | H | | | | | | |
| 1aa⁴⁰⁹ | H | SO₃H | H | H | H | SO₃H | CONH₂ | 1,2-Dimethyl propyl | 3 | 3 | 3 | 3 |
| 1aa⁴¹⁰ | H | H | SO₃H | H | SO₃H | H | | | | | | |
| 1aa⁴¹¹ | H | SO₃H | H | H | SO₃H | H | | | | | | |
| 1aa⁴¹² | H | SO₃H | H | H | H | SO₃H | CONH₂ | Tert-butyl | 3 | 3 | 3 | 3 |
| 1aa⁴¹³ | H | H | SO₃H | H | SO₃H | H | | | | | | |
| 1aa⁴¹⁴ | H | SO₃H | H | H | SO₃H | H | | | | | | |
| 1aa⁴¹⁵ | H | SO₃H | H | H | H | SO₃H | CONH₂ | 3-Methyl butyl | 3 | 3 | 3 | 3 |
| 1aa⁴¹⁶ | H | H | SO₃H | H | SO₃H | H | | | | | | |
| 1aa⁴¹⁷ | H | SO₃H | H | H | SO₃H | H | | | | | | |
| 1aa⁴¹⁸ | H | SO₃H | H | H | H | SO₃H | CONH₂ | Pentan-2-yl | 3 | 3 | 3 | 3 |
| 1aa⁴¹⁹ | H | H | SO₃H | H | SO₃H | H | | | | | | |
| 1aa⁴²⁰ | H | SO₃H | H | H | SO₃H | H | | | | | | |
| 1aa⁴²¹ | H | SO₃H | H | H | H | SO₃H | CONH₂ | 2-Ethylhexyl | 3 | 3 | 3 | 3 |
| 1aa⁴²² | H | H | SO₃H | H | SO₃H | H | | | | | | |
| 1aa⁴²³ | H | SO₃H | H | H | SO₃H | H | | | | | | |
| 1aa⁴²⁴ | H | SO₃H | H | H | H | SO₃H | CONH₂ | 2,2-Dimethyl propyl | 3 | 3 | 3 | 3 |
| 1aa⁴²⁵ | H | H | SO₃H | H | SO₃H | H | | | | | | |
| 1aa⁴²⁶ | H | SO₃H | H | H | SO₃H | H | | | | | | |
| 1aa⁴²⁷ | H | SO₃H | H | H | H | SO₃H | CONH₂ | Phenyl | 3 | 3 | 3 | 3 |
| 1aa⁴²⁸ | H | H | SO₃H | H | SO₃H | H | | | | | | |
| 1aa⁴²⁹ | H | SO₃H | H | H | SO₃H | H | | | | | | |
| 1aa⁴³⁰ | H | SO₃H | H | H | H | SO₃H | CONH₂ | Benzyl | 3 | 3 | 3 | 3 |
| 1aa⁴³¹ | H | H | SO₃H | H | SO₃H | H | | | | | | |
| 1aa⁴³² | H | SO₃H | H | H | SO₃H | H | | | | | | |
| 1aa⁴³³ | H | SO₃H | H | H | H | SO₃H | CN | Allyl | 2 | 2 | 2 | 2 |
| 1aa⁴³⁴ | H | H | SO₃H | H | SO₃H | H | | | | | | |
| 1aa⁴³⁵ | H | SO₃H | H | H | SO₃H | H | | | | | | |
| 1aa⁴³⁶ | H | SO₃H | H | H | H | SO₃H | CN | 2-Methoxy ethyl | 2 | 2 | 2 | 2 |
| 1aa⁴³⁷ | H | H | SO₃H | H | SO₃H | H | | | | | | |
| 1aa⁴³⁸ | H | SO₃H | H | H | SO₃H | H | | | | | | |
| 1aa⁴³⁹ | H | SO₃H | H | H | H | SO₃H | CN | 3-Methoxy propyl | 2 | 2 | 2 | 2 |
| 1aa⁴⁴⁰ | H | H | SO₃H | H | SO₃H | H | | | | | | |
| 1aa⁴⁴¹ | H | SO₃H | H | H | SO₃H | H | | | | | | |
| 1aa⁴⁴² | H | SO₃H | H | H | H | SO₃H | CN | 2-Methyl thioethyl | 2 | 2 | 2 | 2 |
| 1aa⁴⁴³ | H | H | SO₃H | H | SO₃H | H | | | | | | |
| 1aa⁴⁴⁴ | H | SO₃H | H | H | SO₃H | H | | | | | | |
| 1aa^{44b} | H | SO₃H | H | H | H | SO₃H | CN | 2-Hydroxy ethyl | 2 | 2 | 2 | 2 |
| 1aa⁴⁴⁶ | H | H | SO₃H | H | SO₃H | H | | | | | | |
| 1aa⁴⁴⁷ | H | SO₃H | H | H | SO₃H | H | | | | | | |
| 1aa⁴⁴⁸ | H | SO₃H | H | H | H | SO₃H | CN | 2-Fluoro ethyl | 2 | 2 | 2 | 2 |
| 1aa⁴⁴⁹ | H | H | SO₃H | H | SO₃H | H | | | | | | |
| 1aa⁴⁵⁰ | H | SO₃H | H | H | SO₃H | H | | | | | | |
| 1aa⁴⁵¹ | H | SO₃H | H | H | H | SO₃H | CN | 2-Chloro ethyl | 2 | 2 | 2 | 2 |
| 1aa⁴⁵² | H | H | SO₃H | H | SO₃H | H | | | | | | |
| 1aa⁴⁵³ | H | SO₃H | H | H | SO₃H | H | | | | | | |
| 1aa⁴⁵⁴ | H | SO₃H | H | H | H | SO₃H | CN | 3-Chloro propyl | 2 | 2 | 2 | 2 |
| 1aa⁴⁵⁵ | H | H | SO₃H | H | SO₃H | H | | | | | | |
| 1aa⁴⁵⁶ | H | SO₃H | H | H | SO₃H | H | | | | | | |
| 1aa⁴⁵⁷ | H | SO₃H | H | H | H | SO₃H | CN | Tetrahydro furfuryl | 2 | 2 | 2 | 2 |
| 1aa⁴⁵⁸ | H | H | SO₃H | H | SO₃H | H | | | | | | |
| 1aa⁴⁵⁹ | H | SO₃H | H | H | SO₃H | H | | | | | | |
| 1aa⁴⁶⁰ | H | SO₃H | H | H | H | SO₃H | CN | 2-Furan-2-yl-ethyl | 2 | 2 | 2 | 2 |
| 1aa⁴⁶¹ | H | H | SO₃H | H | SO₃H | H | | | | | | |
| | | | | | | | | | | | | |
| 1aa⁴⁶² | H | SO₃H | H | H | SO₃H | H | | | | | | |
| 1aa⁴⁶³ | H | SO₃H | H | H | H | SO₃H | CN | 6-Hydroxy-1-[2-(2-hydroxy-ethyl sulfanyl)-ethyl] | 2 | 2 | 2 | 2 |
| 1aa⁴⁶⁴ | H | H | SO₃H | H | SO₃H | H | | | | | | |
| 1aa⁴⁶⁵ | H | SO₃H | H | H | SO₃H | H | | | | | | |
| 1aa⁴⁶⁶ | H | SO₃H | H | H | H | SO₃H | CN | 2-(2-tert-Butyl sulfanyl-ethane sulfonyl)-ethyl | 2 | 2 | 2 | 2 |
| 1aa⁴⁶⁷ | H | H | SO₃H | H | SO₃H | H | | | | | | |
| 1aa⁴⁶⁸ | H | SO₃H | H | H | SO₃H | H | | | | | | |
| 1aa⁴⁶⁹ | H | SO₃H | H | H | H | SO₃H | CN | 2-Hydroxy ethoxy propyl | 2 | 2 | 2 | 2 |
| 1aa⁴⁷⁰ | H | H | SO₃H | H | SO₃H | H | | | | | | |
| 1aa⁴⁷¹ | H | SO₃H | H | H | SO₃H | H | | | | | | |
| 1aa⁴⁷² | H | SO₃H | H | H | H | SO₃H | CN | 2-Hydroxy ethoxyethyl | 2 | 2 | 2 | 2 |
| 1aa⁴⁷³ | H | H | SO₃H | H | SO₃H | H | | | | | | |
| 1aa⁴⁷⁴ | H | SO₃H | H | H | SO₃H | H | | | | | | |
| 1aa⁴⁷⁵ | H | SO₃H | H | H | H | SO₃H | CN | 2-(Ethylsulfonyl)eth anol | 2 | 2 | 2 | 2 |
| 1aa⁴⁷⁶ | H | H | SO₃H | H | SO₃H | H | | | | | | |
| 1aa⁴⁷⁷ | H | SO₃H | H | H | SO₃H | H | | | | | | |
| 1aa⁴⁷⁸ | H | SO₃H | H | H | H | SO₃H | CN | 3-(2-Phenoxy-ethoxy)-propyl | 2 | 2 | 2 | 2 |
| 1aa⁴⁷⁹ | H | H | SO₃H | H | SO₃H | H | | | | | | |
| 1aa⁴⁸⁰ | H | SO₃H | H | H | SO₃H | H | | | | | | |
| 1aa⁴⁸¹ | H | SO₃H | H | H | H | SO₃H | CN | 3-Isopropoxy-propyl | 2 | 2 | 2 | 2 |
| 1aa⁴⁸² | H | H | SO₃H | H | SO₃H | H | | | | | | |
| 1aa⁴⁸³ | H | SO₃H | H | H | SO₃H | H | | | | | | |
| 1aa⁴⁸⁴ | H | SO₃H | H | H | H | SO₃H | CN | 3-Ethoxy propyl | 2 | 2 | 2 | 2 |
| 1aa⁴⁸⁵ | H | H | SO₃H | H | SO₃H | H | | | | | | |
| 1aa⁴⁸⁶ | H | SO₃H | H | H | SO₃H | H | | | | | | |
| 1aa⁴⁸⁷ | H | SO₃H | H | H | H | SO₃H | CONH₂ | Allyl | 2 | 2 | 2 | 2 |
| 1aa⁴⁸⁸ | H | H | SO₃H | H | SO₃H | H | | | | | | |
| 1aa⁴⁸⁹ | H | SO₃H | H | H | SO₃H | H | | | | | | |
| 1aa⁴⁹⁰ | H | SO₃H | H | H | H | SO₃H | CONH₂ | 2-Methoxy ethyl | 2 | 2 | 2 | 2 |
| 1aa⁴⁹¹ | H | H | SO₃H | H | SO₃H | H | | | | | | |
| 1aa⁴⁹² | H | SO₃H | H | H | SO₃H | H | | | | | | |
| 1aa⁴⁹³ | H | SO₃H | H | H | H | SO₃H | CONH₂ | 3-Methoxy propyl | 2 | 2 | 2 | 2 |
| 1aa⁴⁹⁴ | H | H | SO₃H | H | SO₃H | H | | | | | | |
| 1aa⁴⁹⁵ | H | SO₃H | H | H | SO₃H | H | | | | | | |
| 1aa⁴⁹⁶ | H | SO₃H | H | H | H | SO₃H | CONH₂ | 2-Methyl thioethyl | 2 | 2 | 2 | 2 |
| 1aa⁴⁹⁷ | H | H | SO₃H | H | SO₃H | H | | | | | | |
| 1aa⁴⁹⁸ | H | SO₃H | H | H | SO₃H | H | | | | | | |
| 1aa⁴⁹⁹ | H | SO₃H | H | H | H | SO₃H | CONH₂ | 2-Hydroxyethyl | 2 | 2 | 2 | 2 |
| 1aa⁵⁰⁰ | H | H | SO₃H | H | SO₃H | H | | | | | | |
| 1aa⁵⁰¹ | H | SO₃H | H | H | SO₃H | H | | | | | | |
| 1aa⁵⁰² | H | SO₃H | H | H | H | SO₃H | CONH₂ | 2-Fluoro ethyl | 2 | 2 | 2 | 2 |
| 1aa⁵⁰³ | H | H | SO₃H | H | SO₃H | H | | | | | | |
| 1aa⁵⁰⁴ | H | SO₃H | H | H | SO₃H | H | | | | | | |
| 1aa⁵⁰⁵ | H | SO₃H | H | H | H | SO₃H | CONH₂ | 2-Chloro ethyl | 2 | 2 | 2 | 2 |
| 1aa⁵⁰⁶ | H | H | SO₃H | H | SO₃H | H | | | | | | |
| 1aa⁵⁰⁷ | H | SO₃H | H | H | SO₃H | H | | | | | | |
| 1aa⁵⁰⁸ | H | SO₃H | H | H | H | SO₃H | CONH₂ | 3-Chloro propyl | 2 | 2 | 2 | 2 |
| 1aa⁵⁰⁹ | H | H | SO₃H | H | SO₃H | H | | | | | | |
| 1aa⁵¹⁰ | H | SO₃H | H | H | SO₃H | H | | | | | | |
| 1aa⁵¹¹ | H | SO₃H | H | H | H | SO₃H | CONH₂ | Tetrahydro furfuryl | 2 | 2 | 2 | 2 |
| 1aa⁵¹² | H | H | SO₃H | H | SO₃H | H | | | | | | |
| 1aa⁵¹³ | H | SO₃H | H | H | SO₃H | H | | | | | | |
| 1aa⁵¹⁴ | H | SO₃H | H | H | H | SO₃H | CONH₂ | 2-Furan-2-yl-ethyl | 2 | 2 | 2 | 2 |
| 1aa⁵¹⁵ | H | H | SO₃H | H | SO₃H | H | | | | | | |
| 1aa⁵¹⁶ | H | SO₃H | H | H | SO₃H | H | | | | | | |
| 1aa⁵¹⁷ | H | SO₃H | H | H | H | SO₃H | CONH₂ | 6-Hydroxy-1-[2-(2-hydroxy-ethyl sulfanyl)-ethyl] | 2 | 2 | 2 | 2 |
| 1aa⁵¹⁸ | H | H | SO₃H | H | SO₃H | H | | | | | | |
| 1aa⁵¹⁹ | H | SO₃H | H | H | SO₃H | H | | | | | | |
| 1aa⁵²⁰ | H | SO₃H | H | H | H | SO₃H | CONH₂ | 2-(2-tert-Butyl sulfanyl-ethane sulfonyl)-ethyl | 2 | 2 | 2 | 2 |
| 1aa⁵²¹ | H | H | SO₃H | H | SO₃H | H | | | | | | |
| 1aa⁵²² | H | SO₃H | H | H | SO₃H | H | | | | | | |
| 1aa⁵²³ | H | SO₃H | H | H | H | SO₃H | CONH₂ | 2-Hydroxy ethoxy propyl | 2 | 2 | 2 | 2 |
| 1aa⁵²⁴ | H | H | SO₃H | H | SO₃H | H | | | | | | |
| 1aa⁵²⁵ | H | SO₃H | H | H | SO₃H | H | | | | | | |
| 1aa⁵²⁶ | H | SO₃H | H | H | H | SO₃H | CONH₂ | 2-Hydroxy ethoxyethyl | 2 | 2 | 2 | 2 |
| 1aa⁵²⁷ | H | H | SO₃H | H | SO₃H | H | | | | | | |
| 1aa⁵²⁸ | H | SO₃H | H | H | SO₃H | H | | | | | | |
| 1aa⁵²⁹ | H | SO₃H | H | H | H | SO₃H | CONH₂ | 2-(Ethylsulfonyl)eth anol | 2 | 2 | 2 | 2 |
| 1aa⁵³⁰ | H | H | SO₃H | H | SO₃H | H | | | | | | |
| 1aa⁵³¹ | H | SO₃H | H | H | SO₃H | H | | | | | | |
| 1aa⁵³² | H | SO₃H | H | H | H | SO₃H | CONH₂ | 3-(2-Phenoxy-ethoxy)-propyl | 2 | 2 | 2 | 2 |
| 1aa⁵³³ | H | H | SO₃H | H | SO₃H | H | | | | | | |
| 1aa⁵³⁴ | H | SO₃H | H | H | SO₃H | H | | | | | | |
| 1aa⁵³⁵ | H | SO₃H | H | H | H | SO₃H | CONH₂ | 3-Isopropoxy-propyl | 2 | 2 | 2 | 2 |
| 1aa⁵³⁶ | H | H | SO₃H | H | SO₃H | H | | | | | | |
| 1aa⁵³⁷ | H | SO₃H | H | H | SO₃H | H | | | | | | |
| 1aa⁵³⁸ | H | SO₃H | H | H | H | SO₃H | CONH₂ | 3-Ethoxy propyl | 2 | 2 | 2 | 2 |
| 1aa⁵³⁹ | H | H | SO₃H | H | SO₃H | H | | | | | | |
| 1aa⁵⁴⁰ | H | SO₃H | H | H | SO₃H | H | | | | | | |
| 1aa⁵⁴¹ | H | SO₃H | H | H | H | SO₃H | CN | Allyl | 3 | 4 | 3 | 4 |
| 1aa⁵⁴² | H | H | SO₃H | H | SO₃H | H | | | | | | |
| 1aa⁵⁴³ | H | SO₃H | H | H | SO₃H | H | | | | | | |
| 1aa⁵⁴⁴ | H | SO₃H | H | H | H | SO₃H | CN | 2-Methoxy ethyl | 3 | 4 | 3 | 4 |
| 1aa⁵⁴⁵ | H | H | SO₃H | H | SO₃H | H | | | | | | |
| 1aa⁵⁴⁶ | H | SO₃H | H | H | SO₃H | H | | | | | | |
| 1aa⁵⁴⁷ | H | SO₃H | H | H | H | SO₃H | CN | 3-Methoxy propyl | 3 | 4 | 3 | 4 |
| 1aa⁵⁴⁸ | H | H | SO₃H | H | SO₃H | H | | | | | | |
| 1aa⁵⁴⁹ | H | SO₃H | H | H | SO₃H | H | | | | | | |
| 1aa⁵⁵⁰ | H | SO₃H | H | H | H | SO₃H | CN | 2-Methyl thioethyl | 3 | 4 | 3 | 4 |
| 1aa⁵⁵¹ | H | H | SO₃H | H | SO₃H | H | | | | | | |
| 1aa⁵⁵² | H | SO₃H | H | H | SO₃H | H | | | | | | |
| 1aa⁵⁵³ | H | SO₃H | H | H | H | SO₃H | CN | 2-Hydroxy ethyl | 3 | 4 | 3 | 4 |
| 1aa⁵⁵⁴ | H | H | SO₃H | H | SO₃H | H | | | | | | |
| 1aa⁵⁵⁵ | H | SO₃H | H | H | SO₃H | H | | | | | | |
| 1aa⁵⁵⁶ | H | SO₃H | H | H | H | SO₃H | CN | 2-Fluoro ethyl | 3 | 4 | 3 | 4 |
| 1aa⁵⁵⁷ | H | H | SO₃H | H | SO₃H | H | | | | | | |
| 1aa⁵⁵⁸ | H | SO₃H | H | H | SO₃H | H | | | | | | |
| 1aa⁵⁵⁹ | H | SO₃H | H | H | H | SO₃H | CN | 2-Chloro ethyl | 3 | 4 | 3 | 4 |
| 1aa⁵⁶⁰ | H | H | SO₃H | H | SO₃H | H | | | | | | |
| 1aa⁵⁶¹ | H | SO₃H | H | H | SO₃H | H | | | | | | |
| 1aa⁵⁶² | H | SO₃H | H | H | H | SO₃H | CN | 3-Chloro propyl | 3 | 4 | 3 | 4 |
| 1aa⁵⁶³ | H | H | SO₃H | H | SO₃H | H | | | | | | |
| 1aa⁵⁶⁴ | H | SO₃H | H | H | SO₃H | H | | | | | | |
| 1aa⁵⁶⁵ | H | SO₃H | H | H | H | SO₃H | CN | Tetrahydro furfuryl | 3 | 4 | 3 | 4 |
| 1aa⁵⁶⁶ | H | H | SO₃H | H | SO₃H | H | | | | | | |
| 1aa⁵⁶⁷ | H | SO₃H | H | H | SO₃H | H | | | | | | |
| 1aa⁵⁶⁸ | H | SO₃H | H | H | H | SO₃H | CN | 2-Furan-2-yl-ethyl | 3 | 4 | 3 | 4 |
| 1aa⁵⁶⁹ | H | H | SO₃H | H | SO₃H | H | | | | | | |
| 1aa⁵⁷⁰ | H | SO₃H | H | H | SO₃H | H | | | | | | |
| 1aa⁵⁷¹ | H | SO₃H | H | H | H | SO₃H | CN | 6-Hydroxy-1-[2-(2-hydroxy-ethyl sulfanyl)-ethyl] | 3 | 4 | 3 | 4 |
| 1aa⁵⁷² | H | H | SO₃H | H | SO₃H | H | | | | | | |
| 1aa⁵⁷³ | H | SO₃H | H | H | SO₃H | H | | | | | | |
| 1aa⁵⁷⁴ | H | SO₃H | H | H | H | SO₃H | CN | 2-(2-tert-Butyl sulfanyl-ethane sulfonyl)-ethyl | 3 | 4 | 3 | 4 |
| 1aa⁵⁷⁵ | H | H | SO₃H | H | SO₃H | H | | | | | | |
| 1aa⁵⁷⁶ | H | SO₃H | H | H | SO₃H | H | | | | | | |
| 1aa⁵⁷⁷ | H | SO₃H | H | H | H | SO₃H | CN | 2-Hydroxyethoxy propyl | 3 | 4 | 3 | 4 |
| 1aa⁵⁷⁸ | H | H | SO₃H | H | SO₃H | H | | | | | | |
| 1aa⁵⁷⁹ | H | SO₃H | H | H | SO₃H | H | | | | | | |
| 1aa⁵⁸⁰ | H | SO₃H | H | H | H | SO₃H | CN | 2-Hydroxy ethoxyethyl | 3 | 4 | 3 | 4 |
| 1aa⁵⁸¹ | H | H | SO₃H | H | SO₃H | H | | | | | | |
| 1aa⁵⁸² | H | SO₃H | H | H | SO₃H | H | | | | | | |
| 1aa⁵⁸³ | H | SO₃H | H | H | H | SO₃H | CN | 2-(Ethylsulfonyl)eth anol | 3 | 4 | 3 | 4 |
| 1aa⁵⁸⁴ | H | H | SO₃H | H | SO₃H | H | | | | | | |
| 1aa⁵⁸⁵ | H | SO₃H | H | H | SO₃H | H | | | | | | |
| 1aa⁵⁸⁶ | H | SO₃H | H | H | H | SO₃H | CN | 3-(2-Phenoxy-ethoxy)-propyl | 3 | 4 | 3 | 4 |
| 1aa⁵⁸⁷ | H | H | SO₃H | H | SO₃H | H | | | | | | |
| 1aa⁵⁸⁸ | H | SO₃H | H | H | SO₃H | H | | | | | | |
| 1aa⁵⁸⁹ | H | SO₃H | H | H | H | SO₃H | CN | 3-Isopropoxy-propyl | 3 | 4 | 3 | 4 |
| 1aa⁵⁹⁰ | H | H | SO₃H | H | SO₃H | H | | | | | | |
| 1aa⁵⁹¹ | H | SO₃H | H | H | SO₃H | H | | | | | | |
| 1aa⁵⁹² | H | SO₃H | H | H | H | SO₃H | CN | 3-Ethoxy-propyl | 3 | 4 | 3 | 4 |
| 1aa⁵⁹³ | H | H | SO₃H | H | SO₃H | H | | | | | | |
| 1aa⁵⁹⁴ | H | SO₃H | H | H | SO₃H | H | | | | | | |
| 1aa⁵⁹⁵ | H | SO₃H | H | H | H | SO₃H | CONH₂ | Allyl | 3 | 4 | 3 | 4 |
| 1aa⁵⁹⁶ | H | H | SO₃H | H | SO₃H | H | | | | | | |
| 1aa⁵⁹⁷ | H | SO₃H | H | H | SO₃H | H | | | | | | |
| 1aa⁵⁹⁸ | H | SO₃H | H | H | H | SO₃H | CONH₂ | 2-Methoxy ethyl | 3 | 4 | 3 | 4 |
| 1aa⁵⁹⁹ | H | H | SO₃H | H | SO₃H | H | | | | | | |
| 1aa⁶⁰⁰ | H | SO₃H | H | H | SO₃H | H | | | | | | |
| 1aa⁶⁰¹ | H | SO₃H | H | H | H | SO₃H | CONH₂ | 3-Methoxy propyl | 3 | 4 | 3 | 4 |
| 1aa⁶⁰² | H | H | SO₃H | H | SO₃H | H | | | | | | |
| 1aa⁶⁰³ | H | SO₃H | H | H | SO₃H | H | | | | | | |
| 1aa⁶⁰⁴ | H | SO₃H | H | H | H | SO₃H | CONH₂ | 2-Methyl thioethyl | 3 | 4 | 3 | 4 |
| 1aa⁶⁰⁵ | H | H | SO₃H | H | SO₃H | H | | | | | | |
| 1aa⁶⁰⁶ | H | SO₃H | H | H | SO₃H | H | | | | | | |
| 1aa⁶⁰⁷ | H | SO₃H | H | H | H | SO₃H | CONH₂ | 2-Hydroxy ethyl | 3 | 4 | 3 | 4 |
| 1aa⁶⁰⁸ | H | H | SO₃H | H | SO₃H | H | | | | | | |
| 1aa⁶⁰⁹ | H | SO₃H | H | H | SO₃H | H | | | | | | |
| 1aa⁶¹⁰ | H | SO₃H | H | H | H | SO₃H | CONH₂ | 2-Fluoro ethyl | 3 | 4 | 3 | 4 |
| 1aa⁶¹¹ | H | H | SO₃H | H | SO₃H | H | | | | | | |
| 1aa⁶¹² | H | SO₃H | H | H | SO₃H | H | | | | | | |
| 1aa⁶¹³ | H | SO₃H | H | H | H | SO₃H | CONH₂ | 2-Chloro ethyl | 3 | 4 | 3 | 4 |
| 1aa⁶¹⁴ | H | H | SO₃H | H | SO₃H | H | | | | | | |
| 1aa⁶¹⁵ | H | SO₃H | H | H | SO₃H | H | | | | | | |
| 1aa⁶¹⁶ | H | SO₃H | H | H | H | SO₃H | CONH₂ | 3-Chloro propyl | 3 | 4 | 3 | 4 |
| 1aa⁶¹⁷ | H | H | SO₃H | H | SO₃H | H | | | | | | |
| 1aa⁶¹⁸ | H | SO₃H | H | H | SO₃H | H | | | | | | |
| 1aa⁶¹⁹ | H | SO₃H | H | H | H | SO₃H | CONH₂ | Tetrahydro furfuryl | 3 | 4 | 3 | 4 |
| 1aa⁶²⁰ | H | H | SO₃H | H | SO₃H | H | | | | | | |
| 1aa⁶²¹ | H | SO₃H | H | H | SO₃H | H | | | | | | |
| 1aa⁶²² | H | SO₃H | H | H | H | SO₃H | CONH₂ | 2-Furan-2-yl-ethyl | 3 | 4 | 3 | 4 |
| 1aa⁶²³ | H | H | SO₃H | H | SO₃H | H | | | | | | |
| 1aa⁶²⁴ | H | SO₃H | H | H | SO₃H | H | | | | | | |
| 1aa⁶²⁵ | H | SO₃H | H | H | H | SO₃H | CONH₂ | 6-Hydroxy-1-[2-(2-hydroxy-ethyl sulfanyl)-ethyl] | 3 | 4 | 3 | 4 |
| 1aa⁶²⁶ | H | H | SO₃H | H | SO₃H | H | | | | | | |
| 1aa⁶²⁷ | H | SO₃H | H | H | SO₃H | H | | | | | | |
| 1aa⁶²⁸ | H | SO₃H | H | H | H | SO₃H | CONH₂ | 2-(2-tert-Butyl sulfanyl-ethane sulfonyl)-ethyl | 3 | 4 | 3 | 4 |
| 1aa⁶²⁹ | H | H | SO₃H | H | SO₃H | H | | | | | | |
| 1aa⁶³⁰ | H | SO₃H | H | H | SO₃H | H | | | | | | |
| 1aa⁶³¹ | H | SO₃H | H | H | H | SO₃H | CONH₂ | 2-Hydroxy ethoxy propyl | 3 | 4 | 3 | 4 |
| 1aa⁶³² | H | H | SO₃H | H | SO₃H | H | | | | | | |
| 1aa⁶³³ | H | SO₃H | H | H | SO₃H | H | | | | | | |
| 1aa⁶³⁴ | H | SO₃H | H | H | H | SO₃H | CONH₂ | 2-Hydroxy ethoxyethyl | 3 | 4 | 3 | 4 |
| 1aa⁶³⁵ | H | H | SO₃H | H | SO₃H | H | | | | | | |
| 1aa⁶³⁶ | H | SO₃H | H | H | SO₃H | H | | | | | | |
| 1aa⁶³⁷ | H | SO₃H | H | H | H | SO₃H | CONH₂ | 2-(Ethylsulfonyl)eth anol | 3 | 4 | 3 | 4 |
| 1aa⁶³⁸ | H | H | SO₃H | H | SO₃H | H | | | | | | |
| 1aa⁶³⁹ | H | SO₃H | H | H | SO₃H | H | | | | | | |
| 1aa⁶⁴⁰ | H | SO₃H | H | H | H | SO₃H | CONH₂ | 3-(2-Phenoxy-ethoxy)-propyl | 3 | 4 | 3 | 4 |
| 1aa⁶⁴¹ | H | H | SO₃H | H | SO₃H | H | | | | | | |
| 1aa⁶⁴² | H | SO₃H | H | H | SO₃H | H | | | | | | |
| 1aa⁵⁵⁶ | H | SO₃H | H | H | H | SO₃H | CONH₂ | 3-Isopropoxy-propyl | 3 | 4 | 3 | 4 |
| 1aa⁶⁴⁴ | H | H | SO₃H | H | SO₃H | H | | | | | | |
| 1aa⁶⁴⁵ | H | SO₃H | H | H | SO₃H | H | | | | | | |
| 1aa⁶⁴⁶ | H | SO₃H | H | H | H | SO₃H | CONH₂ | 3-Ethoxy-propyl | 3 | 4 | 3 | 4 |
| 1aa⁶⁴⁷ | H | H | SO₃H | H | SO₃H | H | | | | | | |
| 1aa⁶⁴⁸ | H | SO₃H | H | H | SO₃H | H | | | | | | |
| 1aa⁶⁴⁹ | H | SO₃H | H | H | H | SO₃H | CN | Allyl | 3 | 3 | 3 | 3 |
| 1aa⁶⁵⁰ | H | H | SO₃H | H | SO₃H | H | | | | | | |
| 1aa⁶⁵¹ | H | SO₃H | H | H | SO₃H | H | | | | | | |
| 1aa⁶⁵² | H | SO₃H | H | H | H | SO₃H | CN | 2-Methoxy ethyl | 3 | 3 | 3 | 3 |
| 1aa⁶⁵³ | H | H | SO₃H | H | SO₃H | H | | | | | | |
| 1aa⁶⁵⁴ | H | SO₃H | H | H | SO₃H | H | | | | | | |
| 1aa⁶⁵⁵ | H | SO₃H | H | H | H | SO₃H | CN | 3-Methoxy propyl | 3 | 3 | 3 | 3 |
| 1aa⁶⁵⁶ | H | H | SO₃H | H | SO₃H | H | | | | | | |
| 1aa⁶⁵⁷ | H | SO₃H | H | H | SO₃H | H | | | | | | |
| 1aa⁶⁵⁸ | H | SO₃H | H | H | H | SO₃H | CN | 2-Methyl thioethyl | 3 | 3 | 3 | 3 |
| 1aa⁶⁵⁹ | H | H | SO₃H | H | SO₃H | H | | | | | | |
| 1aa⁶⁶⁰ | H | SO₃H | H | H | SO₃H | H | | | | | | |
| 1aa⁶⁶¹ | H | SO₃H | H | H | H | SO₃H | CN | 2-Hydroxy ethyl | 3 | 3 | 3 | 3 |
| 1aa⁶⁶² | H | H | SO₃H | H | SO₃H | H | | | | | | |
| 1aa⁶⁶³ | H | SO₃H | H | H | SO₃H | H | | | | | | |
| 1aa⁶⁶⁴ | H | SO₃H | H | H | H | SO₃H | CN | 2-Fluoro ethyl | 3 | 3 | 3 | 3 |
| 1aa⁶⁶⁵ | H | H | SO₃H | H | SO₃H | H | | | | | | |
| 1aa⁶⁶⁶ | H | SO₃H | H | H | SO₃H | H | | | | | | |
| 1aa⁶⁶⁷ | H | SO₃H | H | H | H | SO₃H | CN | 2-Chloro ethyl | 3 | 3 | 3 | 3 |
| 1aa⁶⁶⁸ | H | H | SO₃H | H | SO₃H | H | | | | | | |
| 1aa⁶⁶⁹ | H | SO₃H | H | H | SO₃H | H | | | | | | |
| 1aa⁶⁷⁰ | H | SO₃H | H | H | H | SO₃H | CN | 3-Chloro propyl | 3 | 3 | 3 | 3 |
| 1aa⁶⁷¹ | H | H | SO₃H | H | SO₃H | H | | | | | | |
| 1aa⁶⁷² | H | SO₃H | H | H | SO₃H | H | | | | | | |
| 1aa⁶⁷³ | H | SO₃H | H | H | H | SO₃H | CN | Tetrahydro furfuryl | 3 | 3 | 3 | 3 |
| 1aa⁶⁷⁴ | H | H | SO₃H | H | SO₃H | H | | | | | | |
| 1aa⁶⁷⁵ | H | SO₃H | H | H | SO₃H | H | | | | | | |
| 1aa⁶⁷⁶ | H | SO₃H | H | H | H | SO₃H | CN | 2-Furan-2-yl-ethyl | 3 | 3 | 3 | 3 |
| 1aa⁶⁷⁷ | H | H | SO₃H | H | SO₃H | H | | | | | | |
| 1aa⁶⁷⁸ | H | SO₃H | H | H | SO₃H | H | | | | | | |
| 1aa⁶⁷⁹ | H | SO₃H | H | H | H | SO₃H | CN | 6-Hydroxy-1-[2-(2-hydroxy-ethyl sulfanyl)-ethyl] | 3 | 3 | 3 | 3 |
| 1aa⁶⁸⁰ | H | H | SO₃H | H | SO₃H | H | | | | | | |
| 1aa⁶⁸¹ | H | SO₃H | H | H | SO₃H | H | | | | | | |
| 1aa⁶⁸² | H | SO₃H | H | H | H | SO₃H | CN | 2-(2-tert-Butyl sulfanyl-ethane sulfonyl)-ethyl | 3 | 3 | 3 | 3 |
| 1aa⁶⁸³ | H | H | SO₃H | H | SO₃H | H | | | | | | |
| 1aa⁶⁸⁴ | H | SO₃H | H | H | SO₃H | H | | | | | | |
| 1aa⁶⁸⁵ | H | SO₃H | H | H | H | SO₃H | CN | 2-Hydroxy ethoxy propyl | 3 | 3 | 3 | 3 |
| 1aa⁶⁸⁶ | H | H | SO₃H | H | SO₃H | H | | | | | | |
| 1aa⁶⁸⁷ | H | SO₃H | H | H | SO₃H | H | | | | | | |
| 1aa⁶⁸⁸ | H | SO₃H | H | H | H | SO₃H | CN | 2-Hydroxy ethoxyethyl | 3 | 3 | 3 | 3 |
| 1aa⁶⁸⁹ | H | H | SO₃H | H | SO₃H | H | | | | | | |
| 1aa⁶⁹⁰ | H | SO₃H | H | H | SO₃H | H | | | | | | |
| 1aa⁶⁹¹ | H | SO₃H | H | H | H | SO₃H | CN | 2-(Ethylsulfonyl)ethanol | 3 | 3 | 3 | 3 |
| 1aa⁶⁹² | H | H | SO₃H | H | SO₃H | H | | | | | | |
| 1aa⁶⁹³ | H | SO₃H | H | H | SO₃H | H | | | | | | |
| 1aa⁶⁹⁴ | H | SO₃H | H | H | H | SO₃H | CN | 3-(2-Phenoxy-ethoxy)-propyl | 3 | 3 | 3 | 3 |
| 1aa⁶⁹⁵ | H | H | SO₃H | H | SO₃H | H | | | | | | |
| 1aa⁶⁹⁶ | H | SO₃H | H | H | SO₃H | H | | | | | | |
| 1aa⁶⁹⁷ | H | SO₃H | H | H | H | SO₃H | CN | 3-Isopropoxy-propyl | 3 | 3 | 3 | 3 |
| 1aa⁶⁹⁸ | H | H | SO₃H | H | SO₃H | H | | | | | | |
| 1aa⁶⁹⁹ | H | SO₃H | H | H | SO₃H | H | | | | | | |
| 1aa⁷⁰⁰ | H | SO₃H | H | H | H | SO₃H | CN | 3-Ethoxy propyl | 3 | 3 | 3 | 3 |
| 1aa⁷⁰¹ | H | H | SO₃H | H | SO₃H | H | | | | | | |
| 1aa⁷⁰² | H | SO₃H | H | H | SO₃H | H | | | | | | |
| 1aa⁷⁰³ | H | SO₃H | H | H | H | SO₃H | CONH₂ | Allyl | 3 | 3 | 3 | 3 |
| 1aa⁷⁰⁴ | H | H | SO₃H | H | SO₃H | H | | | | | | |
| 1aa⁷⁰⁵ | H | SO₃H | H | H | SO₃H | H | | | | | | |
| 1aa⁷⁰⁶ | H | SO₃H | H | H | H | SO₃H | CONH₂ | 2-Methoxy ethyl | 3 | 3 | 3 | 3 |
| 1aa⁷⁰⁷ | H | H | SO₃H | H | SO₃H | H | | | | | | |
| 1aa⁷⁰⁸ | H | SO₃H | H | H | SO₃H | H | | | | | | |
| 1aa⁷⁰⁹ | H | SO₃H | H | H | H | SO₃H | CONH₂ | 3-Methoxy propyl | 3 | 3 | 3 | 3 |
| 1aa⁷¹⁰ | H | H | SO₃H | H | SO₃H | H | | | | | | |
| 1aa⁷¹¹ | H | SO₃H | H | H | SO₃H | H | | | | | | |
| 1aa⁷¹² | H | SO₃H | H | H | H | SO₃H | CONH₂ | 2-Methyl thioethyl | 3 | 3 | 3 | 3 |
| 1aa⁷¹³ | H | H | SO₃H | H | SO₃H | H | | | | | | |
| 1aa⁷¹⁴ | H | SO₃H | H | H | SO₃H | H | | | | | | |
| 1aa⁷¹⁵ | H | SO₃H | H | H | H | SO₃H | CONH₂ | 2-Hydroxy ethyl | 3 | 3 | 3 | 3 |
| 1aa⁷¹⁶ | H | H | SO₃H | H | SO₃H | H | | | | | | |
| 1aa⁷¹⁷ | H | SO₃H | H | H | SO₃H | H | | | | | | |
| 1aa⁷¹⁸ | H | SO₃H | H | H | H | SO₃H | CONH₂ | 2-Fluoro ethyl | 3 | 3 | 3 | 3 |
| 1aa⁷¹⁹ | H | H | SO₃H | H | SO₃H | H | | | | | | |
| 1aa⁷²⁰ | H | SO₃H | H | H | SO₃H | H | | | | | | |
| 1aa⁷²¹ | H | SO₃H | H | H | H | SO₃H | CONH₂ | 2-Chloro ethyl | 3 | 3 | 3 | 3 |
| 1aa⁷²² | H | H | SO₃H | H | SO₃H | H | | | | | | |
| 1aa⁷²³ | H | SO₃H | H | H | SO₃H | H | | | | | | |
| 1aa⁷²⁴ | H | SO₃H | H | H | H | SO₃H | CONH₂ | 3-Chloro propyl | 3 | 3 | 3 | 3 |
| 1aa⁷²⁵ | H | H | SO₃H | H | SO₃H | H | | | | | | |
| 1aa⁷²⁶ | H | SO₃H | H | H | SO₃H | H | | | | | | |
| 1aa⁷²⁷ | H | SO₃H | H | H | H | SO₃H | CONH₂ | Tetrahydro furfuryl | 3 | 3 | 3 | 3 |
| 1aa⁷²⁸ | H | H | SO₃H | H | SO₃H | H | | | | | | |
| 1aa⁷²⁹ | H | SO₃H | H | H | SO₃H | H | | | | | | |
| 1aa⁷³⁰ | H | SO₃H | H | H | H | SO₃H | CONH₂ | 2-Furan-2-yl ethyl | 3 | 3 | 3 | 3 |
| 1aa⁷³¹ | H | H | SO₃H | H | SO₃H | H | | | | | | |
| 1aa⁷³² | H | SO₃H | H | H | SO₃H | H | | | | | | |
| 1aa⁷³³ | H | SO₃H | H | H | H | SO₃H | CONH₂ | 6-Hydroxy-1-[2-(2-hydroxy-ethyl sulfanyl)-ethyl] | 3 | 3 | 3 | 3 |
| 1aa⁷³⁴ | H | H | SO₃H | H | SO₃H | H | | | | | | |
| 1aa⁷³⁵ | H | SO₃H | H | H | SO₃H | H | | | | | | |
| 1aa⁷³⁶ | H | SO₃H | H | H | H | SO₃H | CONH₂ | 2-(2-tert-Butyl sulfanyl-ethane sulfonyl)-ethyl | 3 | 3 | 3 | 3 |
| 1aa⁷³⁷ | H | H | SO₃H | H | SO₃H | H | | | | | | |
| 1aa⁷³⁸ | H | SO₃H | H | H | SO₃H | H | | | | | | |
| 1aa⁷³⁹ | H | SO₃H | H | H | H | SO₃H | CONH₂ | 2-Hydroxy ethoxy propyl | 3 | 3 | 3 | 3 |
| 1aa⁷⁴⁰ | H | H | SO₃H | H | SO₃H | H | | | | | | |
| 1aa⁷⁴¹ | H | SO₃H | H | H | SO₃H | H | | | | | | |
| 1aa⁷⁴² | H | SO₃H | H | H | H | SO₃H | CONH₂ | 2-Hydroxy ethoxyethyl | 3 | 3 | 3 | 3 |
| 1aa⁷⁴³ | H | H | SO₃H | H | SO₃H | H | | | | | | |
| 1aa⁷⁴⁴ | H | SO₃H | H | H | SO₃H | H | | | | | | |
| 1aa⁷⁴⁵ | H | SO₃H | H | H | H | SO₃H | CONH₂ | 2-(Ethylsulfonyl)eth anol | 3 | 3 | 3 | 3 |
| 1aa⁷⁴⁶ | H | H | SO₃H | H | SO₃H | H | | | | | | |
| 1aa⁷⁴⁷ | H | SO₃H | H | H | SO₃H | H | | | | | | |
| 1aa⁷⁴⁸ | H | SO₃H | H | H | H | SO₃H | CONH₂ | 3-(2-Phenoxy-ethoxy)-propyl | 3 | 3 | 3 | 3 |
| 1aa⁷⁴⁹ | H | H | SO₃H | H | SO₃H | H | | | | | | |
| 1aa⁷⁵⁰ | H | SO₃H | H | H | SO₃H | H | | | | | | |
| 1aa⁷⁵¹ | H | SO₃H | H | H | H | SO₃H | CONH₂ | 3-Isopropoxy-propyl | 3 | 3 | 3 | 3 |
| 1aa⁷⁵² | H | H | SO₃H | H | SO₃H | H | | | | | | |
| 1aa⁷⁵³ | H | SO₃H | H | H | SO₃H | H | | | | | | |
| 1aa⁷⁵⁴ | H | SO₃H | H | H | H | SO₃H | CONH₂ | 3-Ethoxypropyl | 3 | 3 | 3 | 3 |
| 1aa⁷⁵⁵ | H | H | SO₃H | H | SO₃H | H | | | | | | |
| 1aa⁷⁵⁶ | H | SO₃H | H | H | SO₃H | H | | | | | | |

Further particularly preferred embodiments of the present invention are the dyes of formula (1ab) 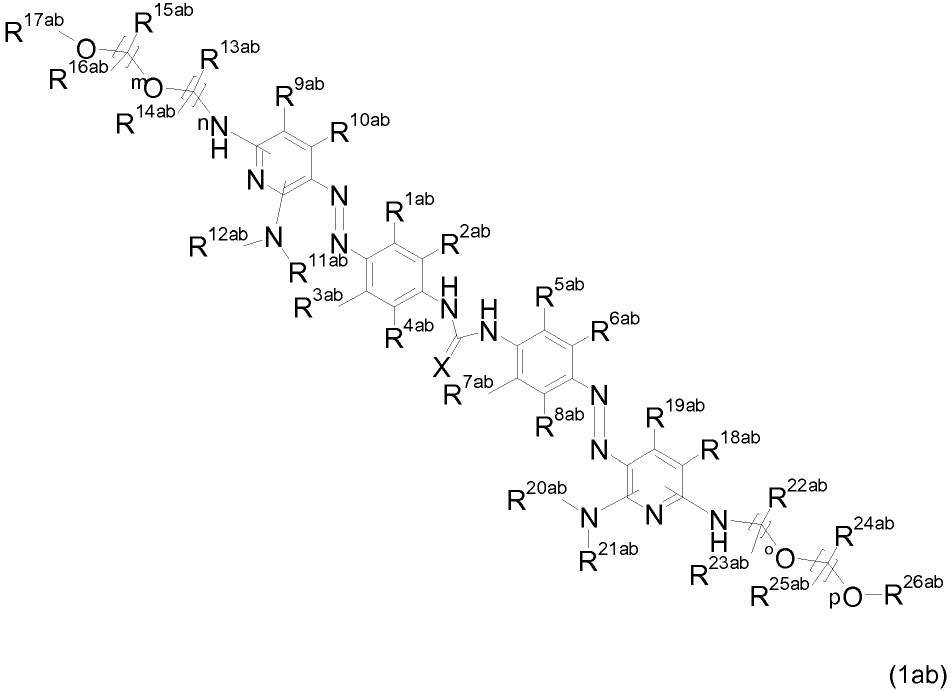 wherein
X is O,
R^{1ab}, R^{2ab}, R^{3ab}, R^{4ab}, R^{5ab}, R^{6ab}, R^{7ab} and R^{8ab} independent of each other is SO₃M, hydrogen, alkyl or alkoxy, whereby at least two of them are SO₃M,
R^{9ab} and R^{18ab} independent of each other is cyano or carbamoyl,
R^{10ab} and R^{19ab} is methyl,
m, n, o and p independent of each other is an integer of 2, 3 or 4,
R^{13ab}, R^{14ab}, R^{15ab} R^{16ab}, R^{22ab}, R^{23ab}, R^{24ab}, R^{25ab}, R^{11ab}, R^{17ab}, R^{26ab} and R^{20ab} is hydrogen,
R^{12ab} and R^{21ab} independent of each other is hydrogen, methyl, ethyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentan-2-yl, 2-ethylhexyl, 2,2-dimethylpropyl, phenyl, benzyl, 2-methoxyethyl, 3-methoxypropyl, 2-hydroxyethyl, 2-(methylthio)ethyl, 2-fluoroethyl, 2-chloroethyl, 3-chloropropyl, tetrahydrofurfuryl, 2-furan-2-yl-ethyl, 6-hydroxy-1-[2-(2-hydroxyethylsulfanyl)-ethyl], 2-(2-tertbutylsulfanylethanesulfonyl)-ethyl, 2-(ethylsulfonyl)ethanol, 2-hydroxyethoxypropyl, 2-hydroxyethoxyethyl, 2-(ethyl sulfonyl)ethanol, 3-(2-phenoxy-ethoxy)-propyl, 3-isopropoxy-propyl, 3-ethoxy-propyl or 3-ethoxybutyl
   and
   M is hydrogen, sodium, potassium, lithium or ammonium.

Examples of preferred dyes of formula (1ab) are the compounds of the formulae (1ab¹ to 1ab⁷⁵⁶):

| Structure | R^{1ab} | R^{3ab} | R^{4ab} | R^{6ab} | R^{7ab} | R^{8ab} | R^{9a}b/ R^{18ab} | R^{12ab}/ R^{21ab} | m | n | o | p |
|---|---|---|---|---|---|---|---|---|---|---|---|---|
| 1ab¹ | H | SO₃H | H | H | H | SO₃H | CN | H | 2 | 2 | 2 | 2 |
| 1ab² | H | H | SO₃H | H | SO₃H | H | | | | | | |
| 1ab³ | H | SO₃H | H | H | SO₃H | H | | | | | | |
| 1ab⁴ | H | SO₃H | H | H | H | SO₃H | CN | Methyl | 2 | 2 | 2 | 2 |
| 1ab⁵ | H | H | SO₃H | H | SO₃H | H | | | | | | |
| 1ab⁶ | H | SO₃H | H | H | SO₃H | H | | | | | | |
| 1ab⁷ | H | SO₃H | H | H | H | SO₃H | CN | Ethyl | 2 | 2 | 2 | 2 |
| 1ab⁸ | H | H | SO₃H | H | SO₃H | H | | | | | | |
| 1ab⁹ | H | SO₃H | H | H | SO₃H | H | | | | | | |
| 1ab¹⁰ | H | SO₃H | H | H | H | SO₃H | CN | Propyl | 2 | 2 | 2 | 2 |
| 1ab¹¹ | H | H | SO₃H | H | SO₃H | H | | | | | | |
| 1ab¹² | H | SO₃H | H | H | SO₃H | H | | | | | | |
| 1ab¹³ | H | SO₃H | H | H | H | SO₃H | CN | Butyl | 2 | 2 | 2 | 2 |
| 1ab¹⁴ | H | H | SO₃H | H | SO₃H | H | | | | | | |
| 1ab¹⁵ | H | SO₃H | H | H | SO₃H | H | | | | | | |
| 1ab¹⁶ | H | SO₃H | H | H | H | SO₃H | CN | Pentyl | 2 | 2 | 2 | 2 |
| 1ab¹⁷ | H | H | SO₃H | H | SO₃H | H | | | | | | |
| 1ab¹⁸ | H | SO₃H | H | H | SO₃H | H | | | | | | |
| 1ab¹⁹ | H | SO₃H | H | H | H | SO₃H | CN | Hexyl | 2 | 2 | 2 | 2 |
| 1ab²⁰ | H | H | SO₃H | H | SO₃H | H | | | | | | |
| 1ab²¹ | H | SO₃H | H | H | SO₃H | H | | | | | | |
| 1ab²² | H | SO₃H | H | H | H | SO₃H | CN | Cyclobutyl | 2 | 2 | 2 | 2 |
| 1ab²² | H | H | SO₃H | H | SO₃H | H | | | | | | |
| 1ab²⁴ | H | SO₃H | H | H | SO₃H | H | | | | | | |
| 1ab²⁵ | H | SO₃H | H | H | H | SO₃H | CN | Cyclopentyl | 2 | 2 | 2 | 2 |
| 1ab²⁶ | H | H | SO₃H | H | SO₃H | H | | | | | | |
| 1ab²⁷ | H | SO₃H | H | H | SO₃H | H | | | | | | |
| 1ab²⁸ | H | SO₃H | H | H | H | SO₃H | CN | Cyclohexyl | 2 | 2 | 2 | 2 |
| 1ab²⁹ | H | H | SO₃H | H | SO₃H | H | | | | | | |
| 1ab³⁰ | H | SO₃H | H | H | SO₃H | H | | | | | | |
| 1ab³¹ | H | SO₃H | H | H | H | SO₃H | CN | 2-Methyl cyclohexyl | 2 | 2 | 2 | 2 |
| 1ab³² | H | H | SO₃H | H | SO₃H | H | | | | | | |
| 1ab³³ | H | SO₃H | H | H | SO₃H | H | | | | | | |
| 1ab³⁴ | H | SO₃H | H | H | H | SO₃H | CN | 3-Methyl cyclohexyl | 2 | 2 | 2 | 2 |
| 1ab³⁵ | H | H | SO₃H | H | SO₃H | H | | | | | | |
| 1ab³⁶ | H | SO₃H | H | H | SO₃H | H | | | | | | |
| 1ab³⁷ | H | SO₃H | H | H | H | SO₃H | CN | Isopropyl | 2 | 2 | 2 | 2 |
| 1ab³⁸ | H | H | SO₃H | H | SO₃H | H | | | | | | |
| 1ab³⁹ | H | SO₃H | H | H | SO₃H | H | | | | | | |
| 1ab⁴⁰ | H | SO₃H | H | H | H | SO₃H | CN | Sec-butyl | 2 | 2 | 2 | 2 |
| 1ab⁴¹ | H | H | SO₃H | H | SO₃H | H | | | | | | |
| 1ab⁴² | H | SO₃H | H | H | SO₃H | H | | | | | | |
| 1ab⁴³ | H | SO₃H | H | H | H | SO₃H | CN | 2-Methyl butyl | 2 | 2 | 2 | 2 |
| 1ab⁴⁴ | H | H | SO₃H | H | SO₃H | H | | | | | | |
| 1ab⁴⁵ | H | SO₃H | H | H | SO₃H | H | | | | | | |
| 1ab⁴⁶ | H | SO₃H | H | H | H | SO₃H | CN | 1-Ethyl propyl | 2 | 2 | 2 | 2 |
| 1ab⁴⁷ | H | H | SO₃H | H | SO₃H | H | | | | | | |
| 1ab⁴⁸ | H | SO₃H | H | H | SO₃H | H | | | | | | |
| 1ab⁴⁹ | H | SO₃H | H | H | H | SO₃H | CN | 1,2-Dimethyl propyl | 2 | 2 | 2 | 2 |
| 1ab⁵⁰ | H | H | SO₃H | H | SO₃H | H | | | | | | |
| 1ab⁵¹ | H | SO₃H | H | H | SO₃H | H | | | | | | |
| 1ab⁵² | H | SO₃H | H | H | H | SO₃H | CN | Tert-butyl | 2 | 2 | 2 | 2 |
| 1ab⁵³ | H | H | SO₃H | H | SO₃H | H | | | | | | |
| 1ab⁵⁴ | H | SO₃H | H | H | SO₃H | H | | | | | | |
| 1ab⁵⁵ | H | SO₃H | H | H | H | SO₃H | CN | 3-Methyl butyl | 2 | 2 | 2 | 2 |
| 1ab⁵⁶ | H | H | SO₃H | H | SO₃H | H | | | | | | |
| 1ab⁵⁷ | H | SO₃H | H | H | SO₃H | H | | | | | | |
| 1ab⁵⁸ | H | SO₃H | H | H | H | SO₃H | CN | Pentan-2-yl | 2 | 2 | 2 | 2 |
| 1ab⁵⁹ | H | H | SO₃H | H | SO₃H | H | | | | | | |
| 1ab⁶⁰ | H | SO₃H | H | H | SO₃H | H | | | | | | |
| 1ab⁶¹ | H | SO₃H | H | H | H | SO₃H | CN | 2-Ethylhexyl | 2 | 2 | 2 | 2 |
| 1ab⁶² | H | H | SO₃H | H | SO₃H | H | | | | | | |
| 1ab⁶³ | H | SO₃H | H | H | SO₃H | H | | | | | | |
| 1ab⁶⁴ | H | SO₃H | H | H | H | SO₃H | CN | 2,2-Dimethyl propyl | 2 | 2 | 2 | 2 |
| 1ab⁶⁵ | H | H | SO₃H | H | SO₃H | H | | | | | | |
| 1ab⁶⁶ | H | SO₃H | H | H | SO₃H | H | | | | | | |
| 1ab⁶⁷ | H | SO₃H | H | H | H | SO₃H | CN | Phenyl | 2 | 2 | 2 | 2 |
| 1ab⁶⁸ | H | H | SO₃H | H | SO₃H | H | | | | | | |
| 1ab⁶⁹ | H | SO₃H | H | H | SO₃H | H | | | | | | |
| 1ab⁷⁰ | H | SO₃H | H | H | H | SO₃H | CN | Benzyl | 2 | 2 | 2 | 2 |
| 1ab⁷¹ | H | H | SO₃H | H | SO₃H | H | | | | | | |
| 1ab⁷² | H | SO₃H | H | H | SO₃H | H | | | | | | |
| 1ab⁷³ | H | SO₃H | H | H | H | SO₃H | CONH₂ | H | 2 | 2 | 2 | 2 |
| 1ab⁷⁴ | H | H | SO₃H | H | SO₃H | H | | | | | | |
| 1ab⁷⁵ | H | SO₃H | H | H | SO₃H | H | | | | | | |
| 1ab⁷⁶ | H | SO₃H | H | H | H | SO₃H | CONH₂ | Methyl | 2 | 2 | 2 | 2 |
| 1ab⁷⁷ | H | H | SO₃H | H | SO₃H | H | | | | | | |
| 1ab⁷⁸ | H | SO₃H | H | H | SO₃H | H | | | | | | |
| 1ab⁷⁹ | H | SO₃H | H | H | H | SO₃H | CONH₂ | Ethyl | 2 | 2 | 2 | 2 |
| 1ab⁸⁰ | H | H | SO₃H | H | SO₃H | H | | | | | | |
| 1ab⁸¹ | H | SO₃H | H | H | SO₃H | H | | | | | | |
| 1ab⁸² | H | SO₃H | H | H | H | SO₃H | CONH₂ | Propyl | 2 | 2 | 2 | 2 |
| 1ab⁸³ | H | H | SO₃H | H | SO₃H | H | | | | | | |
| 1ab⁸⁴ | H | SO₃H | H | H | SO₃H | H | | | | | | |
| 1ab⁸⁵ | H | SO₃H | H | H | H | SO₃H | CONH₂ | Butyl | 2 | 2 | 2 | 2 |
| 1ab⁸⁶ | H | H | SO₃H | H | SO₃H | H | | | | | | |
| 1ab⁸⁷ | H | SO₃H | H | H | SO₃H | H | | | | | | |
| 1ab⁸⁸ | H | SO₃H | H | H | H | SO₃H | CONH₂ | Pentyl | 2 | 2 | 2 | 2 |
| 1ab⁸⁹ | H | H | SO₃H | H | SO₃H | H | | | | | | |
| 1ab⁹⁰ | H | SO₃H | H | H | SO₃H | H | | | | | | |
| 1ab⁹¹ | H | SO₃H | H | H | H | SO₃H | CONH₂ | Hexyl | 2 | 2 | 2 | 2 |
| 1ab⁹² | H | H | SO₃H | H | SO₃H | H | | | | | | |
| 1ab⁹³ | H | SO₃H | H | H | SO₃H | H | | | | | | |
| 1ab⁹⁴ | H | SO₃H | H | H | H | SO₃H | CONH₂ | Cyclobutyl | 2 | 2 | 2 | 2 |
| 1ab⁹⁵ | H | H | SO₃H | H | SO₃H | H | | | | | | |
| 1ab⁹⁶ | H | SO₃H | H | H | SO₃H | H | | | | | | |
| 1ab⁹⁷ | H | SO₃H | H | H | H | SO₃H | CONH₂ | Cyclopentyl | 2 | 2 | 2 | 2 |
| 1ab⁹⁸ | H | H | SO₃H | H | SO₃H | H | | | | | | |
| 1ab⁹⁹ | H | SO₃H | H | H | SO₃H | H | | | | | | |
| 1ab¹⁰⁰ | H | SO₃H | H | H | H | SO₃H | CONH₂ | Cyclohexyl | 2 | 2 | 2 | 2 |
| 1ab¹⁰¹ | H | H | SO₃H | H | SO₃H | H | | | | | | |
| 1ab¹⁰² | H | SO₃H | H | H | SO₃H | H | | | | | | |
| 1ab¹⁰³ | H | SO₃H | H | H | H | SO₃H | CONH₂ | 2-Methyl cyclohexyl | 2 | 2 | 2 | 2 |
| 1ab¹⁰⁴ | H | H | SO₃H | H | SO₃H | H | | | | | | |
| 1ab¹⁰⁵ | H | SO₃H | H | H | SO₃H | H | | | | | | |
| 1ab¹⁰⁶ | H | SO₃H | H | H | H | SO₃H | CONH₂ | 3-Methyl cyclohexyl | 2 | 2 | 2 | 2 |
| 1ab¹⁰⁷ | H | H | SO₃H | H | SO₃H | H | | | | | | |
| 1ab¹⁰⁸ | H | SO₃H | H | H | SO₃H | H | | | | | | |
| 1ab¹⁰⁹ | H | SO₃H | H | H | H | SO₃H | CONH₂ | Isopropyl | 2 | 2 | 2 | 2 |
| 1ab¹¹⁰ | H | H | SO₃H | H | SO₃H | H | | | | | | |
| 1ab¹¹¹ | H | SO₃H | H | H | SO₃H | H | | | | | | |
| 1ab¹¹² | H | SO₃H | H | H | H | SO₃H | CONH₂ | Sec-butyl | 2 | 2 | 2 | 2 |
| 1ab¹¹³ | H | H | SO₃H | H | SO₃H | H | | | | | | |
| 1ab¹¹⁴ | H | SO₃H | H | H | SO₃H | H | | | | | | |
| 1ab¹¹⁵ | H | SO₃H | H | H | H | SO₃H | CONH₂ | 2-Methyl butyl | 2 | 2 | 2 | 2 |
| 1ab¹¹⁶ | H | H | SO₃H | H | SO₃H | H | | | | | | |
| 1ab¹¹⁷ | H | SO₃H | H | H | SO₃H | H | | | | | | |
| 1ab¹¹⁸ | H | SO₃H | H | H | H | SO₃H | CONH₂ | 1-Ethyl propyl | 2 | 2 | 2 | 2 |
| 1ab¹¹⁹ | H | H | SO₃H | H | SO₃H | H | | | | | | |
| 1ab¹²⁰ | H | SO₃H | H | H | SO₃H | H | | | | | | |
| 1ab¹²¹ | H | SO₃H | H | H | H | SO₃H | CONH₂ | 1,2-Dimethyl propyl | 2 | 2 | 2 | 2 |
| 1ab¹²² | H | H | SO₃H | H | SO₃H | H | | | | | | |
| 1ab¹²³ | H | SO₃H | H | H | SO₃H | H | | | | | | |
| 1ab¹²⁴ | H | SO₃H | H | H | H | SO₃H | CONH₂ | Tert-butyl | 2 | 2 | 2 | 2 |
| 1ab¹²⁵ | H | H | SO₃H | H | SO₃H | H | | | | | | |
| 1ab¹²⁶ | H | SO₃H | H | H | SO₃H | H | | | | | | |
| 1ab¹²⁷ | H | SO₃H | H | H | H | SO₃H | CONH₂ | 3-Methyl butyl | 2 | 2 | 2 | 2 |
| 1ab¹²⁸ | H | H | SO₃H | H | SO₃H | H | | | | | | |
| 1ab¹²⁹ | H | SO₃H | H | H | SO₃H | H | | | | | | |
| 1ab¹³⁰ | H | SO₃H | H | H | H | SO₃H | CONH₂ | Pentan-2-yl | 2 | 2 | 2 | 2 |
| 1ab¹³¹ | H | H | SO₃H | H | SO₃H | H | | | | | | |
| 1ab¹³² | H | SO₃H | H | H | SO₃H | H | | | | | | |
| 1ab¹³³ | H | SO₃H | H | H | H | SO₃H | CONH₂ | 2-Ethylhexyl | 2 | 2 | 2 | 2 |
| 1ab¹³⁴ | H | H | SO₃H | H | SO₃H | H | | | | | | |
| 1ab¹³⁵ | H | SO₃H | H | H | SO₃H | H | | | | | | |
| 1ab¹³⁶ | H | SO₃H | H | H | H | SO₃H | CONH₂ | 2,2-Dimethyl propyl | 2 | 2 | 2 | 2 |
| 1ab¹³⁷ | H | H | SO₃H | H | SO₃H | H | | | | | | |
| 1ab¹³⁸ | H | SO₃H | H | H | SO₃H | H | | | | | | |
| 1ab¹³⁹ | H | SO₃H | H | H | H | SO₃H | CONH₂ | Phenyl | 2 | 2 | 2 | 2 |
| 1ab¹⁴⁰ | H | H | SO₃H | H | SO₃H | H | | | | | | |
| 1ab¹⁴¹ | H | SO₃H | H | H | SO₃H | H | | | | | | |
| 1ab¹⁴² | H | SO₃H | H | H | H | SO₃H | CONH₂ | Benzyl | 2 | 2 | 2 | 2 |
| 1ab¹⁴³ | H | H | SO₃H | H | SO₃H | H | | | | | | |
| 1ab¹⁴⁴ | H | SO₃H | H | H | SO₃H | H | | | | | | |
| 1ab¹⁴⁵ | H | SO₃H | H | H | H | SO₃H | CN | H | 3 | 4 | 4 | 3 |
| 1ab¹⁴⁶ | H | H | SO₃H | H | SO₃H | H | | | | | | |
| 1ab¹⁴⁷ | H | SO₃H | H | H | SO₃H | H | | | | | | |
| 1ab¹⁴⁸ | H | SO₃H | H | H | H | SO₃H | CN | Methyl | 3 | 4 | 4 | 3 |
| 1ab¹⁴⁹ | H | H | SO₃H | H | SO₃H | H | | | | | | |
| 1ab¹⁵⁰ | H | SO₃H | H | H | SO₃H | H | | | | | | |
| 1ab¹⁵¹ | H | SO₃H | H | H | H | SO₃H | CN | Ethyl | 3 | 4 | 4 | 3 |
| 1ab¹⁵² | H | H | SO₃H | H | SO₃H | H | | | | | | |
| 1ab¹⁵³ | H | SO₃H | H | H | SO₃H | H | | | | | | |
| 1ab¹⁵⁴ | H | SO₃H | H | H | H | SO₃H | CN | Propyl | 3 | 4 | 4 | 3 |
| 1ab¹⁵⁵ | H | H | SO₃H | H | SO₃H | H | | | | | | |
| 1ab¹⁵⁶ | H | SO₃H | H | H | SO₃H | H | | | | | | |
| 1ab¹⁵⁷ | H | SO₃H | H | H | H | SO₃H | CN | Butyl | 3 | 4 | 4 | 3 |
| 1ab¹⁵⁸ | H | H | SO₃H | H | SO₃H | H | | | | | | |
| 1ab¹⁵⁹ | H | SO₃H | H | H | SO₃H | H | | | | | | |
| 1ab¹⁶⁰ | H | SO₃H | H | H | H | SO₃H | CN | Pentyl | 3 | 4 | 4 | 3 |
| 1ab¹⁶¹ | H | H | SO₃H | H | SO₃H | H | | | | | | |
| 1ab¹⁶² | H | SO₃H | H | H | SO₃H | H | | | | | | |
| 1ab¹⁶³ | H | SO₃H | H | H | H | SO₃H | CN | Hexyl | 3 | 4 | 4 | 3 |
| 1ab¹⁶⁴ | H | H | SO₃H | H | SO₃H | H | | | | | | |
| 1ab¹⁶⁵ | H | SO₃H | H | H | SO₃H | H | | | | | | |
| 1ab¹⁶⁶ | H | SO₃H | H | H | H | SO₃H | CN | Cyclobutyl | 3 | 4 | 4 | 3 |
| 1ab¹⁶⁷ | H | H | SO₃H | H | SO₃H | H | | | | | | |
| 1ab¹⁶⁸ | H | SO₃H | H | H | SO₃H | H | | | | | | |
| 1ab¹⁶⁹ | H | SO₃H | H | H | H | SO₃H | CN | Cyclopentyl | 3 | 4 | 4 | 3 |
| 1ab¹⁷⁰ | H | H | SO₃H | H | SO₃H | H | | | | | | |
| 1ab¹⁷¹ | H | SO₃H | H | H | SO₃H | H | | | | | | |
| 1ab¹⁷² | H | SO₃H | H | H | H | SO₃H | CN | Cyclohexyl | 3 | 4 | 4 | 3 |
| 1ab¹⁷³ | H | H | SO₃H | H | SO₃H | H | | | | | | |
| 1ab¹⁷⁴ | H | SO₃H | H | H | SO₃H | H | | | | | | |
| 1ab¹⁷⁵ | H | SO₃H | H | H | H | SO₃H | CN | 2-Methyl cyclohexyl | 3 | 4 | 4 | 3 |
| 1ab¹⁷⁶ | H | H | SO₃H | H | SO₃H | H | | | | | | |
| 1ab¹⁷⁷ | H | SO₃H | H | H | SO₃H | H | | | | | | |
| 1ab¹⁷⁸ | H | SO₃H | H | H | H | SO₃H | CN | 3-Methyl cyclohexyl | 3 | 4 | 4 | 3 |
| 1ab¹⁷⁹ | H | H | SO₃H | H | SO₃H | H | | | | | | |
| 1ab¹⁸⁰ | H | SO₃H | H | H | SO₃H | H | | | | | | |
| 1ab¹⁸¹ | H | SO₃H | H | H | H | SO₃H | CN | Isopropyl | 3 | 4 | 4 | 3 |
| 1ab¹⁸² | H | H | SO₃H | H | SO₃H | H | | | | | | |
| 1ab¹⁸³ | H | SO₃H | H | H | SO₃H | H | | | | | | |
| 1ab¹⁸⁴ | H | SO₃H | H | H | H | SO₃H | CN | Sec-butyl | 3 | 4 | 4 | 3 |
| 1ab¹⁸⁵ | H | H | SO₃H | H | SO₃H | H | | | | | | |
| 1ab¹⁸⁶ | H | SO₃H | H | H | SO₃H | H | | | | | | |
| 1ab¹⁸⁷ | H | SO₃H | H | H | H | SO₃H | CN | 2-Methyl butyl | 3 | 4 | 4 | 3 |
| 1ab¹⁸⁸ | H | H | SO₃H | H | SO₃H | H | | | | | | |
| 1ab¹⁸⁹ | H | SO₃H | H | H | SO₃H | H | | | | | | |
| 1ab¹⁹⁰ | H | SO₃H | H | H | H | SO₃H | CN | 1-Ethyl propyl | 3 | 4 | 4 | 3 |
| 1ab¹⁹¹ | H | H | SO₃H | H | SO₃H | H | | | | | | |
| 1ab¹⁹² | H | SO₃H | H | H | SO₃H | H | | | | | | |
| 1ab¹⁹³ | H | SO₃H | H | H | H | SO₃H | CN | 1,2-Dimethyl propyl | 3 | 4 | 4 | 3 |
| 1ab¹⁹⁴ | H | H | SO₃H | H | SO₃H | H | | | | | | |
| 1ab¹⁹⁵ | H | SO₃H | H | H | SO₃H | H | | | | | | |
| 1ab¹⁹⁶ | H | SO₃H | H | H | H | SO₃H | CN | Tert-butyl | 3 | 4 | 4 | 3 |
| 1ab¹⁹⁷ | H | H | SO₃H | H | SO₃H | H | | | | | | |
| 1ab¹⁹⁸ | H | SO₃H | H | H | SO₃H | H | | | | | | |
| 1ab¹⁹⁹ | H | SO₃H | H | H | H | SO₃H | CN | 3-Methyl butyl | 3 | 4 | 4 | 3 |
| 1ab²⁰⁰ | H | H | SO₃H | H | SO₃H | H | | | | | | |
| 1ab²⁰¹ | H | SO₃H | H | H | SO₃H | H | | | | | | |
| 1ab²⁰² | H | SO₃H | H | H | H | SO₃H | CN | Pentan-2-yl | 3 | 4 | 4 | 3 |
| 1ab²⁰³ | H | H | SO₃H | H | SO₃H | H | | | | | | |
| 1ab²⁰⁴ | H | SO₃H | H | H | SO₃H | H | | | | | | |
| 1ab²⁰⁵ | H | SO₃H | H | H | H | SO₃H | CN | 2-Ethylhexyl | 3 | 4 | 4 | 3 |
| 1ab²⁰⁶ | H | H | SO₃H | H | SO₃H | H | | | | | | |
| 1ab²⁰⁷ | H | SO₃H | H | H | SO₃H | H | | | | | | |
| 1ab²⁰⁸ | H | SO₃H | H | H | H | SO₃H | CN | 2,2-Dimethyl propyl | 3 | 4 | 4 | 3 |
| 1ab²⁰⁹ | H | H | SO₃H | H | SO₃H | H | | | | | | |
| 1ab²¹⁰ | H | SO₃H | H | H | SO₃H | H | | | | | | |
| 1ab²¹¹ | H | SO₃H | H | H | H | SO₃H | CN | Phenyl | 3 | 4 | 4 | 3 |
| 1ab²¹² | H | H | SO₃H | H | SO₃H | H | | | | | | |
| 1ab²¹³ | H | SO₃H | H | H | SO₃H | H | | | | | | |
| 1ab²¹⁴ | H | SO₃H | H | H | H | SO₃H | CN | Benzyl | 3 | 4 | 4 | 3 |
| 1ab²¹⁵ | H | H | SO₃H | H | SO₃H | H | | | | | | |
| 1ab²¹⁶ | H | SO₃H | H | H | SO₃H | H | | | | | | |
| 1ab²¹⁷ | H | SO₃H | H | H | H | SO₃H | CONH₂ | H | 3 | 4 | 4 | 3 |
| 1ab²¹⁸ | H | H | SO₃H | H | SO₃H | H | | | | | | |
| 1ab²¹⁹ | H | SO₃H | H | H | SO₃H | H | | | | | | |
| 1ab²²⁰ | H | SO₃H | H | H | H | SO₃H | CONH₂ | Methyl | 3 | 4 | 4 | 3 |
| 1ab²²¹ | H | H | SO₃H | H | SO₃H | H | | | | | | |
| 1ab²²² | H | SO₃H | H | H | SO₃H | H | | | | | | |
| 1ab²²³ | H | SO₃H | H | H | H | SO₃H | CONH₂ | Ethyl | 3 | 4 | 4 | 3 |
| 1ab²²⁴ | H | H | SO₃H | H | SO₃H | H | | | | | | |
| 1ab²²⁵ | H | SO₃H | H | H | SO₃H | H | | | | | | |
| 1ab²²⁶ | H | SO₃H | H | H | H | SO₃H | CONH₂ | Propyl | 3 | 4 | 4 | 3 |
| 1ab²²⁷ | H | H | SO₃H | H | SO₃H | H | | | | | | |
| 1ab²²⁸ | H | SO₃H | H | H | SO₃H | H | | | | | | |
| 1ab²²⁹ | H | SO₃H | H | H | H | SO₃H | CONH₂ | Butyl | 3 | 4 | 4 | 3 |
| 1ab²³⁰ | H | H | SO₃H | H | SO₃H | H | | | | | | |
| 1ab²³¹ | H | SO₃H | H | H | SO₃H | H | | | | | | |
| 1ab²³² | H | SO₃H | H | H | H | SO₃H | CONH₂ | Pentyl | 3 | 4 | 4 | 3 |
| 1ab²³³ | H | H | SO₃H | H | SO₃H | H | | | | | | |
| 1ab²³⁴ | H | SO₃H | H | H | SO₃H | H | | | | | | |
| 1ab²³⁵ | H | SO₃H | H | H | H | SO₃H | CONH₂ | Hexyl | 3 | 4 | 4 | 3 |
| 1ab²³⁶ | H | H | SO₃H | H | SO₃H | H | | | | | | |
| 1ab²³⁷ | H | SO₃H | H | H | SO₃H | H | | | | | | |
| 1ab²³⁸ | H | SO₃H | H | H | H | SO₃H | CONH₂ | Cyclobutyl | 3 | 4 | 4 | 3 |
| 1ab²³⁹ | H | H | SO₃H | H | SO₃H | H | | | | | | |
| 1ab²⁴⁰ | H | SO₃H | H | H | SO₃H | H | | | | | | |
| 1ab²⁴¹ | H | SO₃H | H | H | H | SO₃H | CONH₂ | Cyclopentyl | 3 | 4 | 4 | 3 |
| 1ab²⁴² | H | H | SO₃H | H | SO₃H | H | | | | | | |
| 1ab²⁴³ | H | SO₃H | H | H | SO₃H | H | | | | | | |
| 1ab²⁴⁴ | H | SO₃H | H | H | H | SO₃H | CONH₂ | Cyclohexyl | 3 | 4 | 4 | 3 |
| 1ab²⁴⁵ | H | H | SO₃H | H | SO₃H | H | | | | | | |
| 1ab²⁴⁶ | H | SO₃H | H | H | SO₃H | H | | | | | | |
| 1ab²⁴⁷ | H | SO₃H | H | H | H | SO₃H | CONH₂ | 2-Methyl cyclohexyl | 3 | 4 | 4 | 3 |
| 1ab²⁴⁸ | H | H | SO₃H | H | SO₃H | H | | | | | | |
| 1ab²⁴⁹ | H | SO₃H | H | H | SO₃H | H | | | | | | |
| 1ab²⁵⁰ | H | SO₃H | H | H | H | SO₃H | CONH₂ | 3-Methyl cyclohexyl | 3 | 4 | 4 | 3 |
| 1ab²⁵¹ | H | H | SO₃H | H | SO₃H | H | | | | | | |
| 1ab²⁵² | H | SO₃H | H | H | SO₃H | H | | | | | | |
| 1ab²⁵³ | H | SO₃H | H | H | H | SO₃H | CONH₂ | Isopropyl | 3 | 4 | 4 | 3 |
| 1ab²⁵⁴ | H | H | SO₃H | H | SO₃H | H | | | | | | |
| 1ab²⁵⁵ | H | SO₃H | H | H | SO₃H | H | | | | | | |
| 1ab²⁵⁶ | H | SO₃H | H | H | H | SO₃H | CONH₂ | Sec-butyl | 3 | 4 | 4 | 3 |
| 1ab²⁵⁷ | H | H | SO₃H | H | SO₃H | H | | | | | | |
| 1ab²⁵⁸ | H | SO₃H | H | H | SO₃H | H | | | | | | |
| 1ab²⁵⁹ | H | SO₃H | H | H | H | SO₃H | CONH₂ | 2-Methylbutyl | 3 | 4 | 4 | 3 |
| 1ab²⁶⁰ | H | H | SO₃H | H | SO₃H | H | | | | | | |
| 1ab²⁶¹ | H | SO₃H | H | H | SO₃H | H | | | | | | |
| 1ab²⁶² | H | SO₃H | H | H | H | SO₃H | CONH₂ | 1-Ethyl propyl | 3 | 4 | 4 | 3 |
| 1ab²⁶³ | H | H | SO₃H | H | SO₃H | H | | | | | | |
| 1ab²⁶⁴ | H | SO₃H | H | H | SO₃H | H | | | | | | |
| 1ab²⁶⁵ | H | SO₃H | H | H | H | SO₃H | CONH₂ | 1,2-Dimethyl propyl | 3 | 4 | 4 | 3 |
| 1ab²⁶⁶ | H | H | SO₃H | H | SO₃H | H | | | | | | |
| 1ab²⁶⁷ | H | SO₃H | H | H | SO₃H | H | | | | | | |
| 1ab²⁶⁸ | H | SO₃H | H | H | H | SO₃H | CONH₂ | Tert-butyl | 3 | 4 | 4 | 3 |
| 1ab²⁶⁹ | H | H | SO₃H | H | SO₃H | H | | | | | | |
| 1ab²⁷⁰ | H | SO₃H | H | H | SO₃H | H | | | | | | |
| 1ab²⁷¹ | H | SO₃H | H | H | H | SO₃H | CONH₂ | 3-Methyl butyl | 3 | 4 | 4 | 3 |
| 1ab²⁷² | H | H | SO₃H | H | SO₃H | H | | | | | | |
| 1ab²⁷³ | H | SO₃H | H | H | SO₃H | H | | | | | | |
| 1ab²⁷⁴ | H | SO₃H | H | H | H | SO₃H | CONH₂ | Pentan-2-yl | 3 | 4 | 4 | 3 |
| 1ab²⁷⁵ | H | H | SO₃H | H | SO₃H | H | | | | | | |
| 1ab²⁷⁶ | H | SO₃H | H | H | SO₃H | H | | | | | | |
| 1ab²⁷⁷ | H | SO₃H | H | H | H | SO₃H | CONH₂ | 2-Ethylhexyl | 3 | 4 | 4 | 3 |
| 1ab²⁷⁸ | H | H | SO₃H | H | SO₃H | H | | | | | | |
| 1ab²⁷⁹ | H | SO₃H | H | H | SO₃H | H | | | | | | |
| 1ab²⁸⁰ | H | SO₃H | H | H | H | SO₃H | CONH₂ | 2,2-Dimethyl propyl | 3 | 4 | 4 | 3 |
| 1ab²⁸¹ | H | H | SO₃H | H | SO₃H | H | | | | | | |
| 1ab²⁸² | H | SO₃H | H | H | SO₃H | H | | | | | | |
| 1ab²⁸³ | H | SO₃H | H | H | H | SO₃H | CONH₂ | Phenyl | 3 | 4 | 4 | 3 |
| 1ab²⁸⁴ | H | H | SO₃H | H | SO₃H | H | | | | | | |
| 1ab²⁸⁵ | H | SO₃H | H | H | SO₃H | H | | | | | | |
| 1ab²⁸⁶ | H | SO₃H | H | H | H | SO₃H | CONH₂ | Benzyl | 3 | 4 | 4 | 3 |
| 1ab²⁸⁷ | H | H | SO₃H | H | SO₃H | H | | | | | | |
| 1ab²⁸⁸ | H | SO₃H | H | H | SO₃H | H | | | | | | |
| 1ab²⁸⁹ | H | SO₃H | H | H | H | SO₃H | CN | H | 3 | 3 | 3 | 3 |
| 1ab²⁹⁰ | H | H | SO₃H | H | SO₃H | H | | | | | | |
| 1ab²⁹¹ | H | SO₃H | H | H | SO₃H | H | | | | | | |
| 1ab²⁹² | H | SO₃H | H | H | H | SO₃H | CN | Methyl | 3 | 3 | 3 | 3 |
| 1ab²⁹³ | H | H | SO₃H | H | SO₃H | H | | | | | | |
| 1ab²⁹⁴ | H | SO₃H | H | H | SO₃H | H | | | | | | |
| 1ab²⁹⁵ | H | SO₃H | H | H | H | SO₃H | CN | Ethyl | 3 | 3 | 3 | 3 |
| 1ab²⁹⁶ | H | H | SO₃H | H | SO₃H | H | | | | | | |
| 1ab²⁹⁷ | H | SO₃H | H | H | SO₃H | H | | | | | | |
| 1ab²⁹⁸ | H | SO₃H | H | H | H | SO₃H | CN | Propyl | 3 | 3 | 3 | 3 |
| 1ab²⁹⁹ | H | H | SO₃H | H | SO₃H | H | | | | | | |
| 1ab³⁰⁰ | H | SO₃H | H | H | SO₃H | H | | | | | | |
| 1ab³⁰¹ | H | SO₃H | H | H | H | SO₃H | CN | Butyl | 3 | 3 | 3 | 3 |
| 1ab³⁰² | H | H | SO₃H | H | SO₃H | H | | | | | | |
| 1ab³⁰³ | H | SO₃H | H | H | SO₃H | H | | | | | | |
| 1ab³⁰⁴ | H | SO₃H | H | H | H | SO₃H | CN | Pentyl | 3 | 3 | 3 | 3 |
| 1ab³⁰⁵ | H | H | SO₃H | H | SO₃H | H | | | | | | |
| 1ab³⁰⁶ | H | SO₃H | H | H | SO₃H | H | | | | | | |
| 1ab³⁰⁷ | H | SO₃H | H | H | H | SO₃H | CN | Hexyl | 3 | 3 | 3 | 3 |
| 1ab³⁰⁸ | H | H | SO₃H | H | SO₃H | H | | | | | | |
| 1ab³⁰⁹ | H | SO₃H | H | H | SO₃H | H | | | | | | |
| 1ab³¹⁰ | H | SO₃H | H | H | H | SO₃H | CN | Cyclobutyl | 3 | 3 | 3 | 3 |
| 1ab³¹¹ | H | H | SO₃H | H | SO₃H | H | | | | | | |
| 1ab³¹² | H | SO₃H | H | H | SO₃H | H | | | | | | |
| 1ab³¹³ | H | SO₃H | H | H | H | SO₃H | CN | Cyclopentyl | 3 | 3 | 3 | 3 |
| 1ab³¹⁴ | H | H | SO₃H | H | SO₃H | H | | | | | | |
| 1ab¹³⁵ | H | SO₃H | H | H | SO₃H | H | | | | | | |
| 1ab³¹⁶ | H | SO₃H | H | H | H | SO₃H | CN | Cyclohexyl | 3 | 3 | 3 | 3 |
| 1ab³¹⁷ | H | H | SO₃H | H | SO₃H | H | | | | | | |
| 1ab³¹⁸ | H | SO₃H | H | H | SO₃H | H | | | | | | |
| 1ab³¹⁹ | H | SO₃H | H | H | H | SO₃H | CN | 2-Methyl cyclohexyl | 3 | 3 | 3 | 3 |
| 1ab³²⁰ | H | H | SO₃H | H | SO₃H | H | | | | | | |
| 1ab³²¹ | H | SO₃H | H | H | SO₃H | H | | | | | | |
| 1ab³²² | H | SO₃H | H | H | H | SO₃H | CN | 3-Methyl cyclohexyl | 3 | 3 | 3 | 3 |
| 1ab³²³ | H | H | SO₃H | H | SO₃H | H | | | | | | |
| 1ab³²⁴ | H | SO₃H | H | H | SO₃H | H | | | | | | |
| 1ab³²⁵ | H | SO₃H | H | H | H | SO₃H | CN | Isopropyl | 3 | 3 | 3 | 3 |
| 1ab³²⁶ | H | H | SO₃H | H | SO₃H | H | | | | | | |
| 1ab³²⁷ | H | SO₃H | H | H | SO₃H | H | | | | | | |
| 1ab³²⁸ | H | SO₃H | H | H | H | SO₃H | CN | Sec-butyl | 3 | 3 | 3 | 3 |
| 1ab³²⁹ | H | H | SO₃H | H | SO₃H | H | | | | | | |
| 1ab³³⁰ | H | SO₃H | H | H | SO₃H | H | | | | | | |
| 1ab³³¹ | H | SO₃H | H | H | H | SO₃H | CN | 2-Methyl butyl | 3 | 3 | 3 | 3 |
| 1ab³³² | H | H | SO₃H | H | SO₃H | H | | | | | | |
| 1ab³³³ | H | SO₃H | H | H | SO₃H | H | | | | | | |
| 1ab³³⁴ | H | SO₃H | H | H | H | SO₃H | CN | 1-Ethyl propyl | 3 | 3 | 3 | 3 |
| 1ab³³⁵ | H | H | SO₃H | H | SO₃H | H | | | | | | |
| 1ab³³⁶ | H | SO₃H | H | H | SO₃H | H | | | | | | |
| 1ab³³⁷ | H | SO₃H | H | H | H | SO₃H | CN | 1,2-Dimethyl propyl | 3 | 3 | 3 | 3 |
| 1ab³³⁸ | H | H | SO₃H | H | SO₃H | H | | | | | | |
| 1ab³³⁹ | H | SO₃H | H | H | SO₃H | H | | | | | | |
| 1ab³⁴⁰ | H | SO₃H | H | H | H | SO₃H | CN | Tert-butyl | 3 | 3 | 3 | 3 |
| 1ab³⁴¹ | H | H | SO₃H | H | SO₃H | H | | | | | | |
| 1ab³⁴² | H | SO₃H | H | H | SO₃H | H | | | | | | |
| 1ab³⁴³ | H | SO₃H | H | H | H | SO₃H | CN | 3-Methyl butyl | 3 | 3 | 3 | 3 |
| 1ab³⁴⁴ | H | H | SO₃H | H | SO₃H | H | | | | | | |
| 1ab³⁴⁵ | H | SO₃H | H | H | SO₃H | H | | | | | | |
| 1ab³⁴⁶ | H | SO₃H | H | H | H | SO₃H | CN | Pentan-2-yl | 3 | 3 | 3 | 3 |
| 1ab³⁴⁷ | H | H | SO₃H | H | SO₃H | H | | | | | | |
| 1ab³⁴⁸ | H | SO₃H | H | H | SO₃H | H | | | | | | |
| 1ab³⁴⁹ | H | SO₃H | H | H | H | SO₃H | CN | 2-Ethylhexyl | 3 | 3 | 3 | 3 |
| 1ab³⁵⁰ | H | H | SO₃H | H | SO₃H | H | | | | | | |
| 1ab³⁵¹ | H | SO₃H | H | H | SO₃H | H | | | | | | |
| 1ab³⁵² | H | SO₃H | H | H | H | SO₃H | CN | 2,2-Dimethyl propyl | 3 | 3 | 3 | 3 |
| 1ab³⁵³ | H | H | SO₃H | H | SO₃H | H | | | | | | |
| 1ab³⁵⁴ | H | SO₃H | H | H | SO₃H | H | | | | | | |
| 1ab³⁵⁵ | H | SO₃H | H | H | H | SO₃H | CN | Phenyl | 3 | 3 | 3 | 3 |
| 1ab³⁵⁶ | H | H | SO₃H | H | SO₃H | H | | | | | | |
| 1ab³⁵⁷ | H | SO₃H | H | H | SO₃H | H | | | | | | |
| 1ab³⁵⁸ | H | SO₃H | H | H | H | SO₃H | CN | Benzyl | 3 | 3 | 3 | 3 |
| 1ab³⁵⁹ | H | H | SO₃H | H | SO₃H | H | | | | | | |
| 1ab³⁶⁰ | H | SO₃H | H | H | SO₃H | H | | | | | | |
| 1ab³⁶¹ | H | SO₃H | H | H | H | SO₃H | CONH₂ | H | 3 | 3 | 3 | 3 |
| 1ab³⁶² | H | H | SO₃H | H | SO₃H | H | | | | | | |
| 1ab³⁶³ | H | SO₃H | H | H | SO₃H | H | | | | | | |
| 1ab³⁶⁴ | H | SO₃H | H | H | H | SO₃H | CONH₂ | Methyl | 3 | 3 | 3 | 3 |
| 1ab³⁶⁵ | H | H | SO₃H | H | SO₃H | H | | | | | | |
| 1ab³⁶⁶ | H | SO₃H | H | H | SO₃H | H | | | | | | |
| 1ab³⁶⁷ | H | SO₃H | H | H | H | SO₃H | CONH₂ | Ethyl | 3 | 3 | 3 | 3 |
| 1ab³⁶⁸ | H | H | SO₃H | H | SO₃H | H | | | | | | |
| 1ab³⁶⁹ | H | SO₃H | H | H | SO₃H | H | | | | | | |
| 1ab³⁷⁰ | H | SO₃H | H | H | H | SO₃H | CONH₂ | Propyl | 3 | 3 | 3 | 3 |
| 1ab³⁷¹ | H | H | SO₃H | H | SO₃H | H | | | | | | |
| 1ab³⁷² | H | SO₃H | H | H | SO₃H | H | | | | | | |
| 1ab³⁷³ | H | SO₃H | H | H | H | SO₃H | CONH₂ | Butyl | 3 | 3 | 3 | 3 |
| 1ab³⁷⁴ | H | H | SO₃H | H | SO₃H | H | | | | | | |
| 1ab³⁷⁵ | H | SO₃H | H | H | SO₃H | H | | | | | | |
| 1ab³⁷⁶ | H | SO₃H | H | H | H | SO₃H | CONH₂ | Pentyl | 3 | 3 | 3 | 3 |
| 1ab³⁷⁷ | H | H | SO₃H | H | SO₃H | H | | | | | | |
| 1ab³⁷⁸ | H | SO₃H | H | H | SO₃H | H | | | | | | |
| 1ab³⁷⁹ | H | SO₃H | H | H | H | SO₃H | CONH₂ | Hexyl | 3 | 3 | 3 | 3 |
| 1ab³⁸⁰ | H | H | SO₃H | H | SO₃H | H | | | | | | |
| 1ab³⁸¹ | H | SO₃H | H | H | SO₃H | H | | | | | | |
| 1ab³⁸² | H | SO₃H | H | H | H | SO₃H | CONH₂ | Cyclobutyl | 3 | 3 | 3 | 3 |
| 1ab³⁸³ | H | H | SO₃H | H | SO₃H | H | | | | | | |
| 1ab³⁸⁴ | H | SO₃H | H | H | SO₃H | H | | | | | | |
| 1ab³⁸⁵ | H | SO₃H | H | H | H | SO₃H | CONH₂ | Cyclopentyl | 3 | 3 | 3 | 3 |
| 1ab³⁸⁶ | H | H | SO₃H | H | SO₃H | H | | | | | | |
| 1ab³⁸⁷ | H | SO₃H | H | H | SO₃H | H | | | | | | |
| 1ab³⁸⁸ | H | SO₃H | H | H | H | SO₃H | CONH₂ | Cyclohexyl | 3 | 3 | 3 | 3 |
| 1ab³⁸⁹ | H | H | SO₃H | H | SO₃H | H | | | | | | |
| 1ab³⁹⁰ | H | SO₃H | H | H | SO₃H | H | | | | | | |
| 1ab³⁹¹ | H | SO₃H | H | H | H | SO₃H | CONH₂ | 2-Methyl cyclohexyl | 3 | 3 | 3 | 3 |
| 1ab³⁹² | H | H | SO₃H | H | SO₃H | H | | | | | | |
| 1ab³⁹³ | H | SO₃H | H | H | SO₃H | H | | | | | | |
| 1ab³⁹⁴ | H | SO₃H | H | H | H | SO₃H | CONH₂ | 3-Methyl cyclohexyl | 3 | 3 | 3 | 3 |
| 1ab³⁹⁵ | H | H | SO₃H | H | SO₃H | H | | | | | | |
| 1ab³⁹⁶ | H | SO₃H | H | H | SO₃H | H | | | | | | |
| 1ab³⁹⁷ | H | SO₃H | H | H | H | SO₃H | CONH₂ | Isopropyl | 3 | 3 | 3 | 3 |
| 1ab³⁹⁸ | H | H | SO₃H | H | SO₃H | H | | | | | | |
| 1ab³⁹⁹ | H | SO₃H | H | H | SO₃H | H | | | | | | |
| 1ab⁴⁰⁰ | H | SO₃H | H | H | H | SO₃H | CONH₂ | Sec-butyl | 3 | 3 | 3 | 3 |
| 1ab⁴⁰¹ | H | H | SO₃H | H | SO₃H | H | | | | | | |
| 1ab⁴⁰² | H | SO₃H | H | H | SO₃H | H | | | | | | |
| 1ab⁴⁰³ | H | SO₃H | H | H | H | SO₃H | CONH₂ | 2-Methylbutyl | 3 | 3 | 3 | 3 |
| 1ab⁴⁰⁴ | H | H | SO₃H | H | SO₃H | H | | | | | | |
| 1ab⁴⁰⁵ | H | SO₃H | H | H | SO₃H | H | | | | | | |
| 1ab⁴⁰⁶ | H | SO₃H | H | H | H | SO₃H | CONH₂ | 1-Ethyl propyl | 3 | 3 | 3 | 3 |
| 1ab⁴⁰⁷ | H | H | SO₃H | H | SO₃H | H | | | | | | |
| 1ab⁴⁰⁸ | H | SO₃H | H | H | SO₃H | H | | | | | | |
| 1ab⁴⁰⁹ | H | SO₃H | H | H | H | SO₃H | CONH₂ | 1,2-Dimethyl propyl | 3 | 3 | 3 | 3 |
| 1ab⁴¹⁰ | H | H | SO₃H | H | SO₃H | H | | | | | | |
| 1ab⁴¹¹ | H | SO₃H | H | H | SO₃H | H | | | | | | |
| 1ab⁴¹² | H | SO₃H | H | H | H | SO₃H | CONH₂ | Tert-butyl | 3 | 3 | 3 | 3 |
| 1ab⁴¹³ | H | H | SO₃H | H | SO₃H | H | | | | | | |
| 1ab⁴¹⁴ | H | SO₃H | H | H | SO₃H | H | | | | | | |
| 1ab⁴¹⁵ | H | SO₃H | H | H | H | SO₃H | CONH₂ | 3-Methyl butyl | 3 | 3 | 3 | 3 |
| 1ab⁴¹⁶ | H | H | SO₃H | H | SO₃H | H | | | | | | |
| 1ab⁴¹⁷ | H | SO₃H | H | H | SO₃H | H | | | | | | |
| 1ab⁴¹⁸ | H | SO₃H | H | H | H | SO₃H | CONH₂ | Pentan-2-yl | 3 | 3 | 3 | 3 |
| 1ab⁴¹⁹ | H | H | SO₃H | H | SO₃H | H | | | | | | |
| 1ab⁴²⁰ | H | SO₃H | H | H | SO₃H | H | | | | | | |
| 1ab⁴²¹ | H | SO₃H | H | H | H | SO₃H | CONH₂ | 2-Ethylhexyl | 3 | 3 | 3 | 3 |
| 1ab⁴²² | H | H | SO₃H | H | SO₃H | H | | | | | | |
| 1ab⁴²³ | H | SO₃H | H | H | SO₃H | H | | | | | | |
| 1ab⁴²⁴ | H | SO₃H | H | H | H | SO₃H | CONH₂ | 2,2-Dimethyl propyl | 3 | 3 | 3 | 3 |
| 1ab⁴²⁵ | H | H | SO₃H | H | SO₃H | H | | | | | | |
| 1ab⁴²⁶ | H | SO₃H | H | H | SO₃H | H | | | | | | |
| 1ab⁴²⁷ | H | SO₃H | H | H | H | SO₃H | CONH₂ | Phenyl | 3 | 3 | 3 | 3 |
| 1ab⁴²⁸ | H | H | SO₃H | H | SO₃H | H | | | | | | |
| 1ab⁴²⁹ | H | SO₃H | H | H | SO₃H | H | | | | | | |
| 1ab⁴³⁰ | H | SO₃H | H | H | H | SO₃H | CONH₂ | Benzyl | 3 | 3 | 3 | 3 |
| 1ab⁴³¹ | H | H | SO₃H | H | SO₃H | H | | | | | | |
| 1ab⁴³² | H | SO₃H | H | H | SO₃H | H | | | | | | |
| 1ab⁴³³ | H | SO₃H | H | H | H | SO₃H | CN | Allyl | 2 | 2 | 2 | 2 |
| 1ab⁴³⁴ | H | H | SO₃H | H | SO₃H | H | | | | | | |
| 1ab⁴³⁵ | H | SO₃H | H | H | SO₃H | H | | | | | | |
| 1ab⁴³⁶ | H | SO₃H | H | H | H | SO₃H | CN | 2-Methoxy ethyl | 2 | 2 | 2 | 2 |
| 1ab⁴³⁷ | H | H | SO₃H | H | SO₃H | H | | | | | | |
| 1ab⁴³⁸ | H | SO₃H | H | H | SO₃H | H | | | | | | |
| 1ab⁴³⁹ | H | SO₃H | H | H | H | SO₃H | CN | 3-Methoxy propyl | 2 | 2 | 2 | 2 |
| 1ab⁴⁴⁰ | H | H | SO₃H | H | SO₃H | H | | | | | | |
| 1ab⁴⁴¹ | H | SO₃H | H | H | SO₃H | H | | | | | | |
| 1ab⁴⁴² | H | SO₃H | H | H | H | SO₃H | CN | 2-Methyl thioethyl | 2 | 2 | 2 | 2 |
| 1ab⁴⁴³ | H | H | SO₃H | H | SO₃H | H | | | | | | |
| 1ab⁴⁴⁴ | H | SO₃H | H | H | SO₃H | H | | | | | | |
| 1ab⁴⁴⁵ | H | SO₃H | H | H | H | SO₃H | CN | 2-Hydroxy ethyl | 2 | 2 | 2 | 2 |
| 1ab⁴⁴⁶ | H | H | SO₃H | H | SO₃H | H | | | | | | |
| 1ab⁴⁴⁷ | H | SO₃H | H | H | SO₃H | H | | | | | | |
| 1ab⁴⁴⁸ | H | SO₃H | H | H | H | SO₃H | CN | 2-Fluoro ethyl | 2 | 2 | 2 | 2 |
| 1ab⁴⁴⁹ | H | H | SO₃H | H | SO₃H | H | | | | | | |
| 1ab⁴⁵⁰ | H | SO₃H | H | H | SO₃H | H | | | | | | |
| 1ab⁴⁵¹ | H | SO₃H | H | H | H | SO₃H | CN | 2-Chloro ethyl | 2 | 2 | 2 | 2 |
| 1ab⁴⁵² | H | H | SO₃H | H | SO₃H | H | | | | | | |
| 1ab⁴⁵³ | H | SO₃H | H | H | SO₃H | H | | | | | | |
| 1ab⁴⁵⁴ | H | SO₃H | H | H | H | SO₃H | CN | 3-Chloro propyl | 2 | 2 | 2 | 2 |
| 1ab⁴⁵⁵ | H | H | SO₃H | H | SO₃H | H | | | | | | |
| 1ab⁴⁵⁶ | H | SO₃H | H | H | SO₃H | H | | | | | | |
| 1ab⁴⁵⁷ | H | SO₃H | H | H | H | SO₃H | CN | Tetrahydro furfuryl | 2 | 2 | 2 | 2 |
| 1ab⁴⁵⁸ | H | H | SO₃H | H | SO₃H | H | | | | | | |
| 1ab⁴⁵⁹ | H | SO₃H | H | H | SO₃H | H | | | | | | |
| 1ab⁴⁶⁰ | H | SO₃H | H | H | H | SO₃H | CN | 2-Furan-2-yl-ethyl | 2 | 2 | 2 | 2 |
| 1ab⁴⁶¹ | H | H | SO₃H | H | SO₃H | H | | | | | | |
| 1ab⁴⁶² | H | SO₃H | H | H | SO₃H | H | | | | | | |
| 1ab⁴⁶³ | H | SO₃H | H | H | H | SO₃H | CN | 6-Hydroxy-1-[2-(2-hydroxy-ethyl sulfanyl)-ethyl] | 2 | 2 | 2 | 2 |
| 1ab⁴⁶⁴ | H | H | SO₃H | H | SO₃H | H | | | | | | |
| 1ab⁴⁶⁵ | H | SO₃H | H | H | SO₃H | H | | | | | | |
| 1ab⁴⁶⁶ | H | SO₃H | H | H | H | SO₃H | CN | 2-(2-tert-Butyl sulfanyl-ethane sulfonyl)-ethyl | 2 | 2 | 2 | 2 |
| 1ab⁴⁶⁷ | H | H | SO₃H | H | SO₃H | H | | | | | | |
| 1ab⁴⁶⁸ | H | SO₃H | H | H | SO₃H | H | | | | | | |
| 1ab⁴⁶⁹ | H | SO₃H | H | H | H | SO₃H | CN | 2-Hydroxy ethoxy propyl | 2 | 2 | 2 | 2 |
| 1ab⁴⁷⁰ | H | H | SO₃H | H | SO₃H | H | | | | | | |
| 1ab⁴⁷¹ | H | SO₃H | H | H | SO₃H | H | | | | | | |
| 1ab⁴⁷² | H | SO₃H | H | H | H | SO₃H | CN | 2-Hydroxy ethoxyethyl | 2 | 2 | 2 | 2 |
| 1ab⁴⁷³ | H | H | SO₃H | H | SO₃H | H | | | | | | |
| 1ab⁴⁷⁴ | H | SO₃H | H | H | SO₃H | H | | | | | | |
| 1ab⁴⁷⁵ | H | SO₃H | H | H | H | SO₃H | CN | 2-(Ethylsulfonyl)et hanol | 2 | 2 | 2 | 2 |
| 1ab⁴⁷⁶ | H | H | SO₃H | H | SO₃H | H | | | | | | |
| 1ab⁴⁷⁷ | H | SO₃H | H | H | SO₃H | H | | | | | | |
| 1ab⁴⁷⁸ | H | SO₃H | H | H | H | SO₃H | CN | 3-(2-Phenoxy-ethoxy)-propyl | 2 | 2 | 2 | 2 |
| 1ab⁴⁷⁹ | H | H | SO₃H | H | SO₃H | H | | | | | | |
| 1ab⁴⁸⁰ | H | SO₃H | H | H | SO₃H | H | | | | | | |
| 1ab⁴⁸¹ | H | SO₃H | H | H | H | SO₃H | CN | 3-isopropoxy-propyl | 2 | 2 | 2 | 2 |
| 1ab⁴⁸² | H | H | SO₃H | H | SO₃H | H | | | | | | |
| 1ab⁴⁸³ | H | SO₃H | H | H | SO₃H | H | | | | | | |
| 1ab⁴⁸⁴ | H | SO₃H | H | H | H | SO₃H | CN | 3-Ethoxy-propyl | 2 | 2 | 2 | 2 |
| 1ab⁴⁸⁵ | H | H | SO₃H | H | SO₃H | H | | | | | | |
| 1ab⁴⁸⁶ | H | SO₃H | H | H | SO₃H | H | | | | | | |
| 1ab⁴⁸⁷ | H | SO₃H | H | H | H | SO₃H | CONH₂ | Allyl | 2 | 2 | 2 | 2 |
| 1ab⁴⁸⁸ | H | H | SO₃H | H | SO₃H | H | | | | | | |
| 1ab⁴⁸⁹ | H | SO₃H | H | H | SO₃H | H | | | | | | |
| 1ab⁴⁹⁰ | H | SO₃H | H | H | H | SO₃H | CONH₂ | 2-Methoxy ethyl | 2 | 2 | 2 | 2 |
| 1ab⁴⁹¹ | H | H | SO₃H | H | SO₃H | H | | | | | | |
| 1ab⁴⁹² | H | SO₃H | H | H | SO₃H | H | | | | | | |
| 1ab⁴⁹³ | H | SO₃H | H | H | H | SO₃H | CONH₂ | 3-Methoxy propyl | 2 | 2 | 2 | 2 |
| 1ab⁴⁹⁴ | H | H | SO₃H | H | SO₃H | H | | | | | | |
| 1ab⁴⁹⁵ | H | SO₃H | H | H | SO₃H | H | | | | | | |
| 1ab⁴⁹⁶ | H | SO₃H | H | H | H | SO₃H | CONH₂ | 2-Methyl thioethyl | 2 | 2 | 2 | 2 |
| 1ab⁴⁹⁷ | H | H | SO₃H | H | SO₃H | H | | | | | | |
| 1ab⁴⁹⁸ | H | SO₃H | H | H | SO₃H | H | | | | | | |
| 1ab⁴⁹⁹ | H | SO₃H | H | H | H | SO₃H | CONH₂ | 2-Hydroxy ethyl | 2 | 2 | 2 | 2 |
| 1ab⁵⁰⁰ | H | H | SO₃H | H | SO₃H | H | | | | | | |
| 1ab⁵⁰¹ | H | SO₃H | H | H | SO₃H | H | | | | | | |
| 1ab⁵⁰² | H | SO₃H | H | H | H | SO₃H | CONH₂ | 2-Fluoro ethyl | 2 | 2 | 2 | 2 |
| 1ab⁵⁰³ | H | H | SO₃H | H | SO₃H | H | | | | | | |
| 1ab⁵⁰⁴ | H | SO₃H | H | H | SO₃H | H | | | | | | |
| 1ab⁵⁰⁵ | H | SO₃H | H | H | H | SO₃H | CONH₂ | 2-Chloro ethyl | 2 | 2 | 2 | 2 |
| 1ab⁵⁰⁶ | H | H | SO₃H | H | SO₃H | H | | | | | | |
| 1ab⁵⁰⁷ | H | SO₃H | H | H | SO₃H | H | | | | | | |
| 1ab⁵⁰⁸ | H | SO₃H | H | H | H | SO₃H | CONH₂ | 3-Chloro propyl | 2 | 2 | 2 | 2 |
| 1ab⁵⁰⁹ | H | H | SO₃H | H | SO₃H | H | | | | | | |
| 1ab⁵¹⁰ | H | SO₃H | H | H | SO₃H | H | | | | | | |
| 1ab⁵¹¹ | H | SO₃H | H | H | H | SO₃H | CONH₂ | Tetrahydro furfuryl | 2 | 2 | 2 | 2 |
| 1ab⁵¹² | H | H | SO₃H | H | SO₃H | H | | | | | | |
| 1ab⁵¹³ | H | SO₃H | H | H | SO₃H | H | | | | | | |
| 1ab⁵¹⁴ | H | SO₃H | H | H | H | SO₃H | CONH₂ | 2-Furan-2-yl-ethyl | 2 | 2 | 2 | 2 |
| 1ab⁵¹⁵ | H | H | SO₃H | H | SO₃H | H | | | | | | |
| 1ab⁵¹⁶ | H | SO₃H | H | H | SO₃H | H | | | | | | |
| 1ab⁵¹⁷ | H | SO₃H | H | H | H | SO₃H | CONH₂ | 6-Hydroxy-1-[2-(2-hydroxy-ethyl sulfanyl)-ethyl] | 2 | 2 | 2 | 2 |
| 1ab⁵¹⁸ | H | H | SO₃H | H | SO₃H | H | | | | | | |
| 1ab⁵¹⁹ | H | SO₃H | H | H | SO₃H | H | | | | | | |
| 1ab⁵²⁰ | H | SO₃H | H | H | H | SO₃H | CONH₂ | 2-(2-tert-Butyl sulfanyl-ethane sulfonyl)-ethyl | 2 | 2 | 2 | 2 |
| 1ab⁵²¹ | H | H | SO₃H | H | SO₃H | H | | | | | | |
| 1ab⁵²² | H | SO₃H | H | H | SO₃H | H | | | | | | |
| 1ab⁵²³ | H | SO₃H | H | H | H | SO₃H | CONH₂ | 2-Hydroxy ethoxy propyl | 2 | 2 | 2 | 2 |
| 1ab⁵²⁴ | H | H | SO₃H | H | SO₃H | H | | | | | | |
| 1ab⁵²⁵ | H | SO₃H | H | H | SO₃H | H | | | | | | |
| 1ab⁵²⁶ | H | SO₃H | H | H | H | SO₃H | CONH₂ | 2-Hydroxy ethoxyethyl | 2 | 2 | 2 | 2 |
| 1ab⁵²⁷ | H | H | SO₃H | H | SO₃H | H | | | | | | |
| 1ab⁵²⁸ | H | SO₃H | H | H | SO₃H | H | | | | | | |
| 1ab⁵²⁹ | H | SO₃H | H | H | H | SO₃H | CONH₂ | 2-(Ethylsulfonyl)et hanol | 2 | 2 | 2 | 2 |
| 1ab⁵³⁰ | H | H | SO₃H | H | SO₃H | H | | | | | | |
| 1ab⁵³¹ | H | SO₃H | H | H | SO₃H | H | | | | | | |
| 1ab⁵³² | H | SO₃H | H | H | H | SO₃H | CONH₂ | 3-(2-Phenoxy-ethoxy)-propyl | 2 | 2 | 2 | 2 |
| 1ab⁵³³ | H | H | SO₃H | H | SO₃H | H | | | | | | |
| 1ab⁵³⁴ | H | SO₃H | H | H | SO₃H | H | | | | | | |
| 1ab⁵³⁵ | H | SO₃H | H | H | H | SO₃H | CONH₂ | 3-isopropoxy-propyl | 2 | 2 | 2 | 2 |
| 1ab⁵³⁶ | H | H | SO₃H | H | SO₃H | H | | | | | | |
| 1ab⁵³⁷ | H | SO₃H | H | H | SO₃H | H | | | | | | |
| 1ab⁵³⁸ | H | SO₃H | H | H | H | SO₃H | CONH₂ | 3-Ethoxy-propyl | 2 | 2 | 2 | 2 |
| 1ab⁵³⁹ | H | H | SO₃H | H | SO₃H | H | | | | | | |
| 1ab⁵⁴⁰ | H | SO₃H | H | H | SO₃H | H | | | | | | |
| 1ab⁵⁴¹ | H | SO₃H | H | H | H | SO₃H | CN | Allyl | 3 | 4 | 3 | 4 |
| 1ab⁵⁴² | H | H | SO₃H | H | SO₃H | H | | | | | | |
| 1ab⁵⁴³ | H | SO₃H | H | H | SO₃H | H | | | | | | |
| 1ab⁵⁴⁴ | H | SO₃H | H | H | H | SO₃H | CN | 2-Methoxy ethyl | 3 | 4 | 3 | 4 |
| 1ab⁵⁴⁵ | H | H | SO₃H | H | SO₃H | H | | | | | | |
| 1ab⁵⁴⁶ | H | SO₃H | H | H | SO₃H | H | | | | | | |
| 1ab⁵⁴⁷ | H | SO₃H | H | H | H | SO₃H | CN | 3-Methoxy propyl | 3 | 4 | 3 | 4 |
| 1ab⁵⁴⁸ | H | H | SO₃H | H | SO₃H | H | | | | | | |
| 1ab⁵⁴⁹ | H | SO₃H | H | H | SO₃H | H | | | | | | |
| 1ab⁵⁵⁰ | H | SO₃H | H | H | H | SO₃H | CN | 2-Methyl thioethyl | 3 | 4 | 3 | 4 |
| 1ab⁵⁵¹ | H | H | SO₃H | H | SO₃H | H | | | | | | |
| 1ab⁵⁵² | H | SO₃H | H | H | SO₃H | H | | | | | | |
| 1ab⁵⁵³ | H | SO₃H | H | H | H | SO₃H | CN | 2-Hydroxy ethyl | 3 | 4 | 3 | 4 |
| 1ab⁵⁵⁴ | H | H | SO₃H | H | SO₃H | H | | | | | | |
| 1ab⁵⁵⁵ | H | SO₃H | H | H | SO₃H | H | | | | | | |
| 1ab⁵⁵⁶ | H | SO₃H | H | H | H | SO₃H | CN | 2-Fluoro ethyl | 3 | 4 | 3 | 4 |
| 1ab⁵⁵⁷ | H | H | SO₃H | H | SO₃H | H | | | | | | |
| 1ab⁵⁵⁸ | H | SO₃H | H | H | SO₃H | H | | | | | | |
| 1ab⁵⁵⁹ | H | SO₃H | H | H | H | SO₃H | CN | 2-Chloro ethyl | 3 | 4 | 3 | 4 |
| 1ab⁵⁶⁰ | H | H | SO₃H | H | SO₃H | H | | | | | | |
| 1ab⁵⁶¹ | H | SO₃H | H | H | SO₃H | H | | | | | | |
| 1ab⁵⁶² | H | SO₃H | H | H | H | SO₃H | CN | 3-Chloro propyl | 3 | 4 | 3 | 4 |
| 1ab⁵⁶³ | H | H | SO₃H | H | SO₃H | H | | | | | | |
| 1ab⁵⁶⁴ | H | SO₃H | H | H | SO₃H | H | | | | | | |
| 1ab⁵⁶⁵ | H | SO₃H | H | H | H | SO₃H | CN | Tetrahydro furfuryl | 3 | 4 | 3 | 4 |
| 1ab⁵⁶⁶ | H | H | SO₃H | H | SO₃H | H | | | | | | |
| 1ab⁵⁶⁷ | H | SO₃H | H | H | SO₃H | H | | | | | | |
| 1ab⁵⁶⁸ | H | SO₃H | H | H | H | SO₃H | CN | 2-Furan-2-yl-ethyl | 3 | 4 | 3 | 4 |
| 1ab⁵⁶⁹ | H | H | SO₃H | H | SO₃H | H | | | | | | |
| 1ab⁵⁷⁰ | H | SO₃H | H | H | SO₃H | H | | | | | | |
| 1ab⁵⁷¹ | H | SO₃H | H | H | H | SO₃H | CN | 6-Hydroxy-1-[2-(2-hydroxy-ethyl sulfanyl)-ethyl] | 3 | 4 | 3 | 4 |
| 1ab⁵⁷² | H | H | SO₃H | H | SO₃H | H | | | | | | |
| 1ab⁵⁷³ | H | SO₃H | H | H | SO₃H | H | | | | | | |
| 1ab⁵⁷⁴ | H | SO₃H | H | H | H | SO₃H | CN | 2-(2-tert-Butyl sulfanyl-ethane sulfonyl)-ethyl | 3 | 4 | 3 | 4 |
| 1ab⁵⁷⁵ | H | H | SO₃H | H | SO₃H | H | | | | | | |
| 1ab⁵⁷⁶ | H | SO₃H | H | H | SO₃H | H | | | | | | |
| 1ab⁵⁷⁷ | H | SO₃H | H | H | H | SO₃H | CN | 2-Hydroxy ethoxy propyl | 3 | 4 | 3 | 4 |
| 1ab⁵⁷⁸ | H | H | SO₃H | H | SO₃H | H | | | | | | |
| 1ab⁵⁷⁹ | H | SO₃H | H | H | SO₃H | H | | | | | | |
| 1ab⁵⁸⁰ | H | SO₃H | H | H | H | SO₃H | CN | 2-Hydroxy ethoxyethyl | 3 | 4 | 3 | 4 |
| 1ab⁵⁸¹ | H | H | SO₃H | H | SO₃H | H | | | | | | |
| 1ab⁵⁸² | H | SO₃H | H | H | SO₃H | H | | | | | | |
| 1ab⁵⁸³ | H | SO₃H | H | H | H | SO₃H | CN | 2-(Ethylsulfonyl)et hanol | 3 | 4 | 3 | 4 |
| 1ab⁵⁸⁴ | H | H | SO₃H | H | SO₃H | H | | | | | | |
| 1ab⁵⁸⁵ | H | SO₃H | H | H | SO₃H | H | | | | | | |
| 1ab⁵⁸⁶ | H | SO₃H | H | H | H | SO₃H | CN | 3-(2-Phenoxy-ethoxy)-propyl | 3 | 4 | 3 | 4 |
| 1ab⁵⁸⁷ | H | H | SO₃H | H | SO₃H | H | | | | | | |
| 1ab⁵⁸⁸ | H | SO₃H | H | H | SO₃H | H | | | | | | |
| 1ab⁵⁸⁹ | H | SO₃H | H | H | H | SO₃H | CN | 3-isopropoxy-propyl | 3 | 4 | 3 | 4 |
| 1ab⁵⁹⁰ | H | H | SO₃H | H | SO₃H | H | | | | | | |
| 1ab⁵⁹¹ | H | SO₃H | H | H | SO₃H | H | | | | | | |
| 1ab⁵⁹² | H | SO₃H | H | H | H | SO₃H | CN | 3-Ethoxy-propyl | 3 | 4 | 3 | 4 |
| 1ab⁵⁹³ | H | H | SO₃H | H | SO₃H | H | | | | | | |
| 1ab⁵⁹⁴ | H | SO₃H | H | H | SO₃H | H | | | | | | |
| 1ab⁵⁹⁵ | H | SO₃H | H | H | H | SO₃H | CONH₂ | Allyl | 3 | 4 | 3 | 4 |
| 1ab⁵⁹⁶ | H | H | SO₃H | H | SO₃H | H | | | | | | |
| 1ab⁵⁹⁷ | H | SO₃H | H | H | SO₃H | H | | | | | | |
| 1ab⁵⁹⁸ | H | SO₃H | H | H | H | SO₃H | CONH₂ | 2-Methoxy ethyl | 3 | 4 | 3 | 4 |
| 1ab⁵⁹⁹ | H | H | SO₃H | H | SO₃H | H | | | | | | |
| 1ab⁶⁰⁰ | H | SO₃H | H | H | SO₃H | H | | | | | | |
| 1ab⁶⁰¹ | H | SO₃H | H | H | H | SO₃H | CONH₂ | 3-Methoxy propyl | 3 | 4 | 3 | 4 |
| 1ab⁶⁰² | H | H | SO₃H | H | SO₃H | H | | | | | | |
| 1ab⁶⁰³ | H | SO₃H | H | H | SO₃H | H | | | | | | |
| 1ab⁶⁰⁴ | H | SO₃H | H | H | H | SO₃H | CONH₂ | 2-Methyl thioethyl | 3 | 4 | 3 | 4 |
| 1ab⁶⁰⁵ | H | H | SO₃H | H | SO₃H | H | | | | | | |
| 1ab⁶⁰⁶ | H | SO₃H | H | H | SO₃H | H | | | | | | |
| 1ab⁶⁰⁷ | H | SO₃H | H | H | H | SO₃H | CONH₂ | 2-Hydroxy ethyl | 3 | 4 | 3 | 4 |
| 1ab⁶⁰⁸ | H | H | SO₃H | H | SO₃H | H | | | | | | |
| 1ab⁶⁰⁹ | H | SO₃H | H | H | SO₃H | H | | | | | | |
| 1ab⁶¹⁰ | H | SO₃H | H | H | H | SO₃H | CONH₂ | 2-Fluoro ethyl | 3 | 4 | 3 | 4 |
| 1ab⁶¹¹ | H | H | SO₃H | H | SO₃H | H | | | | | | |
| 1ab⁶¹² | H | SO₃H | H | H | SO₃H | H | | | | | | |
| 1ab⁶¹³ | H | SO₃H | H | H | H | SO₃H | CONH₂ | 2-Chloro ethyl | 3 | 4 | 3 | 4 |
| 1ab⁶¹⁴ | H | H | SO₃H | H | SO₃H | H | | | | | | |
| 1ab⁶¹⁵ | H | SO₃H | H | H | SO₃H | H | | | | | | |
| 1ab⁶¹⁶ | H | SO₃H | H | H | H | SO₃H | CONH₂ | 3-Chloro propyl | 3 | 4 | 3 | 4 |
| 1ab⁶¹⁷ | H | H | SO₃H | H | SO₃H | H | | | | | | |
| 1ab⁶¹⁸ | H | SO₃H | H | H | SO₃H | H | | | | | | |
| 1ab⁶¹⁹ | H | SO₃H | H | H | H | SO₃H | CONH₂ | Tetrahydro furfuryl | 3 | 4 | 3 | 4 |
| 1ab⁶²⁰ | H | H | SO₃H | H | SO₃H | H | | | | | | |
| 1ab⁶²¹ | H | SO₃H | H | H | SO₃H | H | | | | | | |
| 1ab⁶²² | H | SO₃H | H | H | H | SO₃H | CONH₂ | 2-Furan-2-yl-ethyl | 3 | 4 | 3 | 4 |
| 1ab⁶²³ | H | H | SO₃H | H | SO₃H | H | | | | | | |
| 1ab⁶²⁴ | H | SO₃H | H | H | SO₃H | H | | | | | | |
| 1ab⁶²⁵ | H | SO₃H | H | H | H | SO₃H | CONH₂ | 6-Hydroxy-1-[2-(2-hydroxy-ethyl sulfanyl)-ethyl] | 3 | 4 | 3 | 4 |
| 1ab⁶²⁶ | H | H | SO₃H | H | SO₃H | H | | | | | | |
| 1ab⁶²⁷ | H | SO₃H | H | H | SO₃H | H | | | | | | |
| 1ab⁶²⁸ | H | SO₃H | H | H | H | SO₃H | CONH₂ | 2-(2-tert-Butyl sulfanyl-ethane sulfonyl)-ethyl | 3 | 4 | 3 | 4 |
| 1ab⁶²⁹ | H | H | SO₃H | H | SO₃H | H | | | | | | |
| 1ab⁶³⁰ | H | SO₃H | H | H | SO₃H | H | | | | | | |
| 1ab⁶³¹ | H | SO₃H | H | H | H | SO₃H | CONH₂ | 2-Hydroxy ethoxy propyl | 3 | 4 | 3 | 4 |
| 1ab⁶³² | H | H | SO₃H | H | SO₃H | H | | | | | | |
| 1ab⁶³³ | H | SO₃H | H | H | SO₃H | H | | | | | | |
| 1ab⁶³⁴ | H | SO₃H | H | H | H | SO₃H | CONH₂ | 2-Hydroxy ethoxyethyl | 3 | 4 | 3 | 4 |
| 1ab⁶³⁵ | H | H | SO₃H | H | SO₃H | H | | | | | | |
| 1ab⁶³⁶ | H | SO₃H | H | H | SO₃H | H | | | | | | |
| 1ab⁶³⁷ | H | SO₃H | H | H | H | SO₃H | CONH₂ | 2-(Ethylsulfonyl)et hanol | 3 | 4 | 3 | 4 |
| 1ab⁶³⁸ | H | H | SO₃H | H | SO₃H | H | | | | | | |
| 1ab⁶³⁹ | H | SO₃H | H | H | SO₃H | H | | | | | | |
| 1ab⁶⁴⁰ | H | SO₃H | H | H | H | SO₃H | CONH₂ | 3-(2-Phenoxy-ethoxy)-propyl | 3 | 4 | 3 | 4 |
| 1ab⁶⁴¹ | H | H | SO₃H | H | SO₃H | H | | | | | | |
| 1ab⁶⁴² | H | SO₃H | H | H | SO₃H | H | | | | | | |
| 1ab⁶⁴³ | H | SO₃H | H | H | H | SO₃H | CONH₂ | 3-Isopropoxy-propyl | 3 | 4 | 3 | 4 |
| 1ab⁶⁴⁴ | H | H | SO₃H | H | SO₃H | H | | | | | | |
| 1ab⁶⁴⁵ | H | SO₃H | H | H | SO₃H | H | | | | | | |
| 1ab⁶⁴⁶ | H | SO₃H | H | H | H | SO₃H | CONH₂ | 3-Ethoxypropyl | 3 | 4 | 3 | 4 |
| 1ab⁶⁴⁷ | H | H | SO₃H | H | SO₃H | H | | | | | | |
| 1ab⁶⁴⁸ | H | SO₃H | H | H | SO₃H | H | | | | | | |
| 1ab⁶⁴⁹ | H | SO₃H | H | H | H | SO₃H | CN | Allyl | 3 | 3 | 3 | 3 |
| 1ab⁶⁵⁰ | H | H | SO₃H | H | SO₃H | H | | | | | | |
| 1ab⁶⁵¹ | H | SO₃H | H | H | SO₃H | H | | | | | | |
| 1ab⁶⁵² | H | SO₃H | H | H | H | SO₃H | CN | 2-Methoxy ethyl | 3 | 3 | 3 | 3 |
| 1ab⁶⁵³ | H | H | SO₃H | H | SO₃H | H | | | | | | |
| 1ab⁶⁵⁴ | H | SO₃H | H | H | SO₃H | H | | | | | | |
| 1ab⁶⁵⁵ | H | SO₃H | H | H | H | SO₃H | CN | 3-Methoxy propyl | 3 | 3 | 3 | 3 |
| 1ab⁶⁵⁶ | H | H | SO₃H | H | SO₃H | H | | | | | | |
| 1ab⁶⁵⁷ | H | SO₃H | H | H | SO₃H | H | | | | | | |
| 1ab⁶⁵⁸ | H | SO₃H | H | H | H | SO₃H | CN | 2-Methyl thioethyl | 3 | 3 | 3 | 3 |
| 1ab⁶⁵⁹ | H | H | SO₃H | H | SO₃H | H | | | | | | |
| 1ab⁶⁶⁰ | H | SO₃H | H | H | SO₃H | H | | | | | | |
| 1ab⁶⁶¹ | H | SO₃H | H | H | H | SO₃H | CN | 2-Hydroxy ethyl | 3 | 3 | 3 | 3 |
| 1ab⁶⁶² | H | H | SO₃H | H | SO₃H | H | | | | | | |
| 1ab⁶⁶³ | H | SO₃H | H | H | SO₃H | H | | | | | | |
| 1ab⁶⁶⁴ | H | SO₃H | H | H | H | SO₃H | CN | 2-Fluoro ethyl | 3 | 3 | 3 | 3 |
| 1ab⁶⁶⁵ | H | H | SO₃H | H | SO₃H | H | | | | | | |
| 1ab⁶⁶⁶ | H | SO₃H | H | H | SO₃H | H | | | | | | |
| 1ab⁶⁶⁷ | H | SO₃H | H | H | H | SO₃H | CN | 2-Chloro ethyl | 3 | 3 | 3 | 3 |
| 1ab⁶⁶⁸ | H | H | SO₃H | H | SO₃H | H | | | | | | |
| 1ab⁶⁶⁹ | H | SO₃H | H | H | SO₃H | H | | | | | | |
| 1ab⁶⁷⁰ | H | SO₃H | H | H | H | SO₃H | CN | 3-Chloro propyl | 3 | 3 | 3 | 3 |
| 1ab⁶⁷¹ | H | H | SO₃H | H | SO₃H | H | | | | | | |
| 1ab⁶⁷² | H | SO₃H | H | H | SO₃H | H | | | | | | |
| 1ab⁶⁷³ | H | SO₃H | H | H | H | SO₃H | CN | Tetrahydro furfuryl | 3 | 3 | 3 | 3 |
| 1ab⁶⁷⁴ | H | H | SO₃H | H | SO₃H | H | | | | | | |
| 1ab⁶⁷⁵ | H | SO₃H | H | H | SO₃H | H | | | | | | |
| 1ab⁶⁷⁶ | H | SO₃H | H | H | H | SO₃H | CN | 2-Furan-2-yl-ethyl | 3 | 3 | 3 | 3 |
| 1ab⁶⁷⁷ | H | H | SO₃H | H | SO₃H | H | | | | | | |
| 1ab⁶⁷⁸ | H | SO₃H | H | H | SO₃H | H | | | | | | |
| 1ab⁶⁷⁹ | H | SO₃H | H | H | H | SO₃H | CN | 6-Hydroxy-1-[2-(2-hydroxy-ethyl sulfanyl)-ethyl] | 3 | 3 | 3 | 3 |
| 1ab⁶⁸⁰ | H | H | SO₃H | H | SO₃H | H | | | | | | |
| 1ab⁶⁸¹ | H | SO₃H | H | H | SO₃H | H | | | | | | |
| 1ab⁶⁸² | H | SO₃H | H | H | H | SO₃H | CN | 2-(2-tert-Butyl sulfanyl-ethane sulfonyl)-ethyl | 3 | 3 | 3 | 3 |
| 1ab⁶⁸³ | H | H | SO₃H | H | SO₃H | H | | | | | | |
| 1ab⁶⁸⁴ | H | SO₃H | H | H | SO₃H | H | | | | | | |
| 1ab⁶⁸⁵ | H | SO₃H | H | H | H | SO₃H | CN | 2-Hydroxy ethoxy propyl | 3 | 3 | 3 | 3 |
| 1ab⁶⁸⁶ | H | H | SO₃H | H | SO₃H | H | | | | | | |
| 1ab⁶⁸⁷ | H | SO₃H | H | H | SO₃H | H | | | | | | |
| 1ab⁶⁸⁸ | H | SO₃H | H | H | H | SO₃H | CN | 2-Hydroxy ethoxyethyl | 3 | 3 | 3 | 3 |
| 1ab⁶⁸⁹ | H | H | SO₃H | H | SO₃H | H | | | | | | |
| 1ab⁶⁹⁰ | H | SO₃H | H | H | SO₃H | H | | | | | | |
| 1ab⁶⁹¹ | H | SO₃H | H | H | H | SO₃H | CN | 2-(Ethylsulfonyl)et hanol | 3 | 3 | 3 | 3 |
| 1ab⁶⁹² | H | H | SO₃H | H | SO₃H | H | | | | | | |
| 1ab⁶⁹³ | H | SO₃H | H | H | SO₃H | H | | | | | | |
| 1ab⁶⁹⁴ | H | SO₃H | H | H | H | SO₃H | CN | 3-(2-Phenoxy-ethoxy)-propyl | 3 | 3 | 3 | 3 |
| 1ab⁶⁹⁵ | H | H | SO₃H | H | SO₃H | H | | | | | | |
| 1ab⁶⁹⁶ | H | SO₃H | H | H | SO₃H | H | | | | | | |
| 1ab⁶⁹⁷ | H | SO₃H | H | H | H | SO₃H | CN | 3-Isopropoxy-propyl | 3 | 3 | 3 | 3 |
| 1ab⁶⁹⁸ | H | H | SO₃H | H | SO₃H | H | | | | | | |
| 1ab⁶⁹⁹ | H | SO₃H | H | H | SO₃H | H | | | | | | |
| 1ab⁷⁰⁰ | H | SO₃H | H | H | H | SO₃H | CN | 3-Ethoxy-propyl | 3 | 3 | 3 | 3 |
| 1ab⁷⁰¹ | H | H | SO₃H | H | SO₃H | H | | | | | | |
| 1ab⁷⁰² | H | SO₃H | H | H | SO₃H | H | | | | | | |
| 1ab⁷⁰³ | H | SO₃H | H | H | H | SO₃H | CONH₂ | Allyl | 3 | 3 | 3 | 3 |
| 1ab⁷⁰⁴ | H | H | SO₃H | H | SO₃H | H | | | | | | |
| 1ab⁷⁰⁵ | H | SO₃H | H | H | SO₃H | H | | | | | | |
| 1ab⁷⁰⁶ | H | SO₃H | H | H | H | SO₃H | CONH₂ | 2-Methoxy ethyl | 3 | 3 | 3 | 3 |
| 1ab⁷⁰⁷ | H | H | SO₃H | H | SO₃H | H | | | | | | |
| 1ab⁷⁰⁸ | H | SO₃H | H | H | SO₃H | H | | | | | | |
| 1ab⁷⁰⁹ | H | SO₃H | H | H | H | SO₃H | CONH₂ | 3-Methoxy propyl | 3 | 3 | 3 | 3 |
| 1ab⁷¹⁰ | H | H | SO₃H | H | SO₃H | H | | | | | | |
| 1ab⁷¹¹ | H | SO₃H | H | H | SO₃H | H | | | | | | |
| 1ab⁷¹² | H | SO₃H | H | H | H | SO₃H | CONH₂ | 2-Methyl thioethyl | 3 | 3 | 3 | 3 |
| 1ab⁷¹³ | H | H | SO₃H | H | SO₃H | H | | | | | | |
| 1ab⁷¹⁴ | H | SO₃H | H | H | SO₃H | H | | | | | | |
| 1ab⁷¹⁵ | H | SO₃H | H | H | H | SO₃H | CONH₂ | 2-Hydroxy ethyl | 3 | 3 | 3 | 3 |
| 1ab⁷¹⁶ | H | H | SO₃H | H | SO₃H | H | | | | | | |
| 1ab⁷¹⁷ | H | SO₃H | H | H | SO₃H | H | | | | | | |
| 1ab⁷¹⁸ | H | SO₃H | H | H | H | SO₃H | CONH₂ | 2-Fluoro ethyl | 3 | 3 | 3 | 3 |
| 1ab⁷¹⁹ | H | H | SO₃H | H | SO₃H | H | | | | | | |
| 1ab⁷²⁰ | H | SO₃H | H | H | SO₃H | H | | | | | | |
| 1ab⁷²¹ | H | SO₃H | H | H | H | SO₃H | CONH₂ | 2-Chloro ethyl | 3 | 3 | 3 | 3 |
| 1ab⁷²² | H | H | SO₃H | H | SO₃H | H | | | | | | |
| 1ab⁷²³ | H | SO₃H | H | H | SO₃H | H | | | | | | |
| 1ab⁷²⁴ | H | SO₃H | H | H | H | SO₃H | CONH₂ | 3-Chloro propyl | 3 | 3 | 3 | 3 |
| 1ab⁷²⁵ | H | H | SO₃H | H | SO₃H | H | | | | | | |
| 1ab⁷²⁶ | H | SO₃H | H | H | SO₃H | H | | | | | | |
| 1ab⁷²⁷ | H | SO₃H | H | H | H | SO₃H | CONH₂ | Tetrahydro furfuryl | 3 | 3 | 3 | 3 |
| 1ab⁷²⁸ | H | H | SO₃H | H | SO₃H | H | | | | | | |
| 1ab⁷²⁹ | H | SO₃H | H | H | SO₃H | H | | | | | | |
| 1ab⁷³⁰ | H | SO₃H | H | H | H | SO₃H | CONH₂ | 2-Furan-2-yl-ethyl | 3 | 3 | 3 | 3 |
| 1ab⁷³¹ | H | H | SO₃H | H | SO₃H | H | | | | | | |
| 1ab⁷³² | H | SO₃H | H | H | SO₃H | H | | | | | | |
| 1ab⁷³³ | H | SO₃H | H | H | H | SO₃H | CONH₂ | 6-Hydroxy-1-[2-(2-hydroxy-ethyl sulfanyl)-ethyl] | 3 | 3 | 3 | 3 |
| 1ab⁷³⁴ | H | H | SO₃H | H | SO₃H | H | | | | | | |
| 1ab⁷³⁵ | H | SO₃H | H | H | SO₃H | H | | | | | | |
| 1ab⁷³⁶ | H | SO₃H | H | H | H | SO₃H | CONH₂ | 2-(2-tert-Butyl sulfanyl-ethane sulfonyl)-ethyl | 3 | 3 | 3 | 3 |
| 1ab⁷³⁷ | H | H | SO₃H | H | SO₃H | H | | | | | | |
| 1ab⁷³⁸ | H | SO₃H | H | H | SO₃H | H | | | | | | |
| 1ab⁷³⁹ | H | SO₃H | H | H | H | SO₃H | CONH₂ | 2-Hydroxy ethoxy propyl | 3 | 3 | 3 | 3 |
| 1ab⁷⁴⁰ | H | H | SO₃H | H | SO₃H | H | | | | | | |
| 1ab⁷⁴¹ | H | SO₃H | H | H | SO₃H | H | | | | | | |
| 1ab⁷⁴² | H | SO₃H | H | H | H | SO₃H | CONH₂ | 2-Hydroxy ethoxyethyl | 3 | 3 | 3 | 3 |
| 1ab⁷⁴³ | H | H | SO₃H | H | SO₃H | H | | | | | | |
| 1ab⁷⁴⁴ | H | SO₃H | H | H | SO₃H | H | | | | | | |
| 1ab⁷⁴⁵ | H | SO₃H | H | H | H | SO₃H | CONH₂ | 2-(Ethylsulfonyl)et hanol | 3 | 3 | 3 | 3 |
| 1ab⁷⁴⁶ | H | H | SO₃H | H | SO₃H | H | | | | | | |
| 1ab⁷⁴⁷ | H | SO₃H | H | H | SO₃H | H | | | | | | |
| 1ab⁷⁴⁸ | H | SO₃H | H | H | H | SO₃H | CONH₂ | 3-(2-Phenoxy-ethoxy)-propyl | 3 | 3 | 3 | 3 |
| 1ab⁷⁴⁹ | H | H | SO₃H | H | SO₃H | H | | | | | | |
| 1ab⁷⁵⁰ | H | SO₃H | H | H | SO₃H | H | | | | | | |
| 1ab⁷⁵¹ | H | SO₃H | H | H | H | SO₃H | CONH₂ | 3-Isopropoxy-propyl | 3 | 3 | 3 | 3 |
| 1ab⁷⁵² | H | H | SO₃H | H | SO₃H | H | | | | | | |
| 1ab⁷⁵³ | H | SO₃H | H | H | SO₃H | H | | | | | | |
| 1ab⁷⁵⁴ | H | SO₃H | H | H | H | SO₃H | CONH₂ | 3-Ethoxypropyl | 3 | 3 | 3 | 3 |
| 1ab⁷⁵⁵ | H | H | SO₃H | H | SO₃H | H | | | | | | |
| 1ab⁷⁵⁶ | H | SO₃H | H | H | SO₃H | H | | | | | | |

The present invention also provides a process for the production of the dyes of formula (1) comprising steps:
a) diazotization of a compound of formula (2) 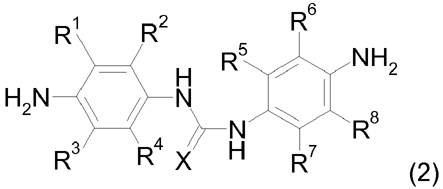 wherein R¹ to R⁵ are defined as above and
b) reacting the diazonium salt obtained in step a) with the compounds of formulae (3), (4), (5) and (6) 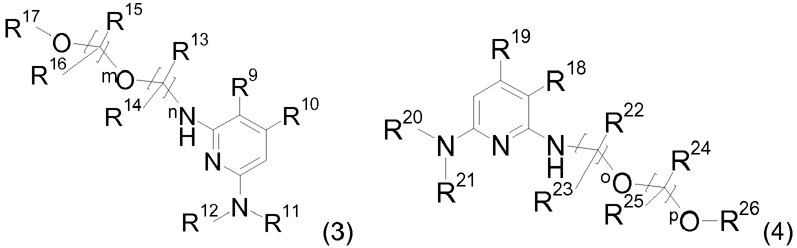 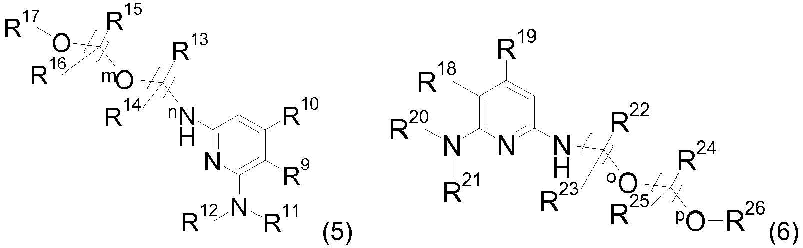 wherein R⁹ to R²⁶ are as defined above.

The diazotization of the compound of the formula (2) can be performed by means of diazotization methods that are known to a person skilled in the art, preferably by using sodium nitrite or nitrosylsulfuric acid in acidic medium using inorganic acids such as hydrochloric acid, sulfuric acid or phosphoric acid or mixtures thereof or organic acids such as acetic acid or propionic acid or mixtures thereof. Also mixtures of inorganic acid with organic acids can be used advantageously.

The coupling reaction of the diazonium salt obtained by diazotization of the compound of the formula (2) onto the compounds of formulae (3), (4), (5) and (6) can be performed by known methods.

The compounds of the formula (2) are known and commercially available or can be synthesised by means of common chemical reactions known to a person skilled in the art such as the methods disclosed in DE 140613 C.

The pyridines of formula (3), (4), (5) and (6) in which R⁹ and R¹⁸ represent cyano are commercially available or can be synthesized via methods disclosed in the literature such as DE 2230392. Through analogy, all the diamino pyridines that are used in this invention can be synthesized according to the protocol. The obtained pyridines can be further derivatized by reactions known to persons skilled in the art, such as hydrolysis to form pyridines in which R⁹ and R¹⁸, represent carbonamide or by hydrolysis and further esterification to form pyridines in which R⁹ and R¹⁸, represent alkoxycarbonyl.

The above-mentioned derivatization reactions can be carried out in alkaline or acidic media, preferably in acidic media using strong inorganic acids such as sulfuric acid or hydrochloric acid gaseous or solution, acidic resins or chlorotrimethylsilane or other suitable acid catalyst in the presence of the corresponding alkohol. The reactions are advantageously carried out under inert atmosphere at temperatures in the range from 40 to 150 °C.

Alternatively, the above mentioned derivatization reactions can be undertaken as a final step after the synthesis of the corresponding dyes with pyridone nitriles.

The dyes of the present invention are suitable for dyeing and printing of natural, manufactured, regenerated, modified or synthetic hydroxyl- amino-, and/or carboxamido-containing fiber materials and their blends by the application methods numerously described in the art for acid dyes.

Therefore, the present invention also provides a process for dyeing and printing of the above-mentioned fiber materials and their blends in which a dye or a dye mixture according to the present invention is used.

Examples of natural fibre materials as described above are vegetable fibres such as seed fibres i.e. cotton, kapok, coir from coconut husk; bast fibers i.e. cotton, flax, hemp, jute, kenaf, ramie, rattan; leaf fibres i.e. sisal, henequen, banana; stalk fibres i.e. bamboo; and fibres from animals such as wool, silk, cashmere wool, alpaca fiber, mohair, Angora fibre as well as fur and leather materials.

Examples of manufactured and regenerated fibres are cellulosic fibres such as paper and cellulosic regenerated fibres such as viscose rayon fibres, acetate and triacetate fibers and Lyocell fibers.

Examples of synthetic fiber materials as described above are e.g. nylon materials, like nylon-6 and nylon-6.6 and aramid fibres.

The above-mentioned substrates to be dyed can be present in various forms such as but not limited to yarn, woven fabric, loop-formingly knitted fabric or carpet.

The dyes of the present invention and their salts or mixtures can be used as a single dyeing colorant in dyeing or printing processes or it can be part of a di-, tri- or multi-component combination colorant in dyeing or in printing compositions. The di-, tri- or multi-component shade dyeings show similar fastness level as compared to dyeing performed with a single colorant component.

Dyes of this invention and their salts or mixtures are highly compatible with other known and/or commercially available acid dyes and they can be used together with such dyes of related chromophores and similar technical performance to obtain specific hues. Similar technical performance includes, comparable build-up, comparable fastness properties and comparable exhaustion rates during dyeings.

The dyes of the present invention can also be used in digital printing processes, in particular in digital textile printing. Aqueous inks for digital printing which comprise a dye of the present invention likewise are another aspect of the present invention.

The inks of the present invention comprise the dye of the present invention in amounts which preferably range from 0.1 to 50 % by weight, more preferably from 0.5 to 30 % by weight and most preferably from 1 to 15 % by weight, based on the total weight of the ink.
The inks, as well as the dye of the present invention, may contain further dyes used in digital printing if desired.

For the inks of the present invention to be used in the continuous flow process, a conductivity of 0.5 to 25 mS/m can be set by adding an electrolyte. Useful electrolytes include for example lithium nitrate and potassium nitrate. The inks of the present invention may include organic solvents at a total level of 1 to 50 % and preferably 5 to 30 % by weight. Suitable organic solvents are inter alia alcohols, for example methanol, ethanol, 1-propanol, isopropanol, 1-butanol, tert-butanol, pentyl alcohol, polyhydric alcohols for example: 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, hexanediol, D,L-1,2-hexanediol, 1,6-hexanediol, 1,2,6-hexanetriol, 1,2-octanediol, polyalkylene glycols, for example: polyethylene glycol, polypropylene glycol, alkylene glycols having 1 to 8 alkylene groups, for example: monoethylene glycol, diethylene glycol, triethylene glycol, tetraethylene glycol, thioglycol, thiodiglycol, butyltriglycol, hexylene glycol, propylene glycol, dipropylene glycol, tripropylene glycol, low alkyl ethers of polyhydric alcohols, for example: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether, tripropylene glycol isopropyl ether, polyalkylene glycol ethers, such as for example: polyethylene glycol monomethyl ether, polypropylene glycol glycerol ether, polyethylene glycol tridecyl ether, polyethylene glycol nonylphenyl ether, amines, such as for example: methylamine, ethylamine, triethylamine, diethylamine, dimethylamine, trimethylamine, dibutylamine, diethanolamine, triethanolamine, N-acetylethanolamine, N-formylethanolamine, ethylenediamine, urea, urea derivatives, such as: thiourea, N-methylurea, N,N'-epsilon dimethylurea, ethyleneurea, 1,1,3,3-tetramethylurea, amides, such as for example: dimethylformamide, dimethylacetamide, acetamide, ketones or keto alcohols, such as for example: acetone, diacetone alcohol, cyclic ethers, such as for example: tetrahydrofuran, trimethylolethane, trimethylolpropane, 2-butoxyethanol, benzyl alcohol, 2-butoxyethanol, gamma butyrolactone, epsilon-caprolactam, further sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyrrolidone, 1-(3-hydroxypropyl)-2-pyrrolidone, 1,3-dimethyl-2-imidazolidinone, 1,3-dimethyl-2-imidazolinone, 1,3-bismethoxymethylimidazolidine, 2-(2-methoxyethoxy)ethanol, 2-(2-ethoxyethoxy)-ethanol, 2-(2-butoxyethoxy)ethanol, 2-(2-propoxyethoxy)ethanol, pyridine, piperidine, butyrolactone, trimethylpropane, 1,2-dimethoxypropane, dioxane ethyl acetate, ethylenediaminetetraacetate ethyl pentyl ether, 1,2-dimethoxypropane and trimethylpropane.

The inks of the present invention may further include customary additives, for example viscosity moderators to set viscosities in the range from 1.5 to 40.0 mPas in a temperature range from 20 to 50 °C. Preferred inks have a viscosity of 1.5 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane, nonionic cellulose ethers.

As further additives the inks of the invention may include surface-active substances to set surface tensions of 20 to 65 mN/m, which are adapted if necessary as a function of the process used (thermal or piezo technology). Useful surface-active substances include for example all surfactants, preferably nonionic surfactants, butyldiglycol and 1,2-hexanediol.

The inks of the present invention may further include customary additives, for example substances to inhibit fungal and bacterial growth in amounts from 0.01 to 1 % by weight based on the total weight of the ink.

The inks may be prepared in a conventional manner by mixing the components in water.

The inks of the present invention are particularly useful in inkjet printing processes for printing a wide variety of materials, in particular of wool and polyamide fibers.

The production and dyeing examples below serve to illustrate the invention. Parts and percentages are by weigh unless noted otherwise. The relationship between parts by weight and parts by volume is that of the kilogram to the liter.

### Production-Example 1

12.06 g of 3-Amino-6-[3-(4-amino-2-sulfo-phenyl)-ureido]-benzene-1,2-disulfonic acid were first dissolved in water at slightly acidic pH to give a complete solution. Ice was added to the solution and when the temperature reached 10 to 15 °C, 10.6 ml of 5N sodium nitrite solution were added dropwise into the 3-Amino-6-[3-(4-amino-2-sulfophenyl)-ureido]-benzene-1,2-disulfonic acid solution. The reaction mixture was further cooled down to 0 to 8 °C using an ice-salt-water bath. When the temperature reached 0 to 8 °C, the mixture was added dropwise into 12.38 g of concentrated HCl with 12 g of ice. A yellow suspension formed and reaction mixture was completed within an hour.

13.21 g of a mixture containing 2-Amino-6-[3-(4-hydroxy-butoxy)-propylamino]-4-methyl-nicotinonitrile, 6-Amino-2-[3-(4-hydroxy-butoxy)-propylamino]-4-methyl-nicotinonitrile, 2-Amino-6-[2-(2-hydroxy-ethoxy)-ethylamino]-4-methyl-nicotinonitrile and 6-Amino-2-[2-(2-hydroxy-ethoxy)-ethylamino]-4-methyl-nicotinonitrile) was stirred in acidic water and added dropwise into the diazonium salt solution and stir. Brilliant yellow precipitate was observed upon addition. Precipitate obtained was filtered off with suction and washed with brine giving an yellow product consisting of a mixture of the dyes 1aa¹⁵⁴, 1ab¹⁵⁴, 1aa² and 1ab². The analytic data are consistent with the assigned structure for the obtained product. The obtained product dyes the targeted fibre materials in brilliant yellow shades.

Through analogy, all the dyes of formulae (1aa¹-1aa⁷⁵⁶) and (1ab¹-1ab⁷⁵⁶) can be synthesized according to the method described above.

### Dyeing example 1

1 part of the yellow product of Production-Example 1 was dissolved in 2000 parts of water and 1 part of levelling assistant (based on condensation product of a higher aliphatic amine and ethylene oxide) and 6 parts of sodium acetate was added. The pH was then adjusted to 5 using acetic acid (80 %). The dyebath was heated to 50 °C for 10 minutes and then entered with 100 parts of a woven polyamide-6 fabric. The temperature was raised to 98 °C over the course of 50 minutes and then dyeing was carried out at this temperature for 60 minutes. This was followed by cooling to 60 °C and removal of the dyed material. The polyamide-6 fabric was washed with hot and cold water, soaped and then spun and dried. The dyeings obtained give yellow shades and have very good light and wet fastness and also good levelness in the fibre.

### Dyeing example 2

1 part of the yellow product of Production-Example 1 was dissolved in 2000 parts of water and 1 part of levelling assistant (based on condensation product of a higher aliphatic amine and ethylene oxide) and 6 parts of sodium acetate were added. The pH was then adjusted to 5.5 using acetic acid (80 %). The dyebath was heated to 50 °C for 10 minutes and then entered with 100 parts of a woven polyamide-6,6 fabric. The temperature was raised to 120 °C over the course of 50 minutes and then dyeing was carried out at this temperature for 60 minutes. This was followed by cooling to 60 °C and removal of the dyed material. The polyamide-6,6 fabric was washed with hot and cold water, soaped and then spun and dried. The dyeings obtained give yellow shades and have very good light and wet fastness and also good levelness in the fibre.

### Dyeing example 3

100 parts of polyamide-6 material were padded with a 1000 parts 50 °C liquor solution that consisted of 40 parts of the yellow product of Production-Example 1, 100 parts of urea, 20 parts of a non ionic solubilizer based on butyldiglycol, 20 parts of acetic acid to adjust the pH to 4.0, 10 parts of levelling assistant (based on ethoxylated aminopropyl fatty acid amide) and 815 parts of water. The material was rolled up and placed into a steaming chamber at 85 to 98 °C for 3 to 6 hours. After fixation, the fabric was washed with hot and cold water, soaped and then spun and dried. The dyeings obtained give yellow shades and have very good light and wet fastness and also good levelness in the fibre.

### Dyeing example 4

1 part of the yellow product of Production-Example 1 was dissolved in 2000 parts of water and 5 parts of sodium sulphate, and 1 part of levelling assistant (based on condensation product of a higher aliphatic amine and ethylene oxide) and 5 parts of sodium acetate were added. The pH was then adjusted to 4.5 using acetic acid (80 %). The dyebath was heated to 50 °C for 10 minutes and then entered with 100 parts of a woven wool fabric. The temperature was raised to 100 °C over the course of 50 minutes and then dyeing was carried out at this temperature for 60 minutes. This was followed by cooling to 90 °C and removal of the dyed material. The wool fabric was washed with hot and cold water, soaped and then spun and dried. The dyeings obtained give yellow shades and have very good light and wet fastness and also good levelness in the fibre.

### Dyeing example 5

1 part of the yellow product of Production-Example 1 was dissolved in 1000 parts of soft water and 7.5 parts of sodium sulphate, and 1 part of a wetting agent (anionic) were added. 100 parts of bleached cotton knitted fabric were added to this solution. The dye bath was then heated up to 98 °C with a gradient of 2 °C/min then dyeing was carried out at this temperature for 60 minutes. This was followed by cooling down to 80 °C. At 80 °C the dyeing was continued for another 20 minutes. The dyed material was then removed and was washed with hot and cold water, soaped and then spun and dried. The dyeings obtained give yellow shades and have very good light and wet fastness and also good levelness in the fibre.

### Dyeing example 6

3 parts of the yellow product of Production-Example 1 were dissolved in 82 parts of deionized water and added into the dyebath with 15 parts of diethylene glycol at 60 °C. On cooling, a yellow printing ink was obtained. The yellow printing ink can be used for ink jet printing on paper, polyamide or wool textiles.

### Dyeing example 7

4 parts of chemically bleached (pine wood) sulphite pulp were mixed up with 100 parts of 55 °C water. 1 part of the yellow product of Production-Example 1 was dissolved in 100 parts of hot water. 80 parts of this solution were given to the mixed-up pulp and mixed for 2 minutes. After that the mixture was sized with resin size in a conventional manner and mixed for another 2 minutes. 55 parts of this solution were then diluted with 2000 parts of cold water and the paper was produced out of this solution. The yellow paper produced from the mixture has good wet fastnesses.

## Claims

1. Dyes of formula (1) 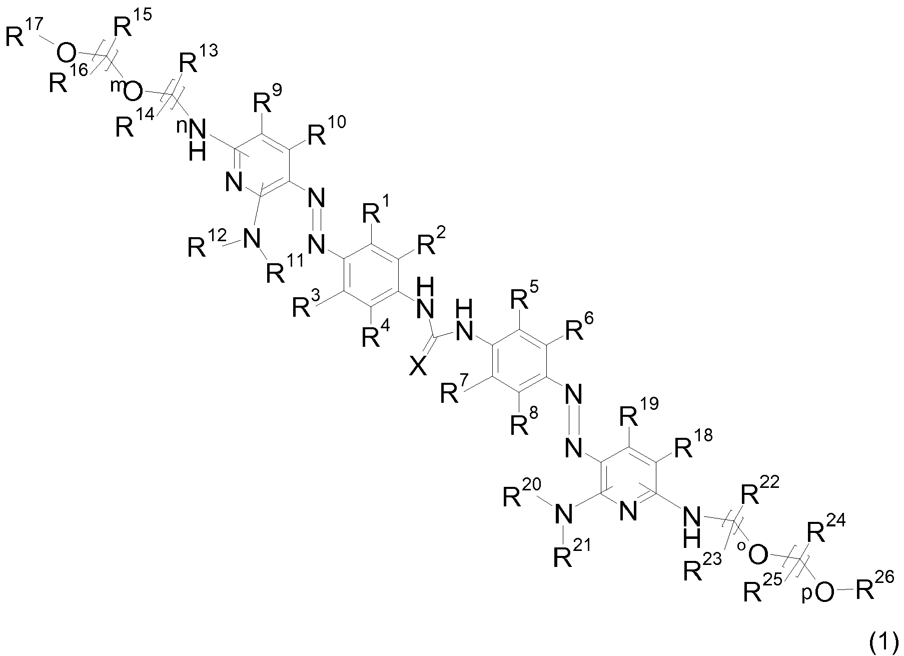 wherein
X is O, S or NH,
R¹, R², R³, R⁴, R⁵, R⁶, R⁷ and R⁸ independent of each other is hydrogen, alkyl, alkoxy, halogen, trifluoromethyl or SO₃M, whereby at least two of them are SO₃M,
R⁹ and R¹⁸ independent of each other is cyano, carbamoyl, substituted carbamoyl, alkoxycarbonyl, trifluoromethyl, carbonyltrifluoromethyl or halogen,
R¹⁰ and R¹⁹ independent of each other is hydrogen, alkyl, cycloalkyl, trifluoromethyl, alkoxy, cyano, carbamoyl, alkoxycarbonyl, COOM, amino, hydroxyl, monocycloalkyl-amino, monoalkyl-amino, di(cyclo)alkyl-amino, dialkyl-amino, monoaryl-amino, diaryl-amino, monocycloalkylmonoarylamino, monoalkyl monoaryl amino, alkylthio, arylthio
or
is alkyl substituted by one or more substituents selected from the group consisting of hydroxy, cycloalkyl, heteroaryl, heterocycloalkyl, aryl, aryloxy, alkoxy, alkylthio, arylthio, halogen, cyano, COOM, alkoxycarbonyl, acyloxy, carbamoyl, nitro, amino, acylamino, arylcarbonylamino, alkylsulfonylamino, arylsulfonylamino, ureido, alkylureido and phenylureido,
R¹¹, R¹² , R²⁰ and R²¹ independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
or
alkyl interrupted by one or more heteroatoms selected from the group consisting of oxygen and sulfur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms selected from the group consisting of oxygen and sulfur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
R¹³, R¹⁴, R¹⁵, R¹⁶, R²², R²³, R²⁴ and R²⁵ independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
or
alkyl interrupted by one or more heteroatoms selected from the group consisting of oxygen and sulfur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms selected from the group consisting of oxygen and sulfur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
R¹⁷ and R²⁶ independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
or
alkyl interrupted by one or more heteroatoms selected from the group consisting of oxygen and sulfur
or
alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M
or
alkyl interrupted by one or more heteroatoms selected from the group consisting of oxygen and sulfur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenyilureido, halogen, cyano, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl, N-monoalkyl-N-monoarylsulfamoyl and SO₃M,
M is hydrogen, an alkali metal, ammonium, one equivalent of an alkali earth metal or a monovalent organic cation,
m, n, o and p, independent of each other is an integer 1, 2, 3 or 4,
when n is 2, 3 or 4, R¹³ contained in the 2, 3 or 4 units can be identical or different from unit to unit, and same applies to R¹⁴ independently from R¹³, when m is 2, 3 or 4, R¹⁵ contained in the 2, 3 or 4 units can be identical or different from unit to unit, and same applies to R¹⁶ independently from R¹⁵, when o is 2, 3 or 4, R²² contained in the 2, 3 or 4 units can be identical or different from unit to unit, and same applies to R²³ independently from R²², and when p is 2, 3 or 4, R²⁴ contained in the 2, 3 or 4 units can be identical or different from unit to unit, and same applies to R²⁵ independently from R²⁴ and
the dyes of formula (1) have two to six sulfonic acid groups.

2. Dyes according to claim 1, having formula (1 a) 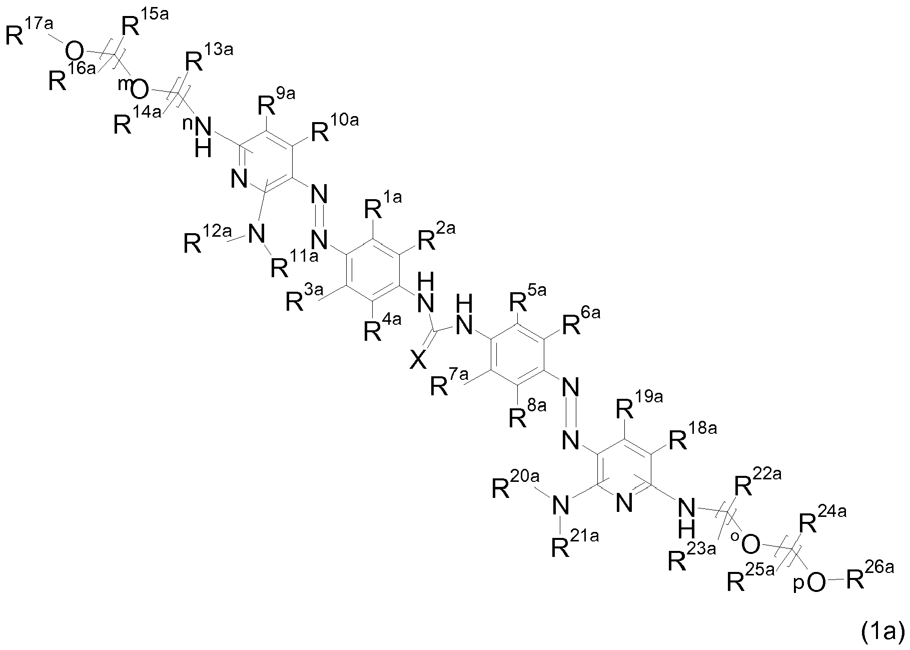 wherein
X is O, S or NH,
R^{1a}, R^{2a}, R^{3a}, R^{4a} , R^{5a} , R^{6a} , R^{7a} and R^{8a} independent of each other is hydrogen, alkyl, alkoxy, halogen, trifluoromethyl or SO₃M, whereby at least two of them are SO₃M,
R^{9a} and R^{18a} independent of each other is cyano, carbamoyl or alkoxycarbonyl,
R^{10a} and R^{19a} independent of each other is unsubstituted, linear or branched (C₁-C₄)-alkyl, unsubstiuted (C₅-C₇)-cycloalkyl or substituted (C₅-C₇)-cycloalkyl with one or more substituents,
R^{11a}, R^{12a} , R^{20a} and R^{21a} independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl or heterocycloalkylalkyl
or
alkyl interrupted by one or more heteroatoms selected from the group consisting of oxygen and sulfur
or
alkyl substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M
or
alkyl interrupted by one or more heteroatoms selected from the group consisting of oxygen and sulfur and substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M,
R^{13a} , R^{14a} , R^{15a} , R^{16a} , R^{22a}, R^{23a}, R^{24a} and R^{25a} independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl, heterocycloalkylalkyl
or
alkyl interrupted by one or more heteroatoms selected from the group consisting of oxygen and sulfur
or
alkyl substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M
or
alkyl interrupted by one or more heteroatoms selected from the group consisting of oxygen and sulfur and substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M,
R^{17a} and R^{26a}, independent of each other is hydrogen, alkyl, hydroxyalkyl, alkoxy, alkenyl, cycloalkyl, aryl, heteroaryl, heterocycloalkyl, carbamoyl, alkylureido, phenylureido, hydroxyakylsulfonylalkyl, aminoalkyl, amino-hydroxy-alkyl, alkoxyalkylaminoalkyl, thioalkoxyalkyl-aminoalkyl, aminoalkyloxyalkyl, aminoalkylthioxyalkyl, cycloalkylalkyl, aryloxyalkyl, arylthioxyalkyl, heteroarylalkyl or heterocycloalkylalkyl
or
alkyl interrupted by one or more heteroatoms selected from the group consisting of oxygen and sulfur
or
alkyl substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M
or
alkyl interrupted by one or more heteroatoms selected from the group consisting of oxygen and sulfur and substituted by one or more substituents selected from the group consisting of hydroxy, aryl, cycloalkyl, alkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-monocycloalkyl-amino, N,N-monoaryl-monocycloalkyl-amino, N-acylamino, N-alkylsulfonyl-amino, ureido, alkylureido, phenylureido, halogen, cyano, COOM, nitro, acyl, alkylsulfonyl, aryloyl, trifluoromethyl, heteroaryl, heterocycloalkyl, alkoxycarbonyl, acyloxy, aryloyloxy, carbamoyl, sulfamoyl and SO₃M,
m, n, o and p independent of each other is an integer of 1, 2, 3 or 4,
when n is 2, 3 or 4, R^{13a} contained in the 2, 3 or 4 units can be identical or different from unit to unit, and same applies to R^{14a} independently from R^{13a}, when m is 2, 3 or 4, R^{15a} contained in the 2, 3 or 4 units can be identical or different from unit to unit, and same applies to R^{16a} independently from R^{15a}, when o is 2, 3 or 4, R^{22a} contained in the 2, 3 or 4 units can be identical or different from unit to unit, and same applies to R^{23a} independently from R^{22a}, and when p is 2, 3 or 4, R^{24a} contained in the 2, 3 or 4 units can be identical or different from unit to unit, and same applies to R^{25a} independently from R^{24a} and
M is hydrogen, an alkali metal, ammonium, one equivalent of an alkali earth metal or a monovalent organic cation.

3. Dyes according to claim 1 or 2, having formula (1 aa): 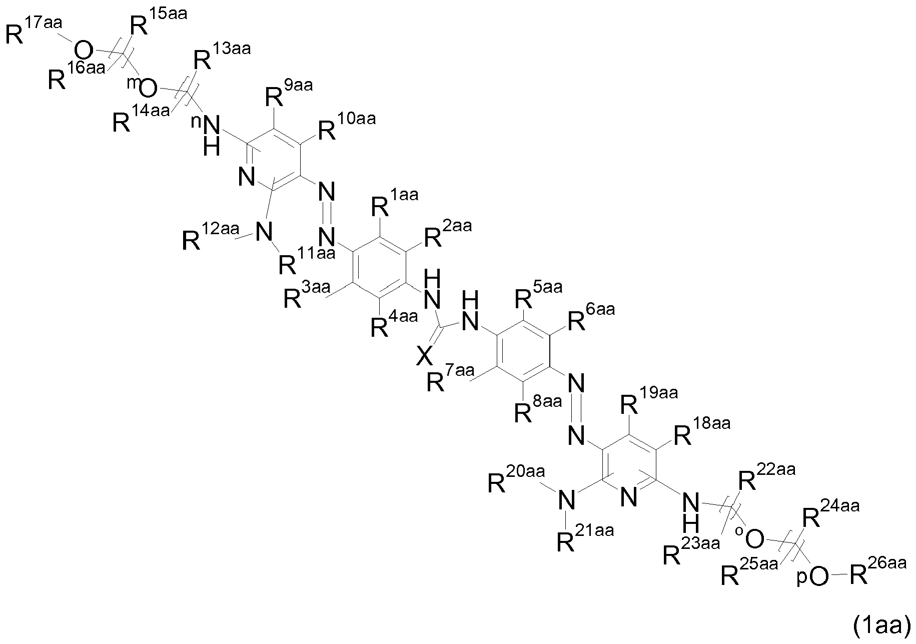 wherein
X is O
R^{1aa}, R^{2aa} , R^{3aa} , R^{4aa} , R^{5aa} , R^{6aa}, R^{7aa} and R^{8aa} independent of each other is SO₃M, hydrogen, alkyl or alkoxy, whereby at least two of them are SO₃M,
R^{9aa} and R^{18aa} independent of each other is cyano or carbamoyl,
R^{10aa} and R^{19aa} is methyl,
m, n, o and p independent of each other is an integer of 2, 3 or 4,
R^{11aa} R^{13aa}, R^{14aa}, R^{15aa}, R^{16aa}, R^{17aa}, R^{20aa} R^{22aa}, R^{23aa}, R^{24aa}, R^{25aa} and R^{26aa} is hydrogen,
R^{12aa} and R^{21aa} independent of each other is hydrogen, methyl, ethyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentan-2-yl, 2-ethylhexyl, 2,2-dimethylpropyl, phenyl, benzyl, 2-methoxyethyl, 3-methoxypropyl, 2-hydroxyethyl, 2-(methylthio)ethyl, 2-fluoroethyl, 2-chloroethyl, 3-chloropropyl, tetrahydrofurfuryl, 2-furan-2-yl-ethyl, 6-hydroxy-1-[2-(2-hydroxyethylsulfanyl)-ethyl], 2-(2-tertbutylsulfanylethanesulfonyl)-ethyl, 2-(ethylsulfonyl)ethanol, 2-hydroxyethoxypropyl, 2-hydroxyethoxyethyl, 2-(ethylsulfonyl) ethanol, 3-(2-phenoxy-ethoxy)-propyl, 3-isopropoxy-propyl, 3-ethoxy-propyl or 3-ethoxybutyl and
M is hydrogen, sodium, potassium, lithium or ammonium.

4. Dyes according to claim 1 or 2, having formula (1ab): 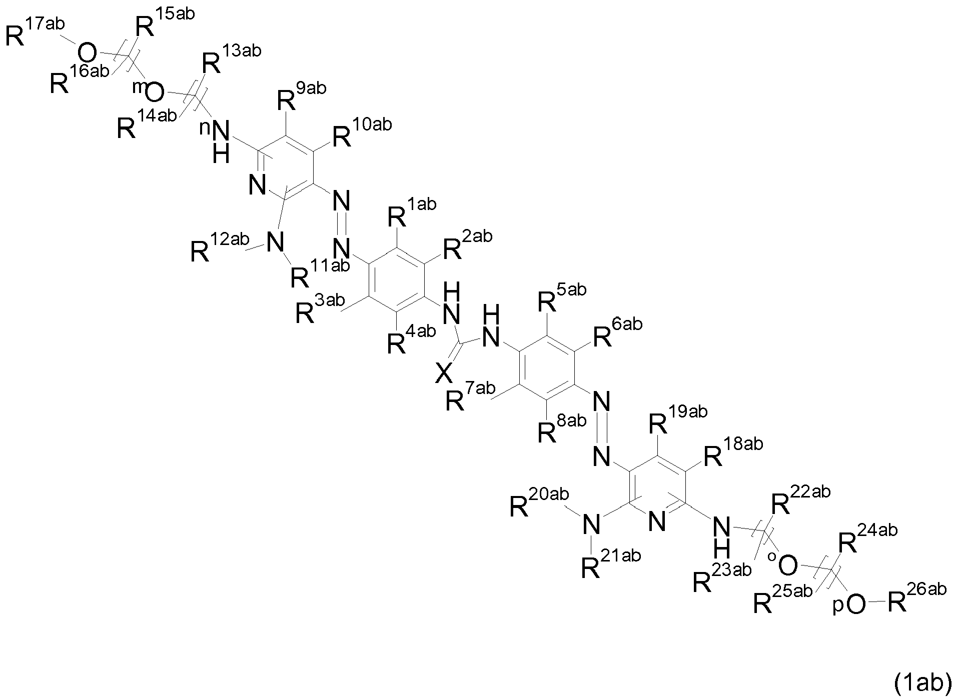 wherein
X is O
R^{1ab}, R^{2ab}, R^{3ab}, R^{4ab}, R^{5ab}, R^{6ab}, R^{7ab} and R^{8ab} independent of each other is SO₃M, hydrogen, alkyl or alkoxy, whereby at least two of them are SO₃M,
R^{9ab} and R^{18ab} independent of each other is cyano or carbamoyl,
R^{10ab} and R^{19ab} is methyl,
m, n, o and p independent of each other is an integer of 2, 3 or 4,
R^{13ab}, R^{14ab}, R^{15ab}, R^{16ab}, R^{22ab}, R^{23ab}, R^{24ab}, R^{25ab}, R^{11ab}, R^{17ab}, R^{26ab} and R^{20ab} is hydrogen,
R^{12ab} and R^{21ab} independent of each other is hydrogen, methyl, ethyl, n-propyl, n-butyl, n-pentyl, n-hexyl, cyclobutyl, cyclopentyl, cyclohexyl, 2-methylcyclohexyl, 3-methylcyclohexyl, isopropyl, sec-butyl, 2-methylbutyl, 1-ethylproyl, 1,2-dimethylpropyl, tert-butyl, 3-methylbutyl, pentan-2-yl, 2-ethylhexyl, 2,2-dimethylpropyl, phenyl, benzyl, 2-methoxyethyl, 3-methoxypropyl, 2-hydroxyethyl, 2-(methylthio)ethyl, 2-fluoroethyl, 2-chloroethyl, 3-chloropropyl, tetrahydrofurfuryl, 2-furan-2-yl-ethyl, 6-hydroxy-1-[2-(2-hydroxyethylsulfanyl)-ethyl], 2-(2-tertbutylsulfanylethanesulfonyl)-ethyl, 2-(ethylsulfonyl)ethanol, 2-hydroxyethoxypropyl, 2-hydroxyethoxyethyl, 2-(ethyl sulfonyl)ethanol, 3-(2-phenoxy-ethoxy)-propyl, 3-isopropoxy-propyl, 3-ethoxy-propyl or 3-ethoxybutyl and
M is hydrogen, sodium, potassium, lithium or ammonium.

5. Process for the production of the dyes of formula (1) comprising steps:
a) diazotization of a compound of formula (2) 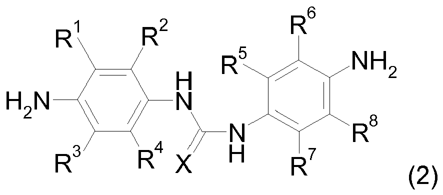 wherein R¹ to R⁸ are defined as above and
b) reacting the diazonium salt obtained in step a) with the compounds of formulae (3), (4), (5) and (6) 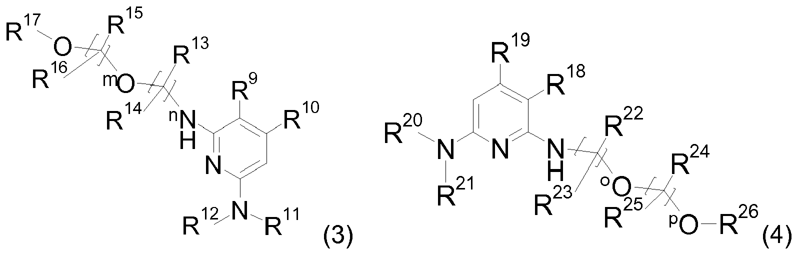 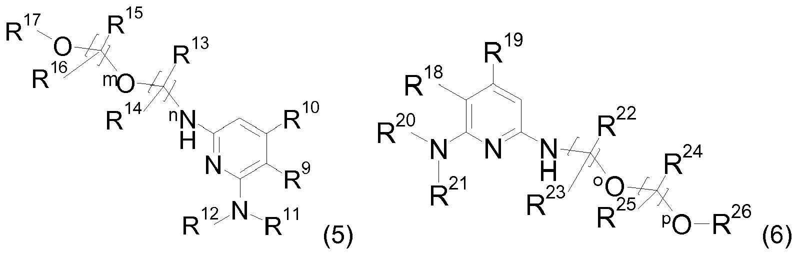 wherein R⁹ to R²⁶ are as defined in claim 1

6. Chemical composition comprising one or more dye(s) according to any one of claims 1 to 4.

7. Chemical composition consisting of two or more dyes according to any one of claims 1 to 4.

8. Aqueous solution for dying comprising one or more chemical compounds according to any one of claims 1 to 4.

9. Process for dyeing or printing carboxamido- and/or hydroxyl-containing material, comprising contacting the carboxamido- and/or hydroxyl-containing material with a dye according to any one of claims 1 to 4.

10. Ink for digital textile printing, comprising a dye according to any one of claims 1 to 4.

11. Use of a dye according to any one of claims 1 to 4, a chemical composition according to claim 6 or 7 or of an aqueous solution according to claim 8 for dying fibers, as well as blends of such fibres selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers.

12. Fiber and blends containing such fiber selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers, and Lyocell fibers comprising one or more dye(s) according to any one of claims 1 to 3 either in chemically and/or physically bound form.
